# EUROPEAN PATENT APPLICATION

(11) **EP 4 773 589 A2**
(43) Date of publication of application: **08.07.2026**
(21) Application number: 26179184.2
(22) Date of filing: 19.12.2024
(51) Int. Cl.: H04N 7/15

(54) **INTERACTIONS WITHIN HYBRID SPATIAL GROUPS IN MULTI-USER COMMUNICATION SESSIONS**

(30) Priority: 22.12.2023 US 202363614489 P; 24.09.2024 US 202463698248 P; 12.12.2024 US 202418978798
(62) Divisional of application: 24221722.2
(71) Applicant: Apple Inc., Cupertino, CA 95014 (US)
(72) Inventor: PIEMONTE, Patrick, Cupertino, CA, 95014 (US); CERRA, Joseph P., Cupertino, CA, 95014 (US); SMITH, Connor A., Cupertino, CA, 95014 (US); LEE, Kevin, Cupertino, CA, 95014 (US); PICCOLO, Jacob A., Cupertino, CA, 95014 (US)
(74) Representative: Karl, Christof

(57) **Abstract**

Some examples of the disclosure are directed to systems and methods for facilitating interactions, including movement, of content that is shared in a multi-user communication session based on whether participants in the multi-user communication session are collocated or non-collocated. In some examples, a first electronic device presents a three-dimensional environment including a first object of a first type and a visual representation of a user of the second electronic device. In some examples, the first electronic device receives a request to move the first object. In some examples, in response, in accordance with a determination that the second electronic device is collocated with the first electronic device in a first physical environment, the first electronic device moves the first object of the first type in the three-dimensional environment in accordance with the first input, without updating presentation of the visual representation of the user of the second electronic device.

## Description

### Cross-Reference to Related Applications

This application claims the benefit of U.S. Provisional Application No. 63/614,489, filed December 22, 2023, U.S. Provisional Application No. 63/698,248, filed September 24, 2024, and U.S. Patent Application No. 18/978,798, filed December 12, 2024, the contents of which are herein incorporated by reference in their entireties for all purposes.

### Field of the Disclosure

This relates generally to systems and methods of establishing multi-user communication sessions in which at least a subset of participants within the multi-user communication sessions is collocated in a physical environment.

### Background of the Disclosure

Some computer graphical environments provide two-dimensional and/or three-dimensional environments where at least some objects displayed for a user's viewing are virtual and generated by a computer. In some examples, the three-dimensional environments are presented by multiple devices communicating in a multi-user communication session. In some examples, an avatar (e.g., a representation) of each non-collocated user participating in the multi-user communication session (e.g., via the computing devices) is displayed in the three-dimensional environment of the multi-user communication session. In some examples, content can be shared in the three-dimensional environment for viewing and interaction by multiple users participating in the multi-user communication session.

### Summary of the Disclosure

Some examples of the disclosure are directed to systems and methods for facilitating interactions, including movement, of content that is shared in a multi-user communication session based on whether participants in the multi-user communication session are collocated or non-collocated. In some examples, a method is performed at a first electronic device in communication with one or more displays, one or more input devices, and a second electronic device, wherein the first electronic device is in a communication session with the second electronic device. In some examples, the first electronic device presents, via the one or more displays, a three-dimensional environment including a first object of a first type (e.g., a shared virtual object) and a visual representation of a user of the second electronic device. In some examples, while presenting the three-dimensional environment including the first object of the first type and the visual representation of the user of the second electronic device, the first electronic device receives, via the one or more input devices, a first input corresponding to a request to move the first object within the three-dimensional environment. In some examples, in response to receiving the first input, in accordance with a determination that one or more criteria are satisfied, including a criterion that is satisfied when the second electronic device is collocated with the first electronic device in a first physical environment, the first electronic device moves the first object of the first type in the three-dimensional environment relative to a viewpoint of the first electronic device in accordance with the first input, without updating presentation of the visual representation of the user of the second electronic device. In some examples, in accordance with a determination that the one or more criteria are not satisfied because the second electronic device is non-collocated with the first electronic device in the first physical environment, the first electronic device moves the first object of the first type and the visual representation of the user of the second electronic device in the three-dimensional environment relative to the viewpoint of the first electronic device in accordance with the first input.

The full descriptions of these examples are provided in the Drawings and the Detailed Description, and it is understood that this Summary does not limit the scope of the disclosure in any way.

### Brief Description of the Drawings

For improved understanding of the various examples described herein, reference should be made to the Detailed Description below along with the following drawings. Like reference numerals often refer to corresponding parts throughout the drawings.
FIG. 1 illustrates an electronic device presenting an extended reality environment according to some examples of the disclosure.
FIG. 2 illustrates a block diagram of an example architecture for a system according to some examples of the disclosure.
FIG. 3 illustrates an example of a spatial group in a multi-user communication session that includes a first electronic device and a second electronic device according to some examples of the disclosure.
FIGs. 4A-4AA illustrate example interactions within multi-user communication sessions that include collocated and non-collocated users according to some examples of the disclosure.
FIGs. 5A-5E illustrate example interactions within a multi-user communication session that includes collocated and non-collocated users according to some examples of the disclosure.
FIG. 6 illustrates a flow diagram illustrating an example process for moving an object in a three-dimensional environment within a multi-user communication session based on whether the multi-user communication session includes collocated or non-collocated users according to some examples of the disclosure.
FIGs. 7A-7G illustrate example interactions within a multi-user communication session that includes collocated users according to some examples of the disclosure.

### Detailed Description

Some examples of the disclosure are directed to systems and methods for facilitating interactions, including movement, of content that is shared in a multi-user communication session based on whether participants in the multi-user communication session are collocated or non-collocated. In some examples, a method is performed at a first electronic device in communication with one or more displays, one or more input devices, and a second electronic device, wherein the first electronic device is in a communication session with the second electronic device. In some examples, the first electronic device presents, via the one or more displays, a three-dimensional environment including a first object of a first type (e.g., a shared virtual object) and a visual representation of a user of the second electronic device. In some examples, while presenting the three-dimensional environment including the first object of the first type and the visual representation of the user of the second electronic device, the first electronic device receives, via the one or more input devices, a first input corresponding to a request to move the first object within the three-dimensional environment. In some examples, in response to receiving the first input, in accordance with a determination that one or more criteria are satisfied, including a criterion that is satisfied when the second electronic device is collocated with the first electronic device in a first physical environment, the first electronic device moves the first object of the first type in the three-dimensional environment relative to a viewpoint of the first electronic device in accordance with the first input, without updating presentation of the visual representation of the user of the second electronic device. In some examples, in accordance with a determination that the one or more criteria are not satisfied because the second electronic device is non-collocated with the first electronic device in the first physical environment, the first electronic device moves the first object of the first type and the visual representation of the user of the second electronic device in the three-dimensional environment relative to the viewpoint of the first electronic device in accordance with the first input.

As used herein, a spatial group corresponds to a group or number of participants (e.g., users) in a multi-user communication session. In some examples, a spatial group in the multi-user communication session has a spatial arrangement that dictates locations of users and content that are located in the spatial group. In some examples, users in the same spatial group within the multi-user communication session experience spatial truth according to the spatial arrangement of the spatial group. In some examples, when the user of the first electronic device is in a first spatial group and the user of the second electronic device is in a second spatial group in the multi-user communication session, the users experience spatial truth that is localized to their respective spatial groups. In some examples, while the user of the first electronic device and the user of the second electronic device are grouped into separate spatial groups within the multi-user communication session, if the first electronic device and the second electronic device return to the same operating state, the user of the first electronic device and the user of the second electronic device are regrouped into the same spatial group within the multi-user communication session.

As used herein, a hybrid spatial group corresponds to a group or number of participants (e.g., users) in a multi-user communication session in which at least a subset of the participants is non-collocated in a physical environment. For example, as described via one or more examples in this disclosure, a hybrid spatial group includes at least two participants who are collocated in a first physical environment and at least one participant who is non-collocated with the at least two participants in the first physical environment (e.g., the at least one participant is located in a second physical environment, different from the first physical environment). In some examples, a hybrid spatial group in the multi-user communication session has a spatial arrangement that dictates locations of users and content that are located in the spatial group. In some examples, users in the same hybrid spatial group within the multi-user communication session experience spatial truth according to the spatial arrangement of the spatial group, as similarly discussed above.

In some examples, initiating a multi-user communication session may include interaction with one or more user interface elements. In some examples, a user's gaze may be tracked by an electronic device as an input for targeting a selectable option/affordance within a respective user interface element that is displayed in the three-dimensional environment. For example, gaze can be used to identify one or more options/affordances targeted for selection using another selection input. In some examples, a respective option/affordance may be selected using hand-tracking input detected via an input device in communication with the electronic device. In some examples, objects displayed in the three-dimensional environment may be moved and/or reoriented in the three-dimensional environment in accordance with movement input detected via the input device.

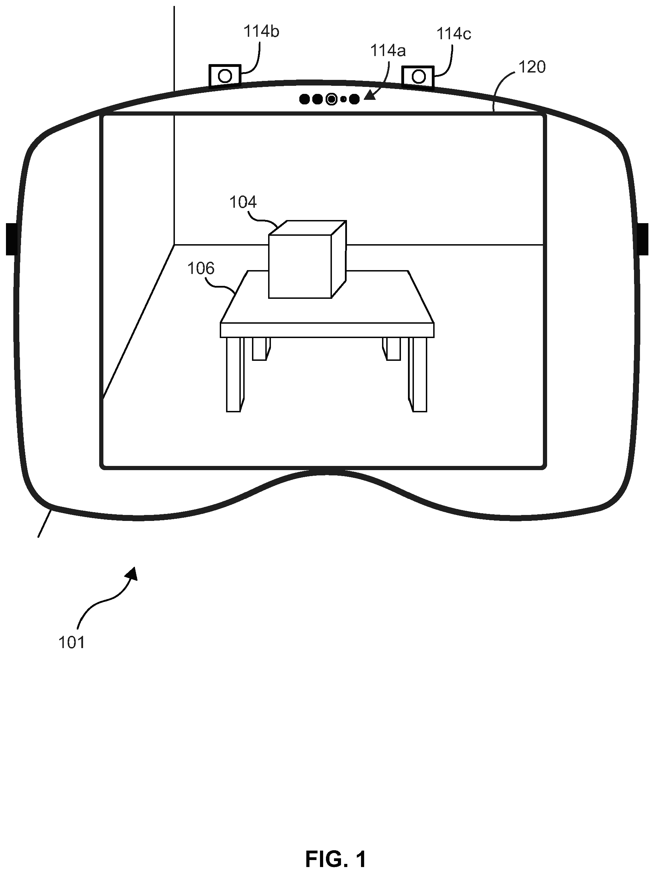

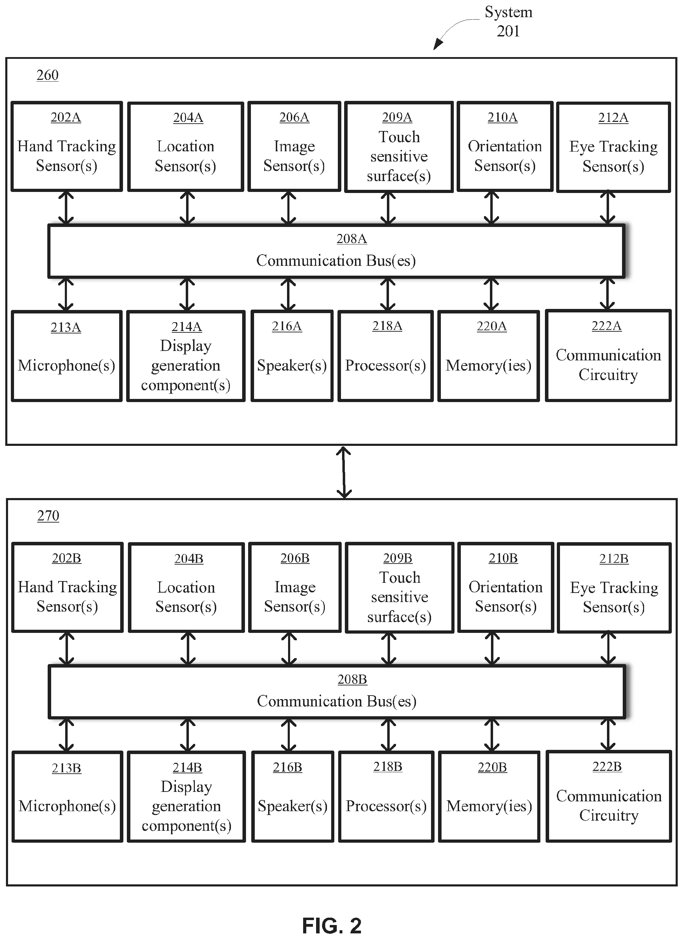

FIG. 1 illustrates an electronic device 101 presenting an extended reality (XR) environment (e.g., a computer-generated environment optionally including representations of physical and/or virtual objects) according to some examples of the disclosure. In some examples, as shown in FIG. 1, electronic device 101 is a head-mounted display or other head-mountable device configured to be worn on a head of a user of the electronic device 101. Examples of electronic device 101 are described below with reference to the architecture block diagram of FIG. 2. As shown in FIG. 1, electronic device 101 and table 106 are located in a physical environment. The physical environment may include physical features such as a physical surface (e.g., floor, walls) or a physical object (e.g., table, lamp, etc.). In some examples, electronic device 101 may be configured to detect and/or capture images of physical environment including table 106 (illustrated in the field of view of electronic device 101).

In some examples, as shown in FIG. 1, electronic device 101 includes one or more internal image sensors 114a oriented towards a face of the user (e.g., eye tracking cameras described below with reference to FIG. 2). In some examples, internal image sensors 114a are used for eye tracking (e.g., detecting a gaze of the user). Internal image sensors 114a are optionally arranged on the left and right portions of display 120 to enable eye tracking of the user's left and right eyes. In some examples, electronic device 101 also includes external image sensors 114b and 114c facing outwards from the user to detect and/or capture the physical environment of the electronic device 101 and/or movements of the user's hands or other body parts.

In some examples, display 120 has a field of view visible to the user (e.g., that may or may not correspond to a field of view of external image sensors 114b and 114c). Because display 120 is optionally part of a head-mounted device, the field of view of display 120 is optionally the same as or similar to the field of view of the user's eyes. In other examples, the field of view of display 120 may be smaller than the field of view of the user's eyes. In some examples, electronic device 101 may be an optical see-through device in which display 120 is a transparent or translucent display through which portions of the physical environment may be directly viewed. In some examples, display 120 may be included within a transparent lens and may overlap all or only a portion of the transparent lens. In other examples, electronic device may be a video-passthrough device in which display 120 is an opaque display configured to display images of the physical environment captured by external image sensors 114b and 114c. While a single display 120 is shown, it should be appreciated that display 120 may include a stereo pair of displays.

In some examples, in response to a trigger, the electronic device 101 may be configured to display a virtual object 104 in the XR environment represented by a cube illustrated in FIG. 1, which is not present in the physical environment, but is displayed in the XR environment positioned on the top of real-world table 106 (or a representation thereof). Optionally, virtual object 104 can be displayed on the surface of the table 106 in the XR environment displayed via the display 120 of the electronic device 101 in response to detecting the planar surface of table 106 in the physical environment 100.

It should be understood that virtual object 104 is a representative virtual object and one or more different virtual objects (e.g., of various dimensionality such as two-dimensional or other three-dimensional virtual objects) can be included and rendered in a three-dimensional XR environment. For example, the virtual object can represent an application or a user interface displayed in the XR environment. In some examples, the virtual object can represent content corresponding to the application and/or displayed via the user interface in the XR environment. In some examples, the virtual object 104 is optionally configured to be interactive and responsive to user input (e.g., air gestures, such as air pinch gestures, air tap gestures, and/or air touch gestures), such that a user may virtually touch, tap, move, rotate, or otherwise interact with, the virtual object 104.

In some examples, displaying an object in a three-dimensional environment may include interaction with one or more user interface objects in the three-dimensional environment. For example, initiation of display of the object in the three-dimensional environment can include interaction with one or more virtual options/affordances displayed in the three-dimensional environment. In some examples, a user's gaze may be tracked by the electronic device as an input for identifying one or more virtual options/affordances targeted for selection when initiating display of an object in the three-dimensional environment. For example, gaze can be used to identify one or more virtual options/affordances targeted for selection using another selection input. In some examples, a virtual option/affordance may be selected using hand-tracking input detected via an input device in communication with the electronic device. In some examples, objects displayed in the three-dimensional environment may be moved and/or reoriented in the three-dimensional environment in accordance with movement input detected via the input device.

In the discussion that follows, an electronic device that is in communication with a display generation component and one or more input devices is described. It should be understood that the electronic device optionally is in communication with one or more other physical user-interface devices, such as a touch-sensitive surface, a physical keyboard, a mouse, a joystick, a hand tracking device, an eye tracking device, a stylus, etc. Further, as described above, it should be understood that the described electronic device, display and touch-sensitive surface are optionally distributed amongst two or more devices. Therefore, as used in this disclosure, information displayed on the electronic device or by the electronic device is optionally used to describe information outputted by the electronic device for display on a separate display device (touch-sensitive or not). Similarly, as used in this disclosure, input received on the electronic device (e.g., touch input received on a touch-sensitive surface of the electronic device, or touch input received on the surface of a stylus) is optionally used to describe input received on a separate input device, from which the electronic device receives input information.

The device typically supports a variety of applications, such as one or more of the following: a drawing application, a presentation application, a word processing application, a website creation application, a disk authoring application, a spreadsheet application, a gaming application, a telephone application, a video conferencing application, an e-mail application, an instant messaging application, a workout support application, a photo management application, a digital camera application, a digital video camera application, a web browsing application, a digital music player application, a television channel browsing application, and/or a digital video player application.

FIG. 2 illustrates a block diagram of an example architecture for a system 201 according to some examples of the disclosure. In some examples, system 201 includes multiple devices. For example, the system 201 includes a first electronic device 260 and a second electronic device 270, wherein the first electronic device 260 and the second electronic device 270 are in communication with each other. In some examples, the first electronic device 260 and the second electronic device 270 are a portable device, such as a mobile phone, smart phone, a tablet computer, a laptop computer, an auxiliary device in communication with another device, a head-mounted display, etc., respectively. In some examples, the first electronic device 260 and the second electronic device 270 correspond to electronic device 101 described above with reference to FIG. 1.

As illustrated in FIG. 2, the first electronic device 260 optionally includes various sensors (e.g., one or more hand tracking sensors 202A, one or more location sensors 204A, one or more image sensors 206A, one or more touch-sensitive surfaces 209A, one or more motion and/or orientation sensors 210A, one or more eye tracking sensors 212A, one or more microphones 213A or other audio sensors, one or more body tracking sensors (e.g., torso and/or head tracking sensors), one or more display generation components 214A, one or more speakers 216A, one or more processors 218A, one or more memories 220A, and/or communication circuitry 222A. In some examples, the second electronic device 270 optionally includes various sensors (e.g., one or more hand tracking sensors 202B, one or more location sensors 204B, one or more image sensors 206B, one or more touch-sensitive surfaces 209B, one or more motion and/or orientation sensors 210B, one or more eye tracking sensors 212B, one or more microphones 213B or other audio sensors, one or more body tracking sensors (e.g., torso and/or head tracking sensors), one or more display generation components 214B, one or more speakers 216, one or more processors 218B, one or more memories 220B, and/or communication circuitry 222B. In some examples, the one or more display generation components 214A, 214B correspond to display 120 in FIG. 1. One or more communication buses 208A and 208B are optionally used for communication between the above-mentioned components of electronic devices 260 and 270, respectively. First electronic device 260 and second electronic device 270 optionally communicate via a wired or wireless connection (e.g., via communication circuitry 222A, 222B) between the two devices.

Communication circuitry 222A, 222B optionally includes circuitry for communicating with electronic devices, networks, such as the Internet, intranets, a wired network and/or a wireless network, cellular networks, and wireless local area networks (LANs). Communication circuitry 222A, 222B optionally includes circuitry for communicating using near-field communication (NFC) and/or short-range communication, such as Bluetooth^{®}.

Processor(s) 218A, 218B include one or more general processors, one or more graphics processors, and/or one or more digital signal processors. In some examples, memory 220A, 220B is a non-transitory computer-readable storage medium (e.g., flash memory, random access memory, or other volatile or non-volatile memory or storage) that stores computer-readable instructions configured to be executed by processor(s) 218A, 218B to perform the techniques, processes, and/or methods described below. In some examples, memory 220A, 220B can include more than one non-transitory computer-readable storage medium. A non-transitory computer-readable storage medium can be any medium (e.g., excluding a signal) that can tangibly contain or store computer-executable instructions for use by or in connection with the instruction execution system, apparatus, or device. In some examples, the storage medium is a transitory computer-readable storage medium. In some examples, the storage medium is a non-transitory computer-readable storage medium. The non-transitory computer-readable storage medium can include, but is not limited to, magnetic, optical, and/or semiconductor storages. Examples of such storage include magnetic disks, optical discs based on compact disc (CD), digital versatile disc (DVD), or Blu-ray technologies, as well as persistent solid-state memory such as flash, solid-state drives, and the like.

In some examples, display generation component(s) 214A, 214B include a single display (e.g., a liquid-crystal display (LCD), organic light-emitting diode (OLED), or other types of display). In some examples, display generation component(s) 214A, 214B includes multiple displays. In some examples, display generation component(s) 214A, 214B can include a display with touch capability (e.g., a touch screen), a projector, a holographic projector, a retinal projector, a transparent or translucent display, etc. In some examples, electronic devices 260 and 270 include touch-sensitive surface(s) 209A and 209B, respectively, for receiving user inputs, such as tap inputs and swipe inputs or other gestures. In some examples, display generation component(s) 214A, 214B and touch-sensitive surface(s) 209A, 209B form touch-sensitive display(s) (e.g., a touch screen integrated with electronic devices 260 and 270, respectively, or external to electronic devices 260 and 270, respectively, that is in communication with electronic devices 260 and 270).

Electronic devices 260 and 270 optionally include image sensor(s) 206A and 206B, respectively. Image sensors(s) 206A/206B optionally include one or more visible light image sensors, such as charged coupled device (CCD) sensors, and/or complementary metal-oxide-semiconductor (CMOS) sensors operable to obtain images of physical objects from the real-world environment. Image sensor(s) 206A/206B also optionally include one or more infrared (IR) sensors, such as a passive or an active IR sensor, for detecting infrared light from the real-world environment. For example, an active IR sensor includes an IR emitter for emitting infrared light into the real-world environment. Image sensor(s) 206A/206B also optionally include one or more cameras configured to capture movement of physical objects in the real-world environment. Image sensor(s) 206A/206B also optionally include one or more depth sensors configured to detect the distance of physical objects from electronic device 260/270. In some examples, information from one or more depth sensors can allow the device to identify and differentiate objects in the real-world environment from other objects in the real-world environment. In some examples, one or more depth sensors can allow the device to determine the texture and/or topography of objects in the real-world environment.

In some examples, electronic devices 260 and 270 use CCD sensors, event cameras, and depth sensors in combination to detect the physical environment around electronic devices 260 and 270. In some examples, image sensor(s) 206A/206B include a first image sensor and a second image sensor. The first image sensor and the second image sensor work in tandem and are optionally configured to capture different information of physical objects in the real-world environment. In some examples, the first image sensor is a visible light image sensor and the second image sensor is a depth sensor. In some examples, electronic device 260/270 uses image sensor(s) 206A/206B to detect the position and orientation of electronic device 260/270 and/or display generation component(s) 214A/214B in the real-world environment. For example, electronic device 260/270 uses image sensor(s) 206A/206B to track the position and orientation of display generation component(s) 214A/214B relative to one or more fixed objects in the real-world environment.

In some examples, electronic device 260/270 includes microphone(s) 213A/213B or other audio sensors. Device 260/270 uses microphone(s) 213A/213B to detect sound from the user and/or the real-world environment of the user. In some examples, microphone(s) 213A/213B includes an array of microphones (a plurality of microphones) that optionally operate in tandem, such as to identify ambient noise or to locate the source of sound in space of the real-world environment.

In some examples, device 260/270 includes location sensor(s) 204A/204B for detecting a location of device 260/270 and/or display generation component(s) 214A/214B. For example, location sensor(s) 204A/204B can include a global positioning system (GPS) receiver that receives data from one or more satellites and allows electronic device 260/270 to determine the device's absolute position in the physical world.

In some examples, electronic device 260/270 includes orientation sensor(s) 210A/210B for detecting orientation and/or movement of electronic device 260/270 and/or display generation component(s) 214A/214B. For example, electronic device 260/270 uses orientation sensor(s) 210A/210B to track changes in the position and/or orientation of electronic device 260/270 and/or display generation component(s) 214A/214B, such as with respect to physical objects in the real-world environment. Orientation sensor(s) 210A/210B optionally include one or more gyroscopes and/or one or more accelerometers.

Electronic device 260/270 includes hand tracking sensor(s) 202A/202B and/or eye tracking sensor(s) 212A/212B (and/or other body tracking sensor(s), such as leg, torso, and/or head tracking sensor(s)), in some examples. Hand tracking sensor(s) 202A/202B are configured to track the position/location of one or more portions of the user's hands, and/or motions of one or more portions of the user's hands with respect to the extended reality environment, relative to the display generation component(s) 214A/214B, and/or relative to another defined coordinate system. Eye tracking sensor(s) 212A/212B are configured to track the position and movement of a user's gaze (eyes, face, or head, more generally) with respect to the real-world or extended reality environment and/or relative to the display generation component(s) 214A/214B. In some examples, hand tracking sensor(s) 202A/202B and/or eye tracking sensor(s) 212A/212B are implemented together with the display generation component(s) 214A/214B. In some examples, the hand tracking sensor(s) 202A/202B and/or eye tracking sensor(s) 212A/212B are implemented separate from the display generation component(s) 214A/214B.

In some examples, the hand tracking sensor(s) 202A/202B (and/or other body tracking sensor(s), such as leg, torso, and/or head tracking sensor(s)) can use image sensor(s) 206A/206B (e.g., one or more IR cameras, 3D cameras, depth cameras, etc.) that capture three-dimensional information from the real-world including one or more body parts (e.g., hands, legs, or torso of a human user). In some examples, the hands can be resolved with sufficient resolution to distinguish fingers and their respective positions. In some examples, one or more image sensors 206A/206B are positioned relative to the user to define a field of view of the image sensor(s) 206A/206B and an interaction space in which finger/hand position, orientation and/or movement captured by the image sensors are used as inputs (e.g., to distinguish from a user's resting hand or other hands of other persons in the real-world environment). Tracking the fingers/hands for input (e.g., gestures, touch, tap, etc.) can be advantageous in that it does not require the user to touch, hold or wear any sort of beacon, sensor, or other marker.

In some examples, eye tracking sensor(s) 212A/212B includes at least one eye tracking camera (e.g., infrared (IR) cameras) and/or illumination sources (e.g., IR light sources, such as LEDs) that emit light towards a user's eyes. The eye tracking cameras may be pointed towards a user's eyes to receive reflected IR light from the light sources directly or indirectly from the eyes. In some examples, both eyes are tracked separately by respective eye tracking cameras and illumination sources, and a focus/gaze can be determined from tracking both eyes. In some examples, one eye (e.g., a dominant eye) is tracked by one or more respective eye tracking cameras/illumination sources.

Electronic device 260/270 and system 201 are not limited to the components and configuration of FIG. 2, but can include fewer, other, or additional components in multiple configurations. In some examples, system 201 can be implemented in a single device. A person or persons using system 201, is optionally referred to herein as a user or users of the device(s). Attention is now directed towards exemplary concurrent displays of a three-dimensional environment on a first electronic device (e.g., corresponding to electronic device 260) and a second electronic device (e.g., corresponding to electronic device 270). As discussed below, the first electronic device may be in communication with the second electronic device in a multi-user communication session. In some examples, an avatar (e.g., a representation of) a user of the first electronic device may be displayed in the three-dimensional environment at the second electronic device, and an avatar of a user of the second electronic device may be displayed in the three-dimensional environment at the first electronic device. In some examples, the user of the first electronic device and the user of the second electronic device may be associated with a spatial group in the multi-user communication session. In some examples, interactions with content in the three-dimensional environment while the first electronic device and the second electronic device are in the multi-user communication session may cause the user of the first electronic device and the user of the second electronic device to become associated with different spatial groups in the multi-user communication session.

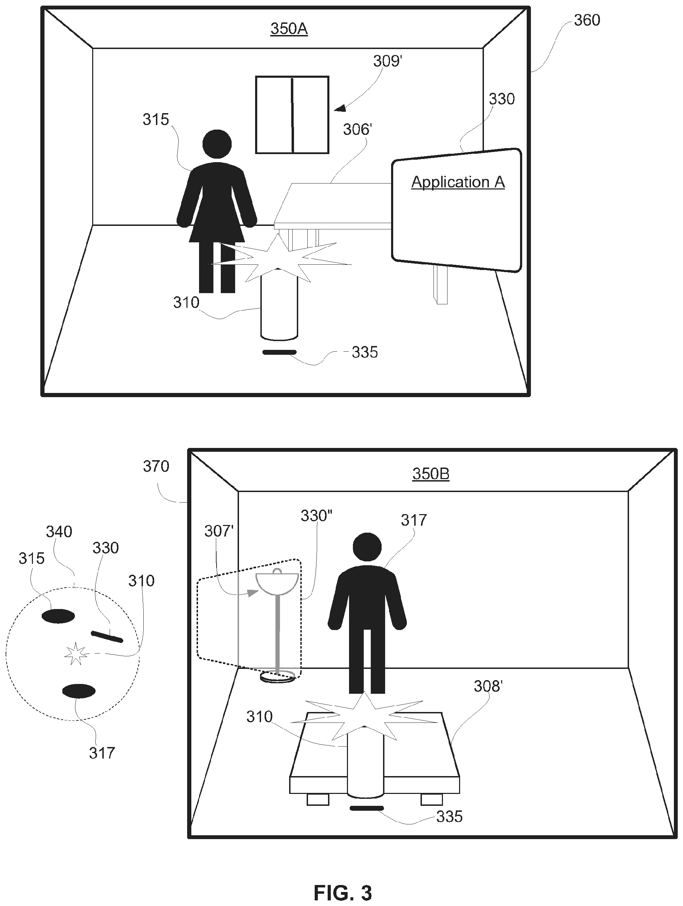

FIG. 3 illustrates an example of a spatial group 340 in a multi-user communication session that includes a first electronic device 360 and a second electronic device 370 according to some examples of the disclosure. In some examples, the first electronic device 360 may present a three-dimensional environment 350A, and the second electronic device 370 may present a three-dimensional environment 350B. The first electronic device 360 and the second electronic device 370 may be similar to electronic device 101 or 260/270, and/or may be a head mountable system/device and/or projection-based system/device (including a hologram-based system/device) configured to generate and present a three-dimensional environment, such as, for example, heads-up displays (HUDs), head mounted displays (HMDs), windows having integrated display capability, displays formed as lenses designed to be placed on a person's eyes (e.g., similar to contact lenses), respectively. In the example of FIG. 3, a first user is optionally wearing the first electronic device 360 and a second user is optionally wearing the second electronic device 370, such that the three-dimensional environment 350A/350B can be defined by X, Y and Z axes as viewed from a perspective of the electronic devices (e.g., a viewpoint associated with the electronic device 360/370, which may be a head-mounted display, for example).

As shown in FIG. 3, the first electronic device 360 may be in a first physical environment that includes a table 306 and a window 309. Thus, the three-dimensional environment 350A presented using the first electronic device 360 optionally includes captured portions of the physical environment surrounding the first electronic device 360, such as a representation of the table 306' and a representation of the window 309'. Similarly, the second electronic device 370 may be in a second physical environment, different from the first physical environment (e.g., separate from the first physical environment), that includes a floor lamp 307 and a coffee table 308. Thus, the three-dimensional environment 350B presented using the second electronic device 370 optionally includes captured portions of the physical environment surrounding the second electronic device 370, such as a representation of the floor lamp 307' and a representation of the coffee table 308'. Additionally, the three-dimensional environments 350A and 350B may include representations of the floor, ceiling, and walls of the room in which the first electronic device 360 and the second electronic device 370, respectively, are located.

As mentioned above, in some examples, the first electronic device 360 is optionally in a multi-user communication session with the second electronic device 370. For example, the first electronic device 360 and the second electronic device 370 (e.g., via communication circuitry 222A/222B) are configured to present a shared three-dimensional environment 350A/350B that includes one or more shared virtual objects (e.g., content such as images, video, audio and the like, representations of user interfaces of applications, etc.). As used herein, the term "shared three-dimensional environment" refers to a three-dimensional environment that is independently presented, displayed, and/or visible at two or more electronic devices via which content, applications, data, and the like may be shared and/or presented to users of the two or more electronic devices. In some examples, while the first electronic device 360 is in the multi-user communication session with the second electronic device 370, an avatar corresponding to the user of one electronic device is optionally displayed in the three-dimensional environment that is displayed via the other electronic device. For example, as shown in FIG. 3, at the first electronic device 360, an avatar 315 corresponding to the user of the second electronic device 370 is displayed in the three-dimensional environment 350A. Similarly, at the second electronic device 370, an avatar 317 corresponding to the user of the first electronic device 360 is displayed in the three-dimensional environment 350B.

In some examples, the presentation of avatars 315/317 as part of a shared three-dimensional environment is optionally accompanied by an audio effect corresponding to a voice of the users of the electronic devices 370/360. For example, the avatar 315 displayed in the three-dimensional environment 350A using the first electronic device 360 is optionally accompanied by an audio effect corresponding to the voice of the user of the second electronic device 370. In some such examples, when the user of the second electronic device 370 speaks, the voice of the user may be detected by the second electronic device 370 (e.g., via the microphone(s) 213B) and transmitted to the first electronic device 360 (e.g., via the communication circuitry 222B/222A), such that the detected voice of the user of the second electronic device 370 may be presented as audio (e.g., using speaker(s) 216A) to the user of the first electronic device 360 in three-dimensional environment 350A. In some examples, the audio effect corresponding to the voice of the user of the second electronic device 370 may be spatialized such that it appears to the user of the first electronic device 360 to emanate from the location of avatar 315 in the shared three-dimensional environment 350A (e.g., despite being outputted from the speakers of the first electronic device 360). Similarly, the avatar 317 displayed in the three-dimensional environment 350B using the second electronic device 370 is optionally accompanied by an audio effect corresponding to the voice of the user of the first electronic device 360. In some such examples, when the user of the first electronic device 360 speaks, the voice of the user may be detected by the first electronic device 360 (e.g., via the microphone(s) 213A) and transmitted to the second electronic device 370 (e.g., via the communication circuitry 222A/222B), such that the detected voice of the user of the first electronic device 360 may be presented as audio (e.g., using speaker(s) 216B) to the user of the second electronic device 370 in three-dimensional environment 350B. In some examples, the audio effect corresponding to the voice of the user of the first electronic device 360 may be spatialized such that it appears to the user of the second electronic device 370 to emanate from the location of avatar 317 in the shared three-dimensional environment 350B (e.g., despite being outputted from the speakers of the first electronic device 360).

In some examples, while in the multi-user communication session, the avatars 315/317 are displayed in the three-dimensional environments 350A/350B with respective orientations that correspond to and/or are based on orientations of the electronic devices 360/370 (and/or the users of electronic devices 360/370) in the physical environments surrounding the electronic devices 360/370. For example, as shown in FIG. 3, in the three-dimensional environment 350A, the avatar 315 is optionally facing toward the viewpoint of the user of the first electronic device 360, and in the three-dimensional environment 350B, the avatar 317 is optionally facing toward the viewpoint of the user of the second electronic device 370. As a particular user moves the electronic device (and/or themself) in the physical environment, the viewpoint of the user changes in accordance with the movement, which may thus also change an orientation of the user's avatar in the three-dimensional environment. For example, with reference to FIG. 3, if the user of the first electronic device 360 were to look leftward in the three-dimensional environment 350A such that the first electronic device 360 is rotated (e.g., a corresponding amount) to the left (e.g., counterclockwise), the user of the second electronic device 370 would see the avatar 317 corresponding to the user of the first electronic device 360 rotate to the right (e.g., clockwise) relative to the viewpoint of the user of the second electronic device 370 in accordance with the movement of the first electronic device 360.

Additionally, in some examples, while in the multi-user communication session, a viewpoint of the three-dimensional environments 350A/350B and/or a location of the viewpoint of the three-dimensional environments 350A/350B optionally changes in accordance with movement of the electronic devices 360/370 (e.g., by the users of the electronic devices 360/370). For example, while in the communication session, if the first electronic device 360 is moved closer toward the representation of the table 306' and/or the avatar 315 (e.g., because the user of the first electronic device 360 moved forward in the physical environment surrounding the first electronic device 360), the viewpoint of the three-dimensional environment 350A would change accordingly, such that the representation of the table 306', the representation of the window 309' and the avatar 315 appear larger in the field of view. In some examples, each user may independently interact with the three-dimensional environment 350A/350B, such that changes in viewpoints of the three-dimensional environment 350A and/or interactions with virtual objects in the three-dimensional environment 350A by the first electronic device 360 optionally do not affect what is shown in the three-dimensional environment 350B at the second electronic device 370, and vice versa.

In some examples, the avatars 315/317 are a representation (e.g., a full-body rendering) of the users of the electronic devices 370/360. In some examples, the avatar 315/317 is a representation of a portion (e.g., a rendering of a head, face, head and torso, etc.) of the users of the electronic devices 370/360. In some examples, the avatars 315/317 are a user-personalized, user-selected, and/or user-created representation displayed in the three-dimensional environments 350A/350B that is representative of the users of the electronic devices 370/360. It should be understood that, while the avatars 315/317 illustrated in FIG. 3 correspond to full-body representations of the users of the electronic devices 370/360, respectively, alternative avatars may be provided, such as those described above.

As mentioned above, while the first electronic device 360 and the second electronic device 370 are in the multi-user communication session, the three-dimensional environments 350A/350B may be a shared three-dimensional environment that is presented using the electronic devices 360/370. In some examples, content that is viewed by one user at one electronic device may be shared with another user at another electronic device in the multi-user communication session. In some such examples, the content may be experienced (e.g., viewed and/or interacted with) by both users (e.g., via their respective electronic devices) in the shared three-dimensional environment. For example, as shown in FIG. 3, the three-dimensional environments 350A/350B include a shared virtual object 310 (e.g., which is optionally a three-dimensional virtual sculpture) that is viewable by and interactive to both users. As shown in FIG. 3, the shared virtual object 310 may be displayed with a grabber affordance (e.g., a handlebar) 335 that is selectable to initiate movement of the shared virtual object 310 within the three-dimensional environments 350A/350B.

In some examples, the three-dimensional environments 350A/350B include unshared content that is private to one user in the multi-user communication session. For example, in FIG. 3, the first electronic device 360 is displaying a private application window 330 in the three-dimensional environment 350A, which is optionally an object that is not shared between the first electronic device 360 and the second electronic device 370 in the multi-user communication session. In some examples, the private application window 330 may be associated with a respective application that is operating on the first electronic device 360 (e.g., such as a media player application, a web browsing application, a messaging application, etc.). Because the private application window 330 is not shared with the second electronic device 370, the second electronic device 370 optionally displays a representation of the private application window 330" in three-dimensional environment 350B. As shown in FIG. 3, in some examples, the representation of the private application window 330" may be a faded, occluded, discolored, and/or translucent representation of the private application window 330 that prevents the user of the second electronic device 370 from viewing contents of the private application window 330.

As mentioned previously above, in some examples, the user of the first electronic device 360 and the user of the second electronic device 370 are in a spatial group 340 within the multi-user communication session. In some examples, the spatial group 340 may be a baseline (e.g., a first or default) spatial group within the multi-user communication session. For example, when the user of the first electronic device 360 and the user of the second electronic device 370 initially join the multi-user communication session, the user of the first electronic device 360 and the user of the second electronic device 370 are automatically (and initially, as discussed in more detail below) associated with (e.g., grouped into) the spatial group 340 within the multi-user communication session. In some examples, while the users are in the spatial group 340 as shown in FIG. 3, the user of the first electronic device 360 and the user of the second electronic device 370 have a first spatial arrangement (e.g., first spatial template) within the shared three-dimensional environment. For example, the user of the first electronic device 360 and the user of the second electronic device 370, including objects that are displayed in the shared three-dimensional environment, have spatial truth within the spatial group 340. In some examples, spatial truth requires a consistent spatial arrangement between users (or representations thereof) and virtual objects. For example, a distance between the viewpoint of the user of the first electronic device 360 and the avatar 315 corresponding to the user of the second electronic device 370 may be the same as a distance between the viewpoint of the user of the second electronic device 370 and the avatar 317 corresponding to the user of the first electronic device 360. As described herein, if the location of the viewpoint of the user of the first electronic device 360 moves, the avatar 317 corresponding to the user of the first electronic device 360 moves in the three-dimensional environment 350B in accordance with the movement of the location of the viewpoint of the user relative to the viewpoint of the user of the second electronic device 370. Additionally, if the user of the first electronic device 360 performs an interaction on the shared virtual object 310 (e.g., moves the virtual object 310 in the three-dimensional environment 350A), the second electronic device 370 alters display of the shared virtual object 310 in the three-dimensional environment 350B in accordance with the interaction (e.g., moves the virtual object 310 in the three-dimensional environment 350B).

It should be understood that, in some examples, more than two electronic devices may be communicatively linked in a multi-user communication session. For example, in a situation in which three electronic devices are communicatively linked in a multi-user communication session, a first electronic device would display two avatars, rather than just one avatar, corresponding to the users of the other two electronic devices. It should therefore be understood that the various processes and exemplary interactions described herein with reference to the first electronic device 360 and the second electronic device 370 in the multi-user communication session optionally apply to situations in which more than two electronic devices are communicatively linked in a multi-user communication session.

In some examples, it may be advantageous to provide mechanisms for moving virtual objects that are shared in a multi-user communication session that includes collocated and non-collocated users (e.g., collocated and non-collocated electronic devices associated with the users). For example, it may be desirable to enable users who are collocated in a first physical environment and who are participating in a multi-user communication session with one or more users who are non-collocated in the first physical environment to coordinatively move and/or reposition virtual content that is shared and presented in a three-dimensional environment that is optionally viewable by and/or interactive to the collocated and non-collocated users in the multi-user communication session. As used herein, relative to a first electronic device, a collocated user corresponds to a local user and a non-collocated user corresponds to a remote user. As similarly discussed above, the three-dimensional environment optionally includes avatars corresponding to the remote users of the electronic devices that are non-collocated in the multi-user communication session. In some examples, as discussed below, the repositioning of virtual objects (e.g., avatars and/or shared virtual content) in the three-dimensional environment within a multi-user communication session is based on whether the multi-user communication session includes collocated users, non-collocated users (e.g., relative to a first electronic device), or both.

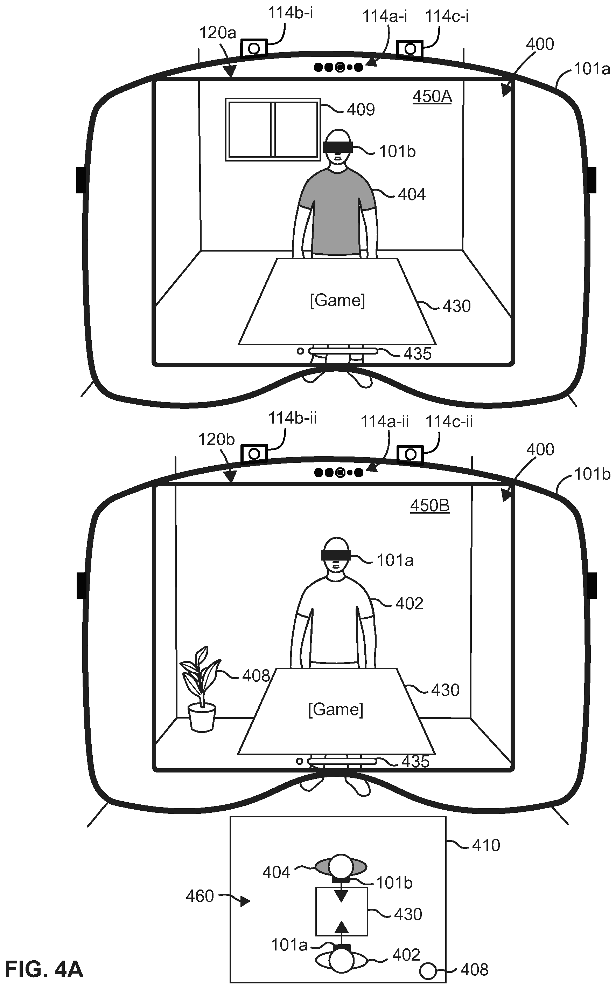

FIGs. 4A-4AA illustrate example interactions within multi-user communication sessions that include collocated and non-collocated users according to some examples of the disclosure.

FIGs. 4A-4C illustrate example interactions within a multi-user communication session that includes collocated users. In some examples, while a first electronic device 101a is in the multi-user communication session with a second electronic device 101b, three-dimensional environment 450A is presented using the first electronic device 101a (e.g., via display 120a) and three-dimensional environment 450B is presented using the second electronic device 101b (e.g., via display 120b). In some examples, the electronic devices 101a/101b optionally correspond to or are similar to electronic devices 360/370 discussed above and/or electronic devices 260/270 in FIG. 2. In some examples, as shown in FIG. 4A, the first electronic device 101a is being used by (e.g., worn on a head of) a first user 402 and the second electronic device 101b is being used by (e.g., worn on a head of) a second user 404.

In FIG. 4A, as indicated in overhead view 410, the first electronic device 101a and the second electronic device 101b are collocated in physical environment 400. For example, the first electronic device 101a and the second electronic device 101b are both located in a same room that includes houseplant 408 and window 409. In some examples, the determination that the first electronic device 101a and the second electronic device 101b are collocated in the physical environment 400 is based on a distance between the first electronic device 101a and the second electronic device 101b. For example, in FIG. 4A, the first electronic device 101a and the second electronic device 101b are collocated in the physical environment 400 because the first electronic device 101a is within a threshold distance (e.g., 0.1, 0.5, 1, 2, 3, 5, 10, 15, 20, etc. meters) of the second electronic device 101b. In some examples, the determination that the first electronic device 101a and the second electronic device 101b are collocated in the physical environment 400 is based on communication between the first electronic device 101a and the second electronic device 101b. For example, in FIG. 4A, the first electronic device 101a and the second electronic device 101b are configured to communicate (e.g., wirelessly, such as via Bluetooth, Wi-Fi, or a server (e.g., wireless communications terminal)). In some examples, the first electronic device 101a and the second electronic device 101b are connected to a same wireless network in the physical environment 400. In some examples, the determination that the first electronic device 101a and the second electronic device 101b are collocated in the physical environment 400 is based on a strength of a wireless signal transmitted between the electronic device 101a and 101b. For example, in FIG. 4A, the first electronic device 101a and the second electronic device 101b are collocated in the physical environment 400 because a strength of a Bluetooth signal (or other wireless signal) transmitted between the electronic devices 101a and 101b is greater than a threshold strength. In some examples, the determination that the first electronic device 101a and the second electronic device 101b are collocated in the physical environment 400 is based on visual detection of the electronic devices 101a and 101b in the physical environment 400. For example, as shown in FIG. 4A, the second electronic device 101b is positioned in a field of view of the first electronic device 101a (e.g., because the second user 404 is standing in the field of view of the first electronic device 101a), which enables the first electronic device 101a to visually detect (e.g., identify or scan, such as via object detection or other image processing techniques) the second electronic device 101b (e.g., in one or more images captured by the first electronic device 101a, such as via external image sensors 114b-i and 114c-i). Similarly, as shown in FIG. 4A, the first electronic device 101a is optionally positioned in a field of view of the second electronic device 101b (e.g., because the first user 402 is standing in the field of view of the second electronic device 101b), which enables the second electronic device 101b to visually detect the first electronic device 101a (e.g., in one or more images captured by the second electronic device 101b, such as via external image sensors 11b-ii and 114c-ii).

In some examples, the three-dimensional environments 450A/450B include captured portions of the physical environment 400 in which the electronic devices 460/470 are located. For example, because the first electronic device 101a and the second electronic device 101b are collocated in the physical environment 400, the three-dimensional environments 450A and 450B include the houseplant 408 (e.g., a representation of the houseplant) or the window 409 (e.g., a representation of the window), based on the viewpoints of the first electronic device 101a and the second electronic device 101b, as shown in FIG. 4A. In some examples, the representations can include portions of the physical environment 400 viewed through a transparent or translucent display of the electronic devices 101a and 101b. In some examples, the three-dimensional environments 450A/450B have one or more characteristics of the three-dimensional environments 350A/350B described above with reference to FIG. 3.

As described above with reference to FIG. 3, while electronic devices are communicatively linked in a multi-user communication session, users may be represented by avatars corresponding to the users of the electronic devices. In FIG. 4A, because the first electronic device 101a and the second electronic device 101b are collocated in the physical environment 400, the users of the electronic devices 101a and 101b are represented in the multi-user communication session via their physical personas (e.g., bodies) that are visible in passthrough of the physical environment 400 (e.g., rather than via virtual avatars). For example, as shown in FIG. 4A, the second user 404 is visible in the field of view of the first electronic device 101a and the first user 402 is visible in the field of view of the second electronic device 101b while the first electronic device 101a and the second electronic device 101b are in the multi-user communication session. As discussed in more detail below, if a third user who is non-collocated in the physical environment 400 (e.g., a remote user) joins the multi-user communication session, the third user is represented via an avatar in the three-dimensional environments 450A and 450B.

As similarly described above with reference to FIG. 3, while the first user 402 of the first electronic device 101a and the second user 404 of the second electronic device 101b are collocated in the physical environment 400 and while the first electronic device 101a is in the multi-user communication session with the second electronic device 101b, the first user 402 and the second user 404 may be in a first spatial group within the multi-user communication session In some examples, the first spatial group has one or more characteristics of spatial group 340 discussed above with reference to FIG. 3. As similarly described above, while the first user 402 and the second user 404 are in the first spatial group within the multi-user communication session, the users have a first spatial arrangement in the shared three-dimensional environment (e.g., represented by the locations of and/or distance between the users 402 and 404 in the overhead view 410 in FIG. 4A) determined by the physical locations of the electronic devices 101a and 101b in the physical environment 440. Particularly, the first electronic device 101a and the second electronic device 101b experience spatial truth within the first spatial group as dictated by the physical locations of and/or orientations of the first user 402 and the second user 404, respectively.

In some examples, as similarly described above with reference to FIG. 3, while the first electronic device 101a and the second electronic device 101b are in the multi-user communication session, content may be shared that is viewable by and/or interactive to the first user 402 (e.g., via the first electronic device 101a) and the second user 404 (e.g., via the second electronic device 101b). For example, in FIG. 4A, the shared three-dimensional environment includes virtual object 430 corresponding to a game user interface associated with a gaming application. In some examples, the virtual object 430 is a shared virtual object, such that, as shown in FIG. 4A, the virtual object 430 is displayed in and interactive within both the three-dimensional environment 450A and the three-dimensional environment 450B. In some examples, as shown in FIG. 4A, the virtual object 430 is displayed with grabber bar 435 that is selectable to initiate movement of the virtual object 430 within the three-dimensional environments 450A/450B. In some examples, the virtual object 430 has one or more characteristics of shared virtual object 310 described above with reference to FIG. 3.

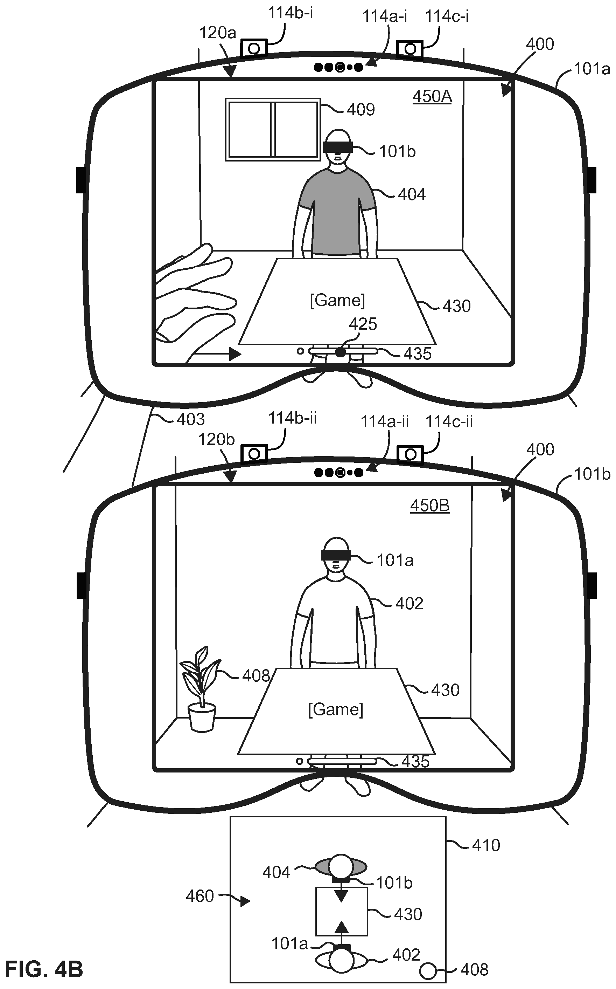

In FIG. 4B, while the first electronic device 101a is collocated with the second electronic device 101b in the physical environment 400 (e.g., and optionally while the first electronic device 101a is in a multi-user communication session with the second electronic device 110b), the first electronic device 101a detects an input corresponding to a request to move the virtual object 430 within the three-dimensional environment 450A. For example, as shown in FIG. 4B, the first electronic device 101a detects hand 403 of the first user 402 perform an air pinch gesture (e.g., in which the index finger and thumb of the hand 403 come together to form a pinch hand shape), optionally while gaze 425 of the first user 402 is directed to the grabber bar 435 in the three-dimensional environment 450A, followed by movement of the hand 403 in space (e.g., rightward relative to a body of the first user 402). It should be understood that additional or alternative inputs may be provided to cause movement of the virtual object 430 within the three-dimensional environment 450A, such as an air tap gesture, a gaze dwell, a verbal command, etc. Additionally, it should be understood that, though such inputs (e.g., air gestures) performed by the first user 402 are not illustrated in FIG. 4B as being visible in the three-dimensional environment 450B presented at the second electronic device 101b, in some examples, the inputs are visible in the three-dimensional environment 450B from the viewpoint of the second electronic device 101b (e.g., because the first user 402 is positioned in the field of view of the second electronic device 101b, as previously discussed above).

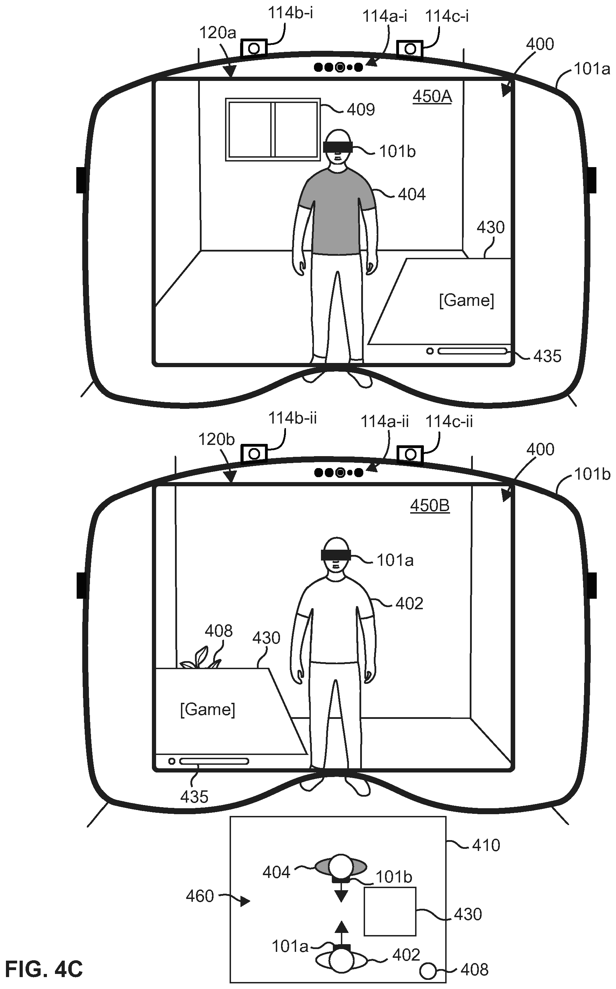

In some examples, as shown in FIG. 4C, in response to detecting the input provided by the hand 403 discussed above, the first electronic device 101a moves the virtual object 430 in the three-dimensional environment 450A in accordance with the input. For example, as shown in the overhead view 410 in FIG. 4C, the first electronic device 101a moves the virtual object 430 rightward relative to the viewpoint of the first electronic device 101a in accordance with the rightward movement of the hand 403 of the first user 402.

In some examples, as mentioned above, movement of the virtual object 430, which is a shared virtual object, within the shared three-dimensional environment is based on whether the multi-user communication session includes collocated users, non-collocated users, or both. As discussed above, in the example of FIGs. 4A-4C, the first user 402 of the first electronic device 101a and the second user 404 of the second electronic device 101b are collocated in the physical environment 400. In instances where all participants in the multi-user communication session are collocated users, such as in FIGs. 4A-4C, movement of a shared virtual object at a respective electronic device associated with one of the collocated users causes the shared virtual object to be correspondingly moved at the electronic devices associated with the other collocated users. Accordingly, as shown in FIG. 4C, when the first electronic device 101a moves the virtual object 430 in accordance with the input provided by the hand 403, the second electronic device 101b also moves the virtual object 430. For example, as shown in FIG. 4C, the second electronic device 101b moves the virtual object 430 leftward in the three-dimensional environment 450B relative to the viewpoint of the second electronic device 101b, which reflects the rightward movement of the virtual object 430 in the three-dimensional environment 450A at the first electronic device 101a. Additionally, as shown in FIG. 4C, the first electronic device 101a and the second electronic device 101b move the virtual object 430 within the three-dimensional environments 450A/450B in accordance with the input discussed above without updating presentation of the passthrough representations of the first user 402 and the second user 404. For example, as shown in FIG. 4C, because neither the first user 402 nor the second user 404 physically moved in the physical environment 400 when the input provided by the first user 402 is detected, the representation of the second user 404 that is visible in the three-dimensional environment 450A is optionally not updated and the representation of the first user 402 that is visible in the three-dimensional environment 450B is optionally not updated.

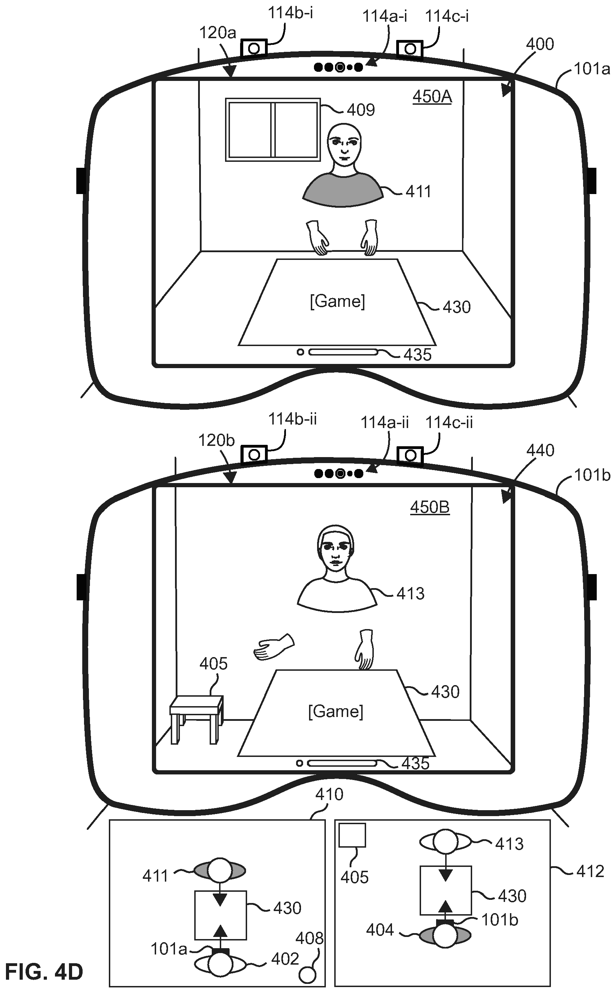

FIGs. 4D-4F illustrate example interactions within a multi-user communication session that includes non-collocated users. In some examples, rather than being collocated in the physical environment 400 as discussed above, the first user 402 of the first electronic device 101a and the second user 404 of the second electronic device 101b may be non-collocated. For example, in FIG. 4D, the first user 402 of the first electronic device 101a is located in the physical environment 400 (e.g., corresponding to physical environment 400 discussed above) and the second user 404 of the second electronic device 101b is located in physical environment 440 (e.g., including table 405), which is different from the physical environment 400 in which the first electronic device 101a is located. In some examples, while the second electronic device 101b is in the physical environment 440, the second electronic device 101b is more than the threshold distance (e.g., discussed above) away from the first electronic device 101a. Additionally, in some examples, as shown in FIG. 4D, the second electronic device 101b is not in the field of view of the first electronic device 101a (and vice versa).

In some examples, while the first electronic device 101a and the second electronic device 101b are in the multi-user communication session, the first user 402 and the second user 404 may be represented visually using avatars in the shared three-dimensional environment, as similarly discussed above with reference to FIG. 3, because the first user 402 and the second user 404 are non-collocated. For example, as shown in FIG. 4D, the first electronic device 101a is displaying avatar 411 corresponding to the second user 404 of the second electronic device 101b in the three-dimensional environment 450A and the second electronic device 101b is displaying avatar 413 corresponding to the first user 402 of the first electronic device 101a in the three-dimensional environment 450B. In some examples, the avatars 411 and 413 have one or more characteristics of avatars 315 and 317 discussed above with reference to FIG. 3.

Additionally, in some examples, as shown in FIG. 4D, while the first electronic device 101a and the second electronic device 101b are in the multi-user communication session, the three-dimensional environments 450A and 450B include the virtual object 430 discussed above. In FIG. 4D, the virtual object 430 corresponds to a shared virtual object, as previously discussed above.

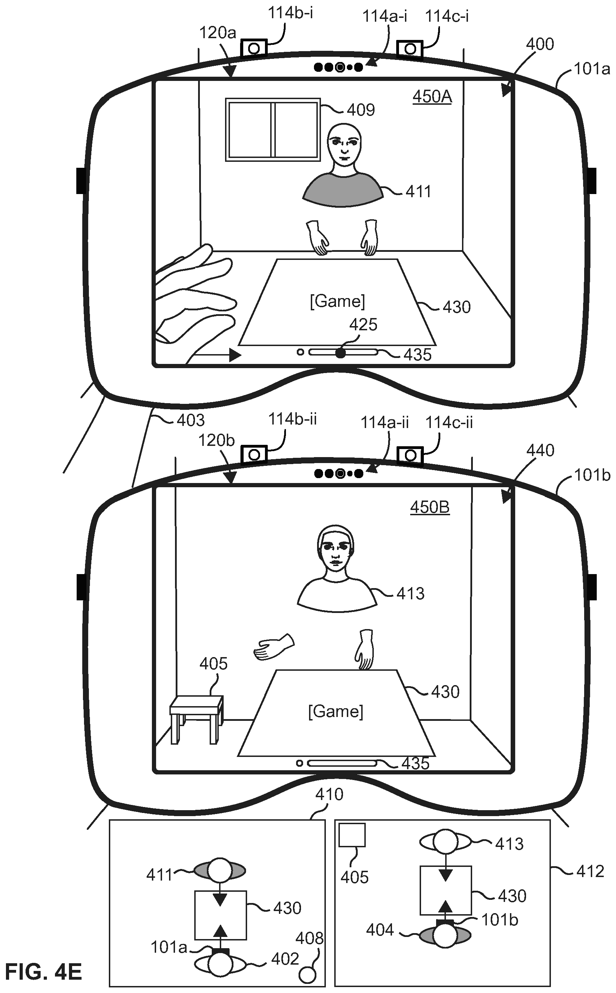

In FIG. 4E, while the first electronic device 101a and the second electronic device 101b are in the multi-user communication session, the first electronic device 101a detects an input corresponding to a request to move the virtual object 430 in the three-dimensional environment 450A. For example, as similarly discussed above, the first electronic device 101a detects the hand 403 of the first user 402 perform an air pinch gesture, optionally while the gaze 425 of the first user 402 is directed to the grabber bar 435, followed by movement of the hand 403 rightward in space.

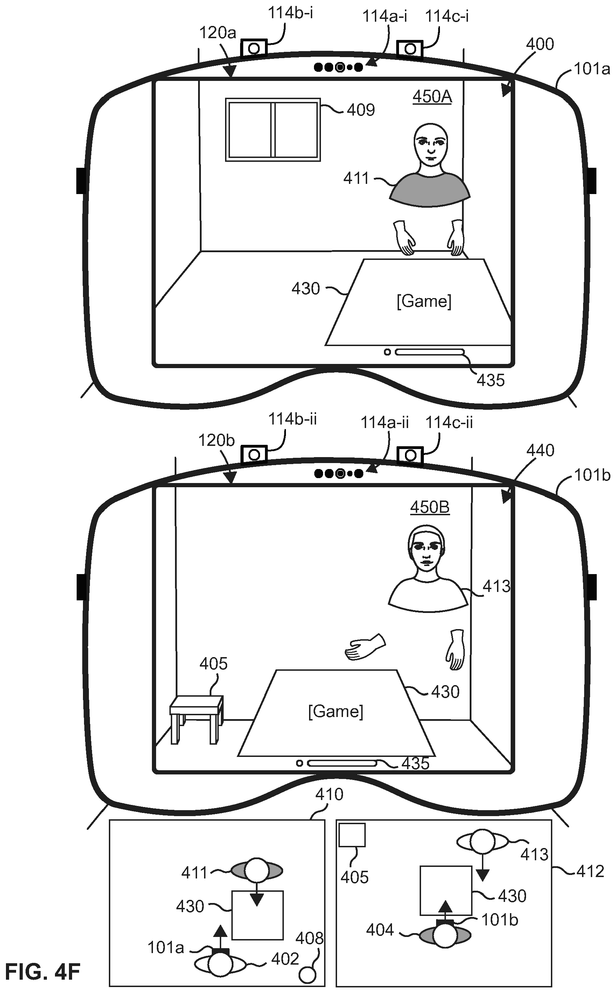

In some examples, when electronic devices are in a multi-user communication session and the electronic devices are non-collocated, such as the first electronic device 101a and the second electronic device 101b, movement of a shared virtual object (e.g., the virtual object 430) triggers spatial refinement in the shared three-dimensional environment of the multi-user communication session. In some examples, spatial refinement corresponds to movement and/or repositioning of avatars and/or shared objects (e.g., triggered by the movement of a shared object) that enables spatial truth to be maintained within the first spatial group of the first user 402 and the second user 404. In FIG. 4E, because the first electronic device 101a and the second electronic device 101b are non-collocated, the input provided by the first user 402 directed to the virtual object 430 optionally triggers spatial refinement at the first electronic device 101a. Accordingly, as shown in FIG. 4F, in response to detecting the input discussed above, the first electronic device 101a not only moves the virtual object 430 in the three-dimensional environment 450A in accordance with the input, but also moves the avatar 411 corresponding to the second user 404 in the three-dimensional environment 450A in accordance with the input. For example, as shown in FIG. 4F, the first electronic device 101a moves the virtual object 430 and the avatar 411 (e.g., by equal amounts) rightward in the three-dimensional environment 450A relative to the viewpoint of the first electronic device 101a in accordance with the rightward movement of the hand 403 of the first user 402.

In some examples, when spatial refinement is triggered at the first electronic device 101a, the movement of the virtual object 430 and the avatar 411 in the three-dimensional environment 450A is applied only to the avatar 413 corresponding to the first user 402 in the three-dimensional environment 450B at the second electronic device 101b. For example, as shown in FIG. 4F, the second electronic device 101b moves the avatar 413 rightward in the three-dimensional environment 450B, without moving the virtual object 430, relative to the viewpoint of the second electronic device 101b in accordance with the input provided by the first user 402 at the first electronic device 101a, as reflected in the overhead view 412. Accordingly, as illustrated via the overhead views 410 and 412 in FIG. 4F, spatial truth from the viewpoints of the first electronic device 101a and the second electronic device 101b is maintained following the input provided by the first user 402 (e.g., the first user 402 sees, via the first electronic device 101a, the avatar 411 corresponding to the second user 404 to their right and the second user 404 sees, via the second electronic device 101b, the avatar 413 corresponding to the first user 402 to their right).

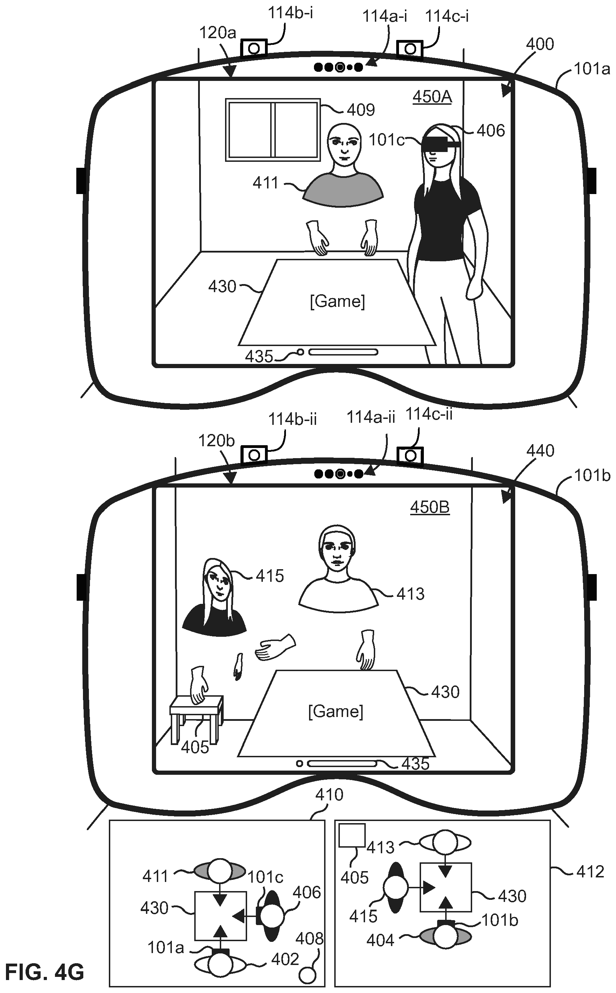

FIGs. 4G-4J illustrate example interactions within a multi-user communication session that includes collocated and non-collocated users. In FIG. 4G, the first electronic device 101a is in a multi-user communication session with the second electronic device 101b and a third electronic device 101c. In some examples, as illustrated in the overhead view 410 in FIG. 4G, the first electronic device 101a is collocated with the third electronic device 101c in the physical environment 400 discussed above. Additionally, in FIG. 4G, the second electronic device 101b is non-collocated in the physical environment 400 with the first electronic device 101a and the third electronic device 101c. For example, as illustrated in the overhead view 412, the second electronic device is located in the physical environment 440 (e.g., discussed above), which is different from the physical environment 400.

In some examples, while the first electronic device 101a, the second electronic device 101b, and the third electronic device 101c are in the multi-user communication session, collocated users (e.g., relative to a respective electronic device) are represented in the shared three-dimensional environment via their physical bodies, as previously discussed above, and non-collocated users (e.g., relative to the respective electronic device) are represented in the shared three-dimensional environment via virtual representations (e.g., avatars), as previously discussed above. For example, in FIG. 4G, because the second electronic device 101b is non-collocated with the first electronic device 101a and the third electronic device 101c in the physical environment 400, the first electronic device 101a is displaying an avatar 411 corresponding to the second user 404 of the second electronic device 101b and the third user 406 of the third electronic device 101c is visible (e.g., in passthrough or via a computer-generated representation) in the three-dimensional environment 450A. Therefore, the second electronic device 101b is optionally displaying an avatar 413 corresponding to the first user 402 of the first electronic device 101a and an avatar 415 corresponding to the third user 406 of the third electronic device 101c in the three-dimensional environment 450B (e.g., because the second user 404 of the second electronic device 101b is located by themself in the physical environment 440), as illustrated in the overhead view 412 in FIG. 4G. Additionally, as similarly discussed above, the shared three-dimensional environment includes the virtual object 430, which corresponds to a shared virtual object, as shown in FIG. 4G.

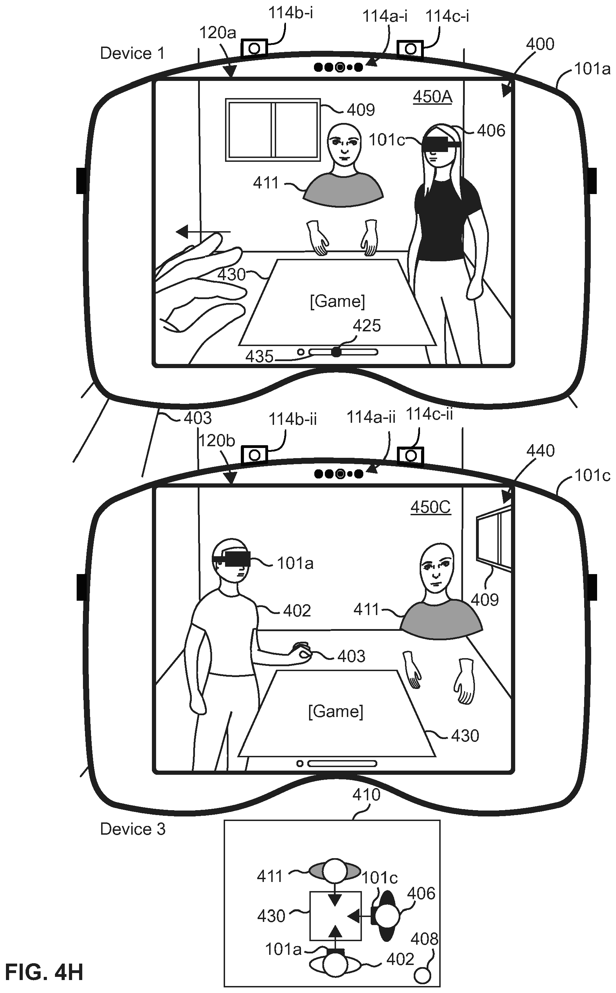

In FIG. 4H, while the first electronic device 101a, the second electronic device 101b, and the third electronic device 101c are in the multi-user communication session, the first electronic device 101a detects an input corresponding to a request to move the virtual object 430 in the three-dimensional environment 450A. For example, as similarly discussed above, the first electronic device 101a detects the hand 403 of the first user 402 perform an air pinch gesture, optionally while the gaze 425 of the first user 402 is directed to the grabber bar 435 in the three-dimensional environment 450A, followed by movement of the hand 403 leftward in space, as shown in FIG. 4H.

In some examples, while the electronic devices 101a, 101b and 101c are in the multi-user communication session, it may be advantageous to provide methods for compensating for lag (e.g., reducing and/or preventing delays) between detection of input at one of the electronic devices and performing one or more corresponding operations at the other electronic devices. For example, when the first electronic device 101a detects the input performed by the hand 403 in FIG. 4H, the second electronic device 101b and the third electronic device 101c rely on data corresponding to the input to be transmitted by the first electronic device 101a (e.g., directly or indirectly via a server (e.g., a wireless communications terminal)) to perform one or more operations based on the input detected by the first electronic device 101a, optionally producing a delay between when the first electronic device 101a responds to the input performed by the hand 403 of the first user 402 and when the second electronic device 101b and the third electronic device 101c perform one or more operations based on the input detected by the first electronic device 101a (e.g., which further produces a delay in each user's perception of the interaction).

To reduce the delay discussed above, one or more of the other electronic devices (e.g., the second electronic device 101b and/or the third electronic device 101c) may utilize computer vision techniques (e.g., object detection and/or tracking), in addition to the data transmitted by the first electronic device 101a, to infer and/or predict an outcome of the input being detected by the first electronic device 101a. For example, as shown in FIG. 4H, when the first electronic device 101a is detecting the air pinch gesture performed by the hand 403 of the first user 402, the third electronic device 101c also detects (e.g., using external image sensors 114b-iii and 114c-iii) the first user 402 perform the air pinch gesture using the hand 403 in three-dimensional environment 450C presented via display 120c of the third electronic device 101c. Additionally, the third electronic device 101c may detect the hand 403 of the first user 402 move leftward relative to the body of the first user 402 (e.g., corresponding to movement of the hand 403 away from the viewpoint of the third electronic device 101c) in the three-dimensional environment 450C. In some examples, the third electronic device 101c (e.g., and/or the second electronic device 101b) may thus utilize the detected movement of the hand 403 to anticipate and/or infer the outcome of the input detected by the first electronic device 101a, as discussed in more detail below. In some examples, because the second electronic device 101b is non-collocated with the first electronic device 101a and the third electronic device 101c in the physical environment 400, the third electronic device 101c may transmit data corresponding to the detected movement of the hand 403 to the second electronic device 101b, which enables the second electronic device 101b to anticipate and/or infer the outcome of the input detected by the first electronic device 101a.

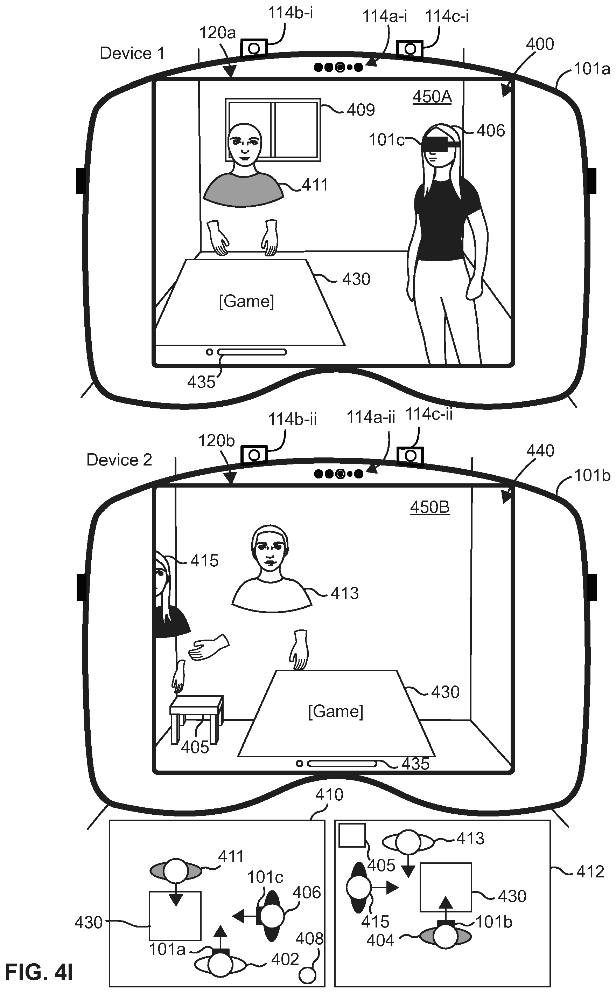

In some examples, as shown in FIG. 4I, in response to detecting the input performed by the hand 403 of the first user 402, the first electronic device 101a triggers spatial refinement as similarly discussed above. For example, as shown in FIG. 4I, the first electronic device 101a moves the virtual object 430 and the avatar 411 corresponding to the second user 404 (e.g., by an equal amount) leftward in the three-dimensional environment 450A relative to the viewpoint of the first electronic device 101a in accordance with the leftward movement of the hand 403 in FIG. 4H. Additionally, as shown in FIG. 4I, the first electronic device 101a forgoes updating presentation of the third user 406 in the three-dimensional environment 450A (e.g., because spatial refinement applies only to virtual content displayed in the shared three-dimensional environment).

In some examples, when spatial refinement is triggered at the first electronic device 101a, the movement of the virtual object 430 and the avatar 411 in the three-dimensional environment 450A is applied only to the avatar 413 corresponding to the first user 402 and the avatar 415 corresponding to the third user 406 in the three-dimensional environment 450B at the second electronic device 101b. For example, as shown in FIG. 4I, the second electronic device 101b moves the avatars 413 and 415 (e.g., by an equal amount) leftward in the three-dimensional environment 450B, without moving the virtual object 430, relative to the viewpoint of the second electronic device 101b in accordance with the input provided by the first user 402 at the first electronic device 101a, as reflected in the overhead view 412. Accordingly, as illustrated via the overhead views 410 and 412 in FIG. 4I, spatial truth from the viewpoints of the first electronic device 101a, the second electronic device 101b, and the third electronic device 101c is maintained following the input provided by the first user 402 (e.g., the first user 402 sees, via the first electronic device 101a, the avatar 411 corresponding to the second user 404 to their left and the second user 404 sees, via the second electronic device 101b, the avatar 413 corresponding to the first user 402 and the avatar 415 corresponding to the third user 406 to their left).

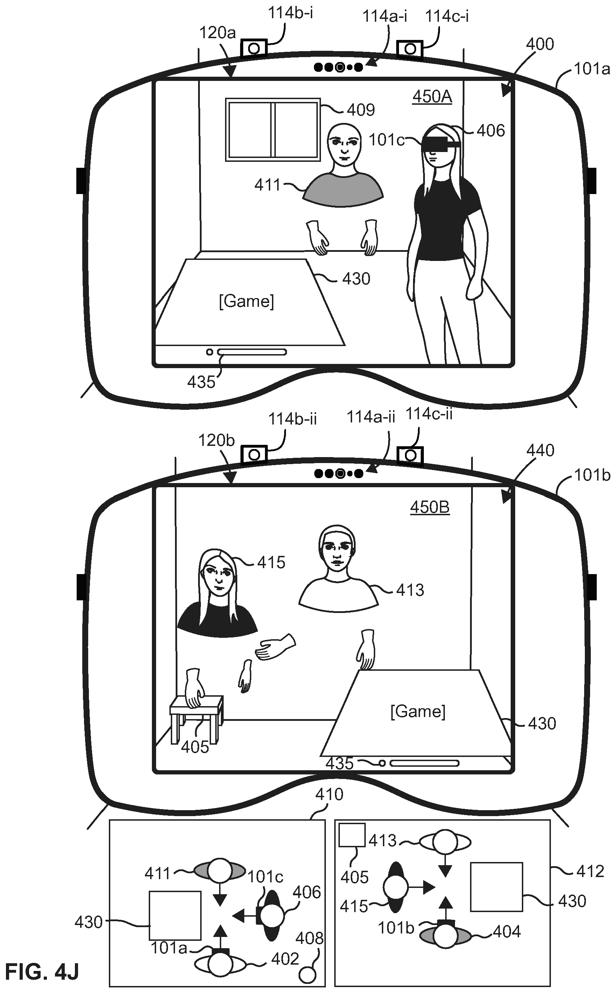

Alternatively, in some examples, as shown in FIG. 4J, in response to detecting the input performed by the hand 403 of the first user 402 in FIG. 4H, the first electronic device 101a moves the virtual object 430 in the three-dimensional environment 450A in accordance with the input (e.g., but does not trigger spatial refinement as opposed to above). For example, as shown in FIG. 4J, the first electronic device 101a moves the virtual object 430 leftward in the three-dimensional environment 450A relative to the viewpoint of the first electronic device 101a in accordance with the leftward movement of the hand 403 in FIG. 4H, without moving the avatar 411 and without updating presentation of the third user 406 in the three-dimensional environment 450A, as illustrated in the overhead view 410. Additionally, as shown in FIG. 4J, when the first electronic device 101a moves the virtual object 430 in accordance with the input provided by the hand 403, the second electronic device 101b also moves the virtual object 430. For example, as shown in FIG. 4J, the second electronic device 101b moves the virtual object 430 rightward in the three-dimensional environment 450B relative to the viewpoint of the second electronic device 101b, which reflects the leftward movement of the virtual object 430 in the three-dimensional environment 450A at the first electronic device 101a. Further, the second electronic device 101b forgoes moving the avatar 413 corresponding to the first user 402 and the avatar 415 corresponding to the third user 406 in the three-dimensional environment 450B. As illustrated in the overhead views 410 and 412, the alternative response illustrated in FIG. 4J also enables spatial truth to be maintained from the viewpoints of the first electronic device 101a, the second electronic device 101b, and the third electronic device 101c following the input provided by the first user 402 (e.g., the first user 402 continues to see, via the first electronic device 101a, the avatar 411 corresponding to the second user 404 across from them and the third user 406 to their right, and the second user 404 continues to see, via the second electronic device 101b, the avatar 413 corresponding to the first user 402 across from them and the avatar 415 corresponding to the third user 406 to their left).

Accordingly, as outlined above, facilitating movement of a shared virtual object in a shared three-dimensional environment within a multi-user communication session based on whether users in the multi-user communication session are collocated or non-collocated enables spatial truth to be maintained among the viewpoints of the users in the multi-user communication session, which improves user interaction and experience of the shared virtual object. Attention is now directed to examples of moving and/or repositioning a shared virtual object in a shared three-dimensional environment based on activation of one or more modes that control movement of the shared virtual object in the shared three-dimensional environment.

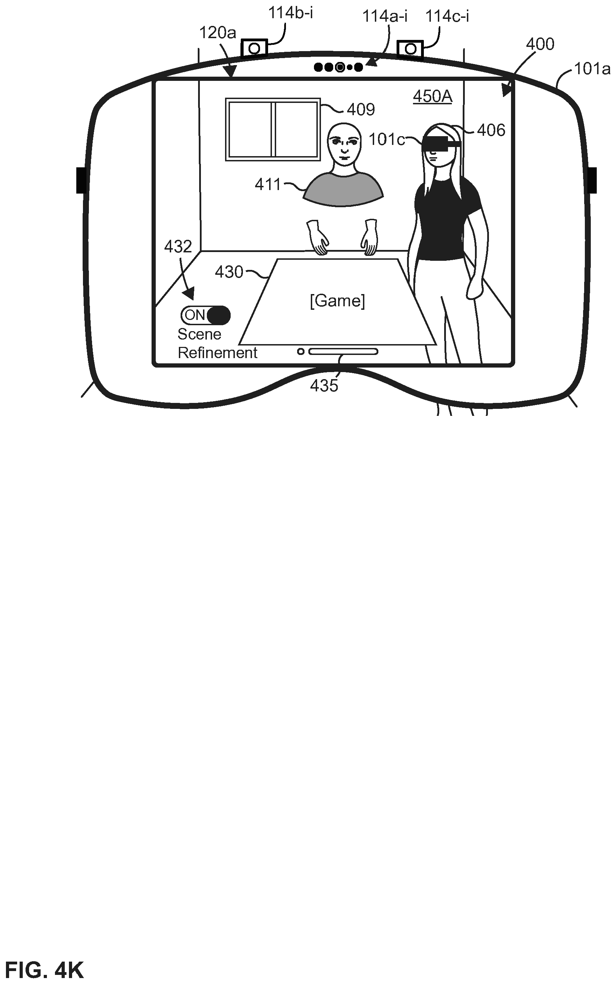

In some examples, the movement of the virtual object 430 in the shared three-dimensional environment is defined according to one or more (e.g., user-selected) modes. In some examples, the one or more modes include a first mode that, when activated, triggers spatial refinement when the virtual object 430 is moved in the shared three-dimensional environment (e.g., in response to detecting input directed to the virtual object 430). For example, as shown in FIG. 4K, the virtual object 430 may be displayed with toggle 432 that is selectable to activate (or deactivate) the first mode of movement. In the example of FIG. 4K, the first mode is active, as indicated by the toggle 432 in the three-dimensional environment 450A, indicating that, in response to detecting input corresponding to a request to move the virtual object 430, such as the input described above, the first electronic device 101a triggers spatial refinement when moving the virtual object 430, such as the movement of the virtual object 430 discussed above with reference to FIG. 4I. Alternatively, if the first mode is not active, the first electronic device 101a optionally does not trigger spatial refinement in the three-dimensional environment 450A in response to detecting input corresponding to a request to move the virtual object 430, such as the movement of the virtual object 430 discussed above with reference to FIG. 4J. In some examples, the toggle 432 is displayed with the virtual object 430 in response to detecting an input corresponding to a request to display the toggle 432. For example, the first electronic device 101a displays the toggle 432 in the three-dimensional environment 450A in response to detecting a selection of (e.g., an air pinch gesture directed to) the grabber bar 435 of the virtual object 430 (e.g., without detecting a request to move the virtual object 430, such as movement of the hand while in the pinch hand shape). It should be noted that the first mode may be activated or deactivated by any of the participants in the multi-user communication session, such as any of the first user 402, the second user 404, and the third user 406 (e.g., via input detected by their respective electronic devices).

In some examples, the one or more modes include a second mode that, when activated, triggers private movement when the virtual object 430 is moved in the shared three-dimensional environment (e.g., in response to detecting input directed to the virtual object 430). In some examples, the private movement of the virtual object 430 is similar to movement of a private object, such as private application window 330 in FIG. 3, despite the virtual object 430 being a shared virtual object, as discussed in more detail below.

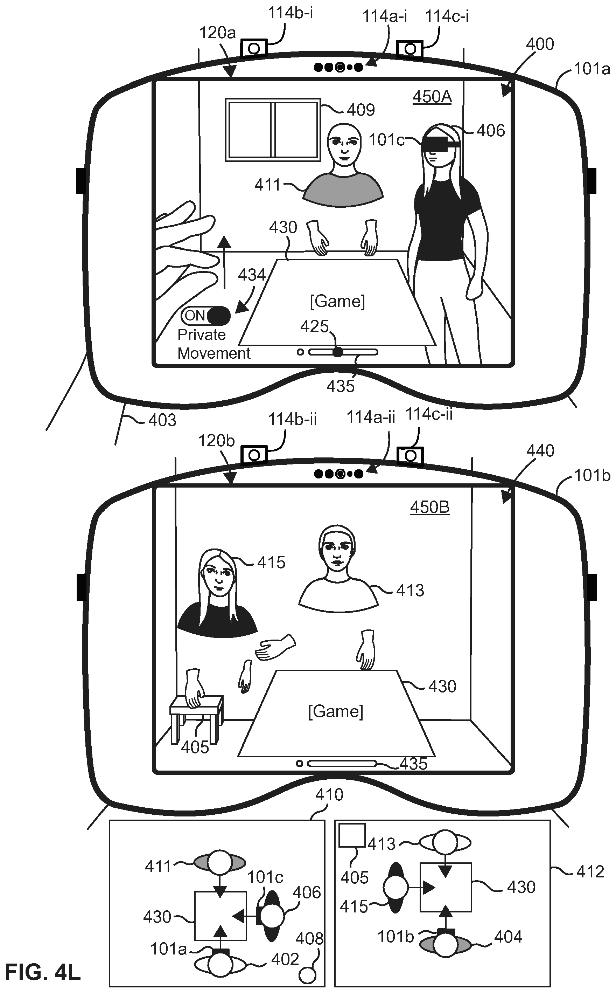

In some examples, as shown in FIG. 4L, the virtual object 430 may be displayed with toggle 434 that is selectable to activate (or deactivate) the second mode of movement. In the example of FIG. 4L, the second mode is active, as indicated by the toggle 434 in the three-dimensional environment 450A, indicating that, in response to detecting input corresponding to a request to move the virtual object 430, the first electronic device 101a moves the virtual object 430 privately for the first user 402, as discussed below. In some examples, the toggle 434 is displayed with the virtual object 430 in response to detecting an input corresponding to a request to display the toggle 434. For example, the first electronic device 101a displays the toggle 434 in the three-dimensional environment 450A in response to detecting a selection of (e.g., an air pinch gesture directed to) the grabber bar 435 of the virtual object 430 (e.g., without detecting a request to move the virtual object 430, such as movement of the hand while in the pinch hand shape). It should be noted that, as similarly discussed above, the second mode may be activated or deactivated by any of the participants in the multi-user communication session, such as any of the first user 402, the second user 404, and the third user 406 (e.g., via input detected by their respective electronic devices).

In FIG. 4L, while the second mode of movement is active and while the first electronic device 101a, the second electronic device 101b and the third electronic device 101c are in the multi-user communication session, the first electronic device 101a detects an input corresponding to a request to move the virtual object 430 in the three-dimensional environment 450A. For example, as shown in FIG. 4L, the first electronic device 101a detects an air pinch gesture performed by the hand 403 of the first user 402, optionally while the gaze 425 is directed to the grabber bar 435, followed by movement of the hand forward in space (e.g., away from the body of the first user 402).

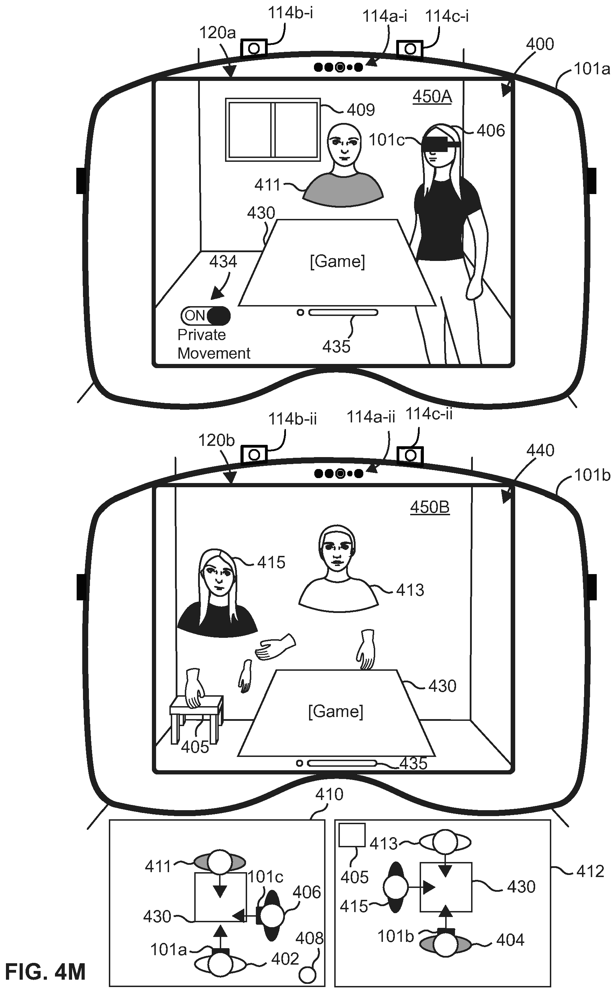

In some examples, as shown in FIG. 4M, in response to detecting the input provided by the hand 403, the first electronic device 101a moves the virtual object 430 in the three-dimensional environment 450A in accordance with the input. For example, as shown in FIG. 4M, the first electronic device 101a moves the virtual object 430 away from the viewpoint of the first electronic device 101a in the three-dimensional environment 450A in accordance with the movement of the hand 403 forward in space, as illustrated in the overhead view 410. In some examples, because the second mode of movement is active (e.g., private movement), the first electronic device 101a moves the virtual object 430 without performing spatial refinement. For example, as shown in FIG. 4M, the first electronic device 101a forgoes moving the avatar 411 corresponding to the second user 404 and forgoes updating presentation of the third user 406 in the three-dimensional environment 450A when moving the virtual object 430 is moved in the three-dimensional environment 450A. Additionally, as shown in FIG. 4M, because the second mode of movement is active when the input discussed above is detected by the first electronic device 101a, the movement of the virtual object 430 is private to the first user 402. In other words, the movement of the virtual object 430 is only perceivable by the first user 402 from the viewpoint of the first electronic device 101a in the three-dimensional environment 450A. Accordingly, as illustrated in the overhead view 412, the second electronic device 101b forgoes updating presentation of the three-dimensional environment 450B in response to the input detected by the first electronic device 101a. For example, the second electronic device 101b forgoes moving the virtual object 430 in the three-dimensional environment 450B in accordance with the input detected by the first electronic device 101a.

It should be understood that, while the second mode (e.g., private mode) is active for the virtual object 430, additional or alternative interactions directed to the virtual object 430, other than movement, are also similarly private to a respective user performing the interactions. For example, inputs for rotating and/or resizing the virtual object 430 in the three-dimensional environment 450A would similarly be private to the first user 402 of the first electronic device 101a if the second mode is active.

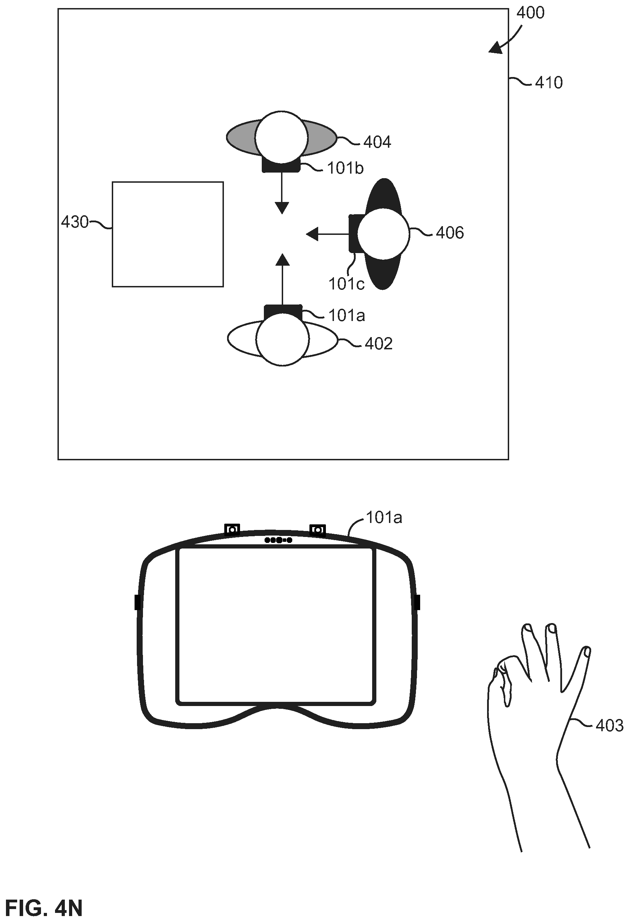

FIGs. 4N-4T illustrate example interactions within a multi-user communication session that includes collocated users. As shown in the overhead view 410, a first user 402 of a first electronic device 101a, a second user 404 of a second electronic device 101b, and a third user 406 of a third electronic device 101c are optionally in a multi-user communication session. In some examples, as illustrated in the overhead view 410 and as previously described herein, the first user 402 (e.g., and the first electronic device 101a), the second user 404 (e.g., and the second electronic device 101b), and the third user 406 (e.g., and the third electronic device 101c) are collocated in the physical environment 400 (e.g., corresponding to the physical environment 400 described above). Accordingly, as similarly discussed above, views of a shared three-dimensional environment (e.g., that includes the physical environment 400) are provided to (e.g., are visible to) the first user 402, the second user 404, and the third user 406 from the unique viewpoints of the first electronic device 101a, the second electronic device 101b, and the third electronic device 101c, respectively. Additionally, as shown in the overhead view 410 in FIG. 4N, the shared three-dimensional environment includes virtual object 430 (e.g., a game user interface associated with a gaming application), as similarly discussed above.

In some examples, while in the multi-user communication session that includes collocated users, an electronic device facilitates movement of a virtual object according to a user-centric model of movement, as discussed below. In FIG. 4N, while displaying the virtual object 430 in the shared three-dimensional environment, the first electronic device 101a detects an input corresponding to initiation of movement of the virtual object 430. For example, as shown in FIG. 4N, the first electronic device 101a detects an air pinch gesture provided by hand 403 of the first user 402 (e.g., and optionally while the gaze of the first user 402 is directed to the virtual object 430).

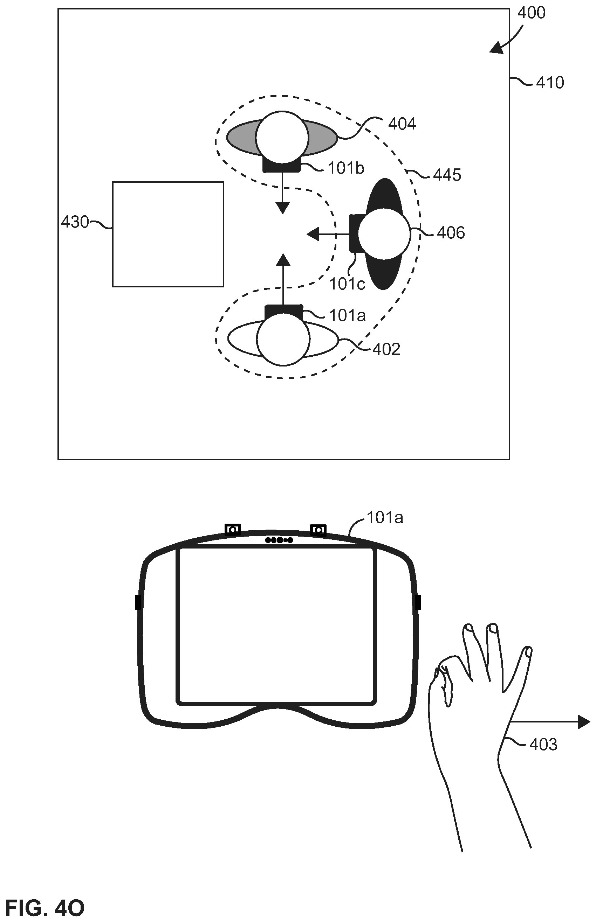

In some examples, facilitating movement of a virtual object according to a user-centric model of movement includes grouping together the collocated users (e.g., based on the viewpoints of their respective electronic devices) in the multi-user communication session. For example, as shown in the overhead view 410 in FIG. 4O, a boundary 445 is defined around the first user 402, the second user 404, and the third user 406 (e.g., based on the positions of the viewpoints of the first electronic device 101a, the second electronic device 101b, and the third electronic device 101c) in the physical environment 400. In some examples, as indicated in FIG. 4O, the boundary 445 corresponds to a "best fit" grouping of the collocated users in the multi-user communication session. For example, as illustrated in the overhead view in FIG. 4O, a size (e.g., including dimensionality), shape, and/or location of the boundary 445 is based on the positions of the first user 402, the second user 404, and the third user 406 in the physical environment 400.

In some examples, the boundary 445 is determined by the electronic devices associated with the first user 402, the second user 404, and/or the third user 406 based on position and pose data provided by the electronic devices. For example, the first electronic device 101a, the second electronic device 101b, and/or the third electronic device 101c may exchange data corresponding to locations of the electronic devices (e.g., and thereby the users) in the physical environment 400 and/or data corresponding to orientations (e.g., including forward look directions) of the electronic devices (e.g., and thereby the users) in the physical environment 400. In some examples, as similarly discussed herein, the position and/or pose data is determined by the electronic devices relative to a reference or center of the spatial group of the users and/or relative to each other.

In FIG. 4O, the first electronic device 101a detects movement of the hand 403 in space while maintaining the air pinch gesture provided in FIG. 4N. For example, as shown in FIG. 4O, the first electronic device 101a detects movement of the hand 403 rightward relative to the viewpoint of the first electronic device 101a corresponding to a request to move the virtual object 430 rightward in the shared three-dimensional environment from the viewpoint of the first electronic device 101a.

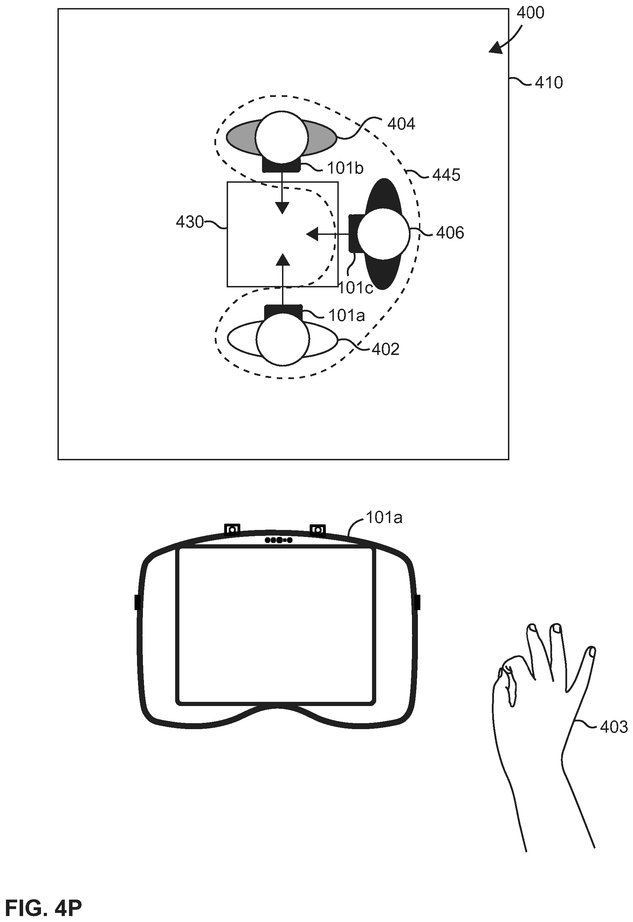

In some examples, as shown in FIG. 4P, in response to detecting the movement of the hand 403, the first electronic device 101a moves the virtual object 430 rightward in the shared three-dimensional environment from the viewpoint of the first electronic device 101a. Particularly, as shown in the overhead view 410 in FIG. 4P, the first electronic device 101a moves the virtual object 430 toward the group of collocated users in the shared three-dimensional environment. In some examples, facilitating movement of a virtual object according to a user-centric model of movement includes moving the virtual object relative to the group of collocated users (e.g., defined by and/or based on the boundary 445). For example, movement of a virtual object according to the user-centric model of movement is limited by and/or constrained by the boundary 445. In some examples, the degree to which the movement is limited is based on virtual object type. For example, in FIG. 4N, when the input for moving the virtual object 430 is initially detected, the virtual object 430 is an object of a first type. In some examples, an object of the first type is or includes a virtual object that has a horizontal orientation in the shared three-dimensional environment, including two-dimensional and three-dimensional (e.g., volumetric) virtual objects having a horizontal orientation and/or surface (such as a horizontal top surface or bottom surface for a three-dimensional virtual object). In the example of FIG. 4P, because the virtual object 430 is an object of the first type, in response to detecting the movement of the hand 403 of the first user 402 discussed above, the first electronic device 101a moves the virtual object 430 in accordance with the movement of the hand 403, without specifically limiting the movement of the virtual object 430 to outside of the boundary 445. For example, as shown in the overhead view 410 in FIG. 4P, the first electronic device 101a moves the virtual object 430 at least partially within the boundary 445 because the virtual object 430 is a horizontally-oriented virtual object. In some examples, as described below, for movement of virtual objects that are of a second type, different from the first type, the movement of the virtual object is limited to remaining outside of the boundary 445 in the shared three-dimensional environment.

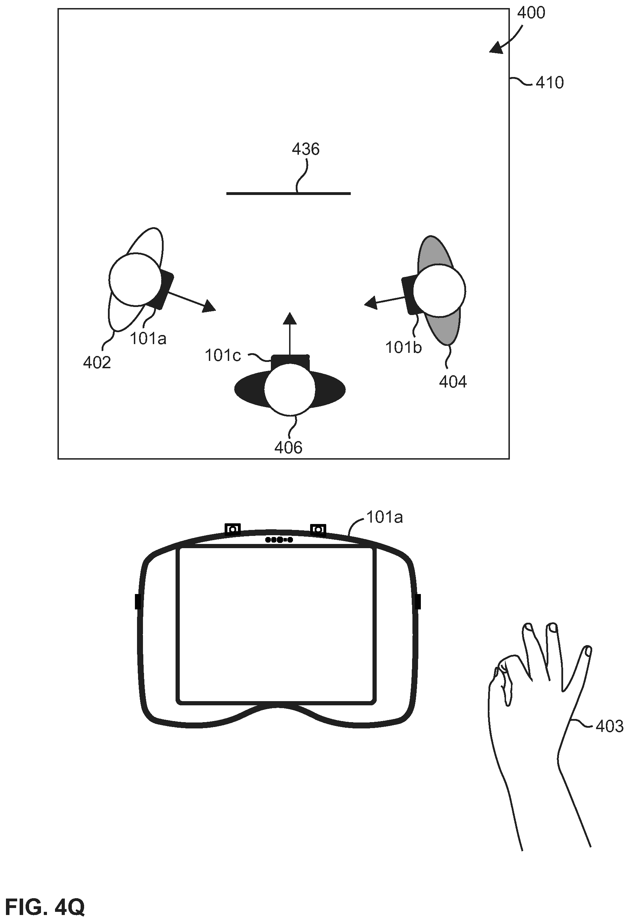

FIG. 4Q illustrates an example of a multi-user communication session that includes collocated users and a virtual object of the second type (e.g., a vertically-oriented object), different from the first type (e.g., a horizontally-oriented object) discussed above. For example, as shown in the overhead view 410 in FIG. 4Q, the multi-user communication session includes the first user 402 (e.g., and the first electronic device 101a), the second user 404 (e.g., and the second electronic device 101b), and the third user 406 (e.g., and the third electronic device 101c) that are collocated in the physical environment 400. Additionally, as shown in the overhead view 410 in FIG. 4Q, the multi-user communication session includes shared virtual content in the shared three-dimensional environment of the multi-user communication session. For example, as illustrated in the overhead view 410, the shared three-dimensional environment includes virtual object 436, which corresponds to a vertically-oriented virtual object, as discussed in more detail below.

In FIG. 4Q, while displaying the virtual object 436 in the shared three-dimensional environment, the first electronic device 101a detects an input corresponding to initiation of movement of the virtual object 436. For example, as shown in FIG. 4Q, the first electronic device 101a detects an air pinch gesture provided by hand 403 of the first user 402 (e.g., and optionally while the gaze of the first user 402 is directed to the virtual object 436).

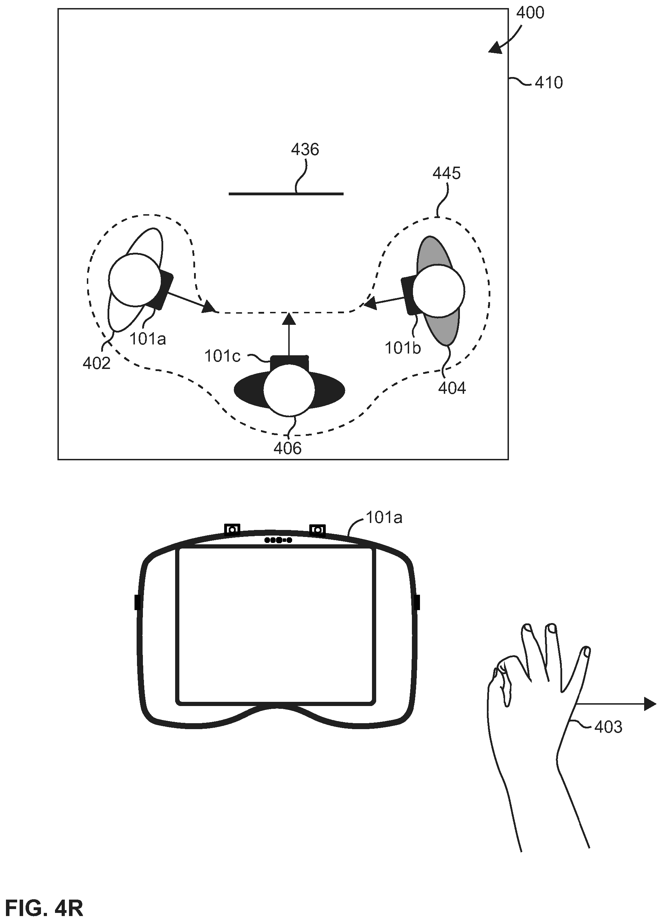

In some examples, as shown in FIG. 4R, as similarly described above, movement of the virtual object 436 is initiated within the multi-user communication session according to the user-centric model of movement (optionally because the multi-user communication session includes collocated users as previously discussed above). Accordingly, in FIG. 4R, as previously discussed above, a boundary 445 is defined around the collocated users in the multi-user communication session. For example, as illustrated in the overhead view 410 in FIG. 4R, the boundary 445 is defined based on the positions of the viewpoints of the first electronic device 101a, the second electronic device 101b, and the third electronic device 101c in the physical environment 400.

In FIG. 4R, the first electronic device 101a detects movement of the hand 403 in space while maintaining the air pinch gesture provided in FIG. 4Q. For example, as shown in FIG. 4R, the first electronic device 101a detects movement of the hand 403 rightward relative to the viewpoint of the first electronic device 101a corresponding to a request to move the virtual object 436 rightward in the shared three-dimensional environment from the viewpoint of the first electronic device 101a.

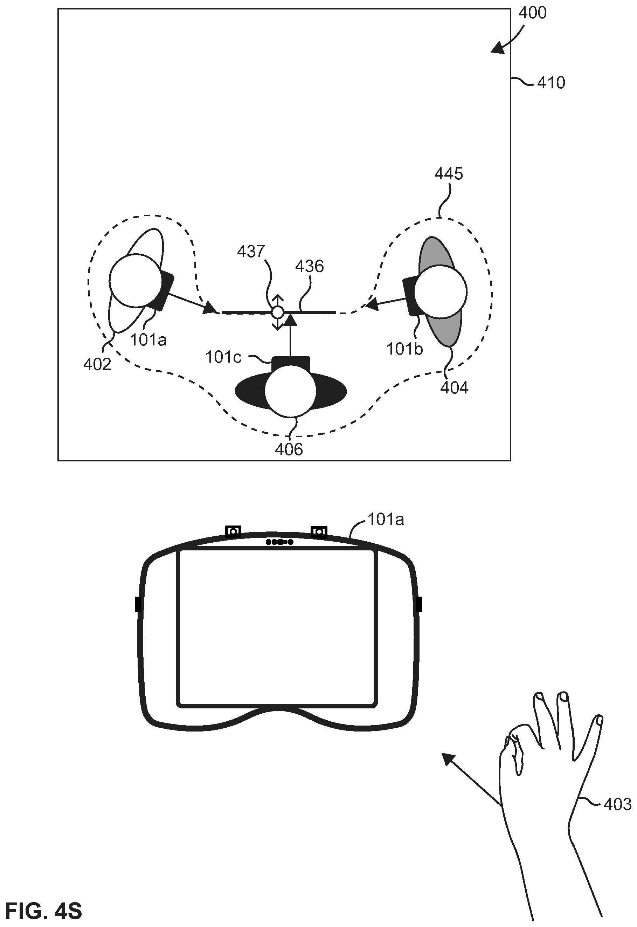

In some examples, as shown in FIG. 4S, in response to detecting the movement of the hand 403, the first electronic device 101a moves the virtual object 436 rightward in the shared three-dimensional environment from the viewpoint of the first electronic device 101a (e.g., and toward the viewpoint of the third electronic device 101c). Particularly, as shown in the overhead view 410 in FIG. 4S, the first electronic device 101a moves the virtual object 436 toward the group of collocated users in the shared three-dimensional environment. In some examples, as previously discussed above, facilitating movement of a virtual object according to a user-centric model of movement includes moving the virtual object relative to the group of collocated users (e.g., defined by and/or based on the boundary 445). In some examples, because the virtual object 436 is an object having a vertical orientation (e.g., a virtual window or user interface that has a vertically-oriented front-facing surface), when the input for moving the virtual object 436 is initially detected in FIG. 4Q, the virtual object 436 is determined to be (e.g., is categorized as) an object of a second type, different from the first type of object described above (e.g., a horizontally-oriented virtual object). In the example of FIG. 4S, because the virtual object 436 is an object of the second type (e.g., and not the first type discussed above), in response to detecting the movement of the hand 403 of the first user 402 discussed above, the first electronic device 101a moves the virtual object 436 in accordance with the movement of the hand 403 (e.g., toward the group of collocated users), but limits (e.g., ceases) the movement of the virtual object 436 to being outside of the boundary 445. For example, as shown in the overhead view 410 in FIG. 4S, the first electronic device 101a moves the virtual object 436 to a location in the shared three-dimensional environment that is at or outside of the boundary 445 because the virtual object 436 is a vertically-oriented virtual object, despite and/or even if the movement of the hand 403 of the first user 402 corresponds to movement of the virtual object 436 to a location that is within the boundary 445.

In some examples, when the virtual object 436 is moved to the boundary 445 in FIG. 4S, the virtual object 436 "snaps" to a point on the boundary 445. For example, as illustrated in the overhead view 410, the first electronic device 101a aligns a center of the virtual object 436 to point 437 on the boundary 445 (e.g., because the movement of the hand 403 corresponds to movement of the virtual object 436 to a location that is within the boundary 445). In some examples, the movement of the virtual object 436 locks (e.g., ceases) at the boundary 445, such that the virtual object 436 is prevented from being moved to within the boundary 445. In some examples, the location at which the virtual object 436 is displayed in response to the movement input is a location that is offset (e.g., by a predetermined distance) from the boundary 445. Additionally, as shown in FIG. 4S, when the center of the virtual object 436 is aligned to the point 437 on the boundary 445, the virtual object 436 is normal to the point 437, as indicated by the double-headed arrow in the overhead view 410. In some examples, the orientation of the virtual object 436 is normal to a head or torso forward direction of the user providing the movement input, such as the forward direction of the first user 402.

In FIG. 4S, the first electronic device 101a detects further movement directed to the virtual object 436 in the shared three-dimensional environment. For example, as shown in FIG. 4S, the first electronic device 101a detects an air pinch and drag gesture directed to the virtual object 436 in the shared three-dimensional environment, such as an air pinch provided by the hand 403 followed by movement of the hand 403 in space relative to the viewpoint of the first electronic device 101a. Alternatively, in some examples, the movement input directed to the virtual object 436 is or includes an air toss or flick gesture provided by the hand 403 of the first user 402. For example, the first electronic device 101a detects an air pinch gesture provided by the hand 403, followed by a "throwing" or "tossing" motion by the hand 403 in the direction of the arrow illustrated in FIG. 4S. In either example, the first electronic device 101a optionally also detects the gaze of the first user 402 directed to the virtual object 436 during the input.

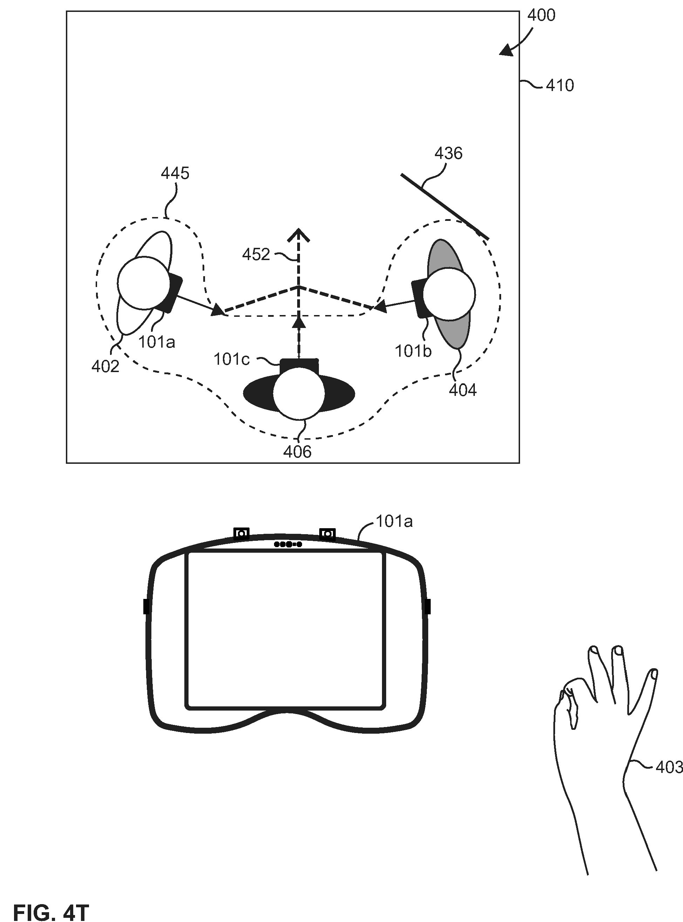

In some examples, as shown in FIG. 4T, in response to detecting the movement input directed to the virtual object 436, the first electronic device 101a moves the virtual object 436 in accordance with and/or based on the movement input. For example, as shown in the overhead view 410 in FIG. 4T, the first electronic device 101a moves the virtual object 436 rightward in the shared three-dimensional environment relative to the group of collocated users, such that the virtual object 436 is located farther from the viewpoint of the first electronic device 101a and closer to the viewpoint of the second electronic device 101b. Additionally, as similarly discussed above, as illustrated in the overhead view 410 in FIG. 4T, when the virtual object 436 is moved in the shared three-dimensional environment according to the user-centric model of movement, the virtual object 436 "snaps" to or locks to a second point on the boundary 445. For example, as similarly discussed above, the first electronic device 101a aligns the center of the virtual object 436 to the second point on the boundary 445 that is in the direction of the movement of the virtual object 436.

In some examples, moving the virtual object 436 in accordance with the user-centric model of movement includes updating an orientation of the virtual object 436 in the shared three-dimensional environment. For example, as illustrated in the overhead view 410 in FIG. 4T, the first electronic device 101a rotates the virtual object 436 (e.g., about a vertical axis through a center of the virtual object 436) when the virtual object 436 is moved in the shared three-dimensional environment. In some examples, an amount (e.g., in degrees) by which the virtual object 436 is rotated in the shared three-dimensional environment is based on an average forward direction of the first electronic device 101a (e.g., and the first user 402), the second electronic device 101b (e.g., and the second user 404), and the third electronic device 101c (e.g., and the third user 406) in the physical environment 400. For example, as indicated in the overhead view 410 in FIG. 4T, average forward direction 452 is determined based on averaging the forward directions (e.g., the orientations) of the first electronic device 101a, the second electronic device 101b, and the third electronic device 101c. In some examples, the front-facing surface of the virtual object 436 is angled to face toward (e.g., be normal or nearly normal to) the average forward direction 452, as illustrated in the overhead view 410 in FIG. 4T.

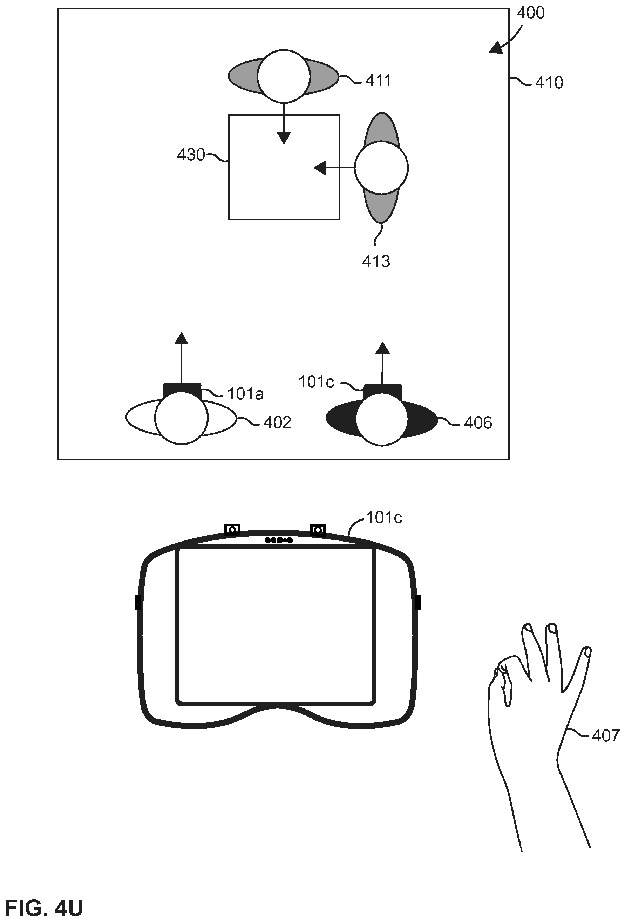

FIGs. 4U-4AA illustrate example interactions within a multi-user communication session that includes collocated and non-collocated users. As shown in the overhead view 410, the first user 402 of the first electronic device 101a discussed above and the third user 406 of the third electronic device 101c discussed above, who are collocated in the physical environment 400, are optionally in a multi-user communication session with two non-collocated users (e.g., users who are not located in the physical environment 400) who are visually represented in the overhead view 410 as avatars 411 and 413 (e.g., though it should be understood that alternative representations are possible, such as those described herein above). In some examples, as similarly discussed above, views of a shared three-dimensional environment (e.g., that includes the physical environment 400) are provided to (e.g., are visible to) the first user 402 and the third user 406 from the unique viewpoints of the first electronic device 101a and the third electronic device 101c, respectively. Additionally, as shown in the overhead view 410 in FIG. 4U, the shared three-dimensional environment includes virtual object 430 (e.g., a game user interface associated with a gaming application), as similarly discussed above.

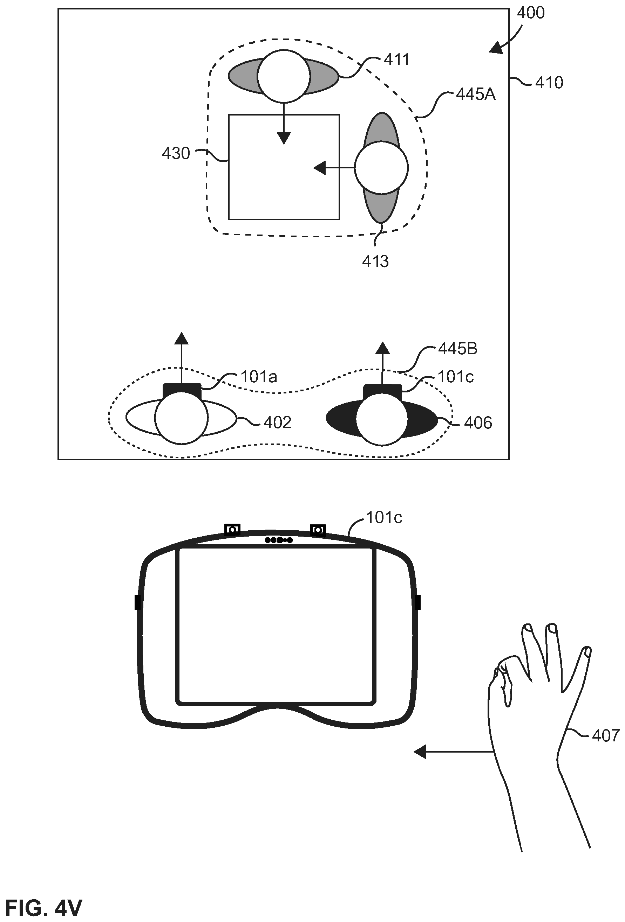

In some examples, while in the multi-user communication session that includes collocated and non-collocated users, an electronic device facilitates movement of a virtual object according to the user-centric model of movement discussed above. For example, in FIG. 4U, the third electronic device 101c detects an input corresponding to a request to initiate movement of the virtual object 430 in the shared three-dimensional environment from the viewpoint of the third electronic device 101c, such as via an air pinch gesture provided by hand 407 of the third user 406 as similarly discussed above. In some examples, as shown in FIG. 4V, in response to detecting the input provided by the hand 407 of the third user 406, the virtual content that is displayed in the shared three-dimensional environment of the collocated users are grouped together relative to the collocated users. For example, as indicated in the overhead view 410 in FIG. 4V, relative to the collocated first user 402 and third user 406, the virtual content of the shared three-dimensional environment includes the virtual object 430 and the avatars 411 and 413. Accordingly, as shown in the overhead view 410 via first boundary 445A, the virtual object 430 and the avatars 411 and 413 are grouped into a first group in the shared three-dimensional environment. In some examples, the first boundary 445A has one or more characteristics of the boundary 445 described previously above. For example, the first boundary 445A is based on (e.g., has a size and/or shape based on) the positions of the virtual object 430 and the avatars 411 and 413 in the shared three-dimensional environment. Accordingly, as described below, movement input directed to the virtual object 430 optionally causes the virtual object 430 and the avatars 411 and 413 to be moved as a group (e.g., in unison), as defined by the first boundary 445A, in accordance with the movement input, akin to performing scene refinement on the virtual content, as previously discussed herein.

In FIG. 4V, the third electronic device 101c detects movement of the hand 407 while maintaining the air pinch gesture detected in FIG. 4U. For example, as indicated in FIG. 4V, the third electronic device 101c detects the hand 407 move leftward in space relative to the viewpoint of the third electronic device 101c corresponding to a request to move the virtual object 430 leftward in the shared three-dimensional environment from the viewpoint of the third electronic device 101c. In some examples, as described below, movement of the virtual object 430, and thus the avatars 411 and 413 as discussed above, is performed relative to the collocated users in the shared three-dimensional environment. For example, as illustrated in the overhead view 410 in FIG. 4V, the first user 402 and the third user 406 are grouped together as the collocated users in the shared three-dimensional environment, as indicated by second boundary 445B, according to which the virtual object 430 and the avatars 411 and 413 are moved in the shared three-dimensional environment, as discussed below. In some examples, the second boundary 445B has one or more characteristics of the boundary 445 described above. For example, the second boundary 445B is based on (e.g., has a size and/or shape based on) the positions of the viewpoints of the first electronic device 101a and the third electronic device 101c in the physical environment 400.

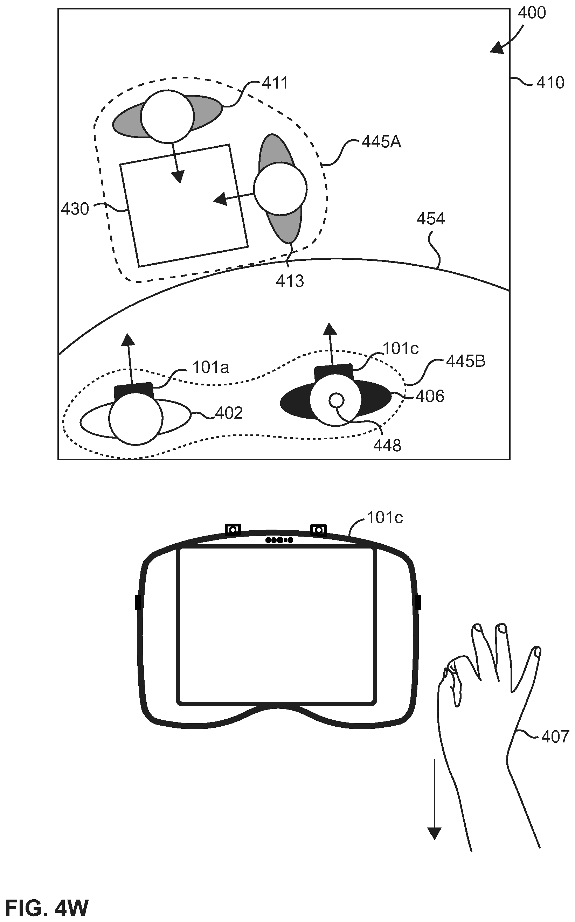

In some examples, as shown in FIG. 4W, in response to detecting the movement of the hand 407, the third electronic device 101c moves the virtual content bounded by the first boundary 445A in the shared three-dimensional environment based on the movement of the hand. In some examples, as indicated in the overhead view 410 in FIG. 4W, the lateral (e.g., leftward) movement of the hand 407 of the third user 406 (e.g., indicated by hand 407 in FIG. 4V) causes the virtual content bounded by the first boundary 445A to be moved radially in the shared three-dimensional environment relative to the viewpoint of the third electronic device 101c in accordance with the user-centric model of movement. For example, in the overhead view 410, the virtual object 430 and the avatars 411 and 413 are moved leftward radially (e.g., counterclockwise), as a group, along a circle or curve that is centered on the third electronic device 101c (e.g., as indicated by center 448). Accordingly, in some examples, as shown in FIG. 4W, the orientations of the virtual object 430 and the avatars 411 and 413 are updated in the shared three-dimensional environment in accordance with the radial (e.g., counterclockwise) movement of the virtual object 430 and the avatars 411 and 413. It should be understood that, in some examples, the center 448 according to which the radial movement is defined is a center of the group of collocated users (e.g., the first user 402 and the third user 406), which optionally corresponds to a center of the second boundary 445B, rather than a center of the electronic device detecting the movement input.

In FIG. 4W, the third electronic device 101c detects a further movement input directed to the virtual object 430 in the shared three-dimensional environment. For example, as indicated in FIG. 4W, the third electronic device 101c detects the hand 407 move toward the viewpoint of the third electronic device 101c (e.g., toward a body of the third user 406) while maintaining the air pinch gesture discussed above.

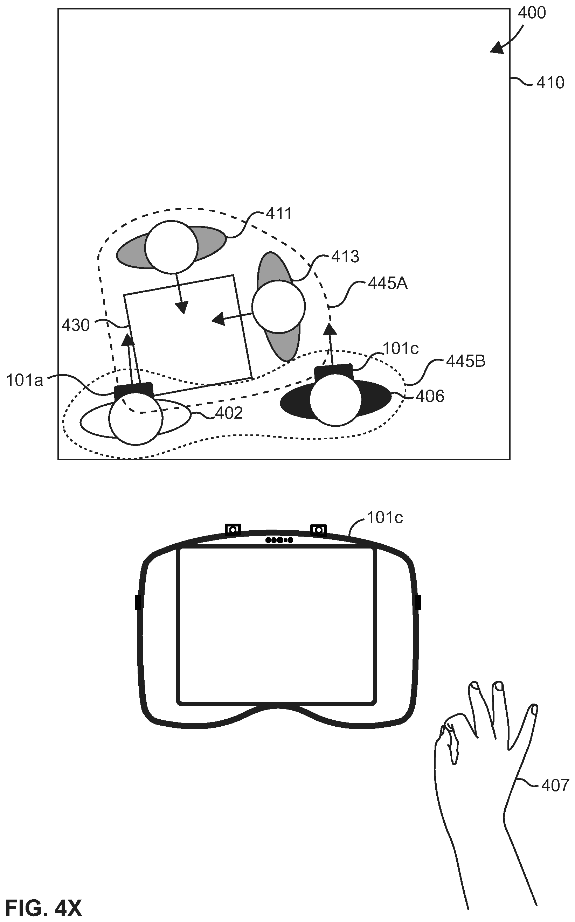

In some examples, as shown in FIG. 4X, in response to detecting the movement of the hand 407, the third electronic device 101c moves the virtual content bounded by the first boundary 445A based on the movement of the hand 407 in the shared three-dimensional environment. For example, as indicated in the overhead view 410, the virtual object 430 and the avatars 411 and 413 are moved as a group (e.g., in unison) toward the group of collocated users (e.g., the first user 402 and the third user 406) in accordance with the movement of the hand 407. In some examples, as similarly discussed above, movement of the virtual content that is bounded by the first boundary 445A relative to the group of collocated users (e.g., the first user 402 and the third user 406) is selectively limited by the second boundary 445B. For example, as similarly described above, shared objects of the first type (e.g., horizontally-oriented objects) are permitted to cross the second boundary 445B while shared object of the second type (e.g., vertically-oriented objects) and avatars are not permitted to cross the second boundary 445B. Accordingly, as illustrated as an example in the overhead view 410 in FIG. 4X, when moving the virtual object 430 and the avatars 411 and 413 in accordance with the movement of the hand 407, an amount of the movement (e.g., a distance of movement) of the virtual object 430 and the avatars 411 and 413 relative to the viewpoints of the first electronic device 101a and the third electronic device 101c is constrained by the second boundary 445B, such that the virtual object 430 is permitted to at least partially cross the second boundary 445B, as shown, but the avatar 413 (and thus the avatar 411) is optionally not permitted to at least partially cross the second boundary 445B. It should be understood that, in the example of FIG. 4X, the movement of the virtual object 430 (e.g., which is an object of the first type as discussed above) into the second boundary 445B ceases once the movement input causes the avatar 413 to reach the second boundary 445B, as illustrated in the overhead view 410.

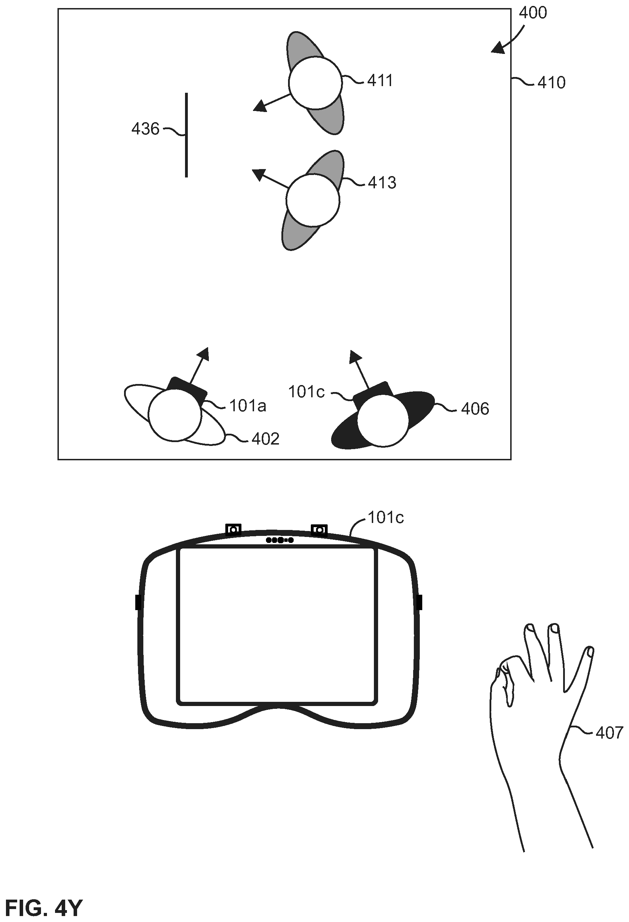

FIG. 4Y illustrates an example of a multi-user communication session that includes collocated and non-collocated users and a virtual object of the second type, different from the first type discussed above. For example, as shown in the overhead view 410 in FIG. 4Y, the multi-user communication session includes the first user 402 (e.g., and the first electronic device 101a) and the third user 406 (e.g., and the third electronic device 101c that are collocated in the physical environment 400), and includes the second user (e.g., represented by the avatar 411) and the fourth user (e.g., represented by the avatar 413) that are non-collocated with the first user 402 and the third user 406 in the physical environment 400. Additionally, as shown in the overhead view 410 in FIG. 4Y, the multi-user communication session includes shared virtual content in the shared three-dimensional environment of the multi-user communication session. For example, as illustrated in the overhead view 410, the shared three-dimensional environment includes virtual object 436, which corresponds to a vertically-oriented virtual object, as discussed in more detail below.

In FIG. 4Y, while displaying the virtual object 436 in the shared three-dimensional environment, the third electronic device 101c detects an input corresponding to initiation of movement of the virtual object 436. For example, as shown in FIG. 4Y, the third electronic device 101c detects an air pinch gesture provided by hand 407 of the third user 406 (e.g., and optionally while the gaze of the third user 406 is directed to the virtual object 436).

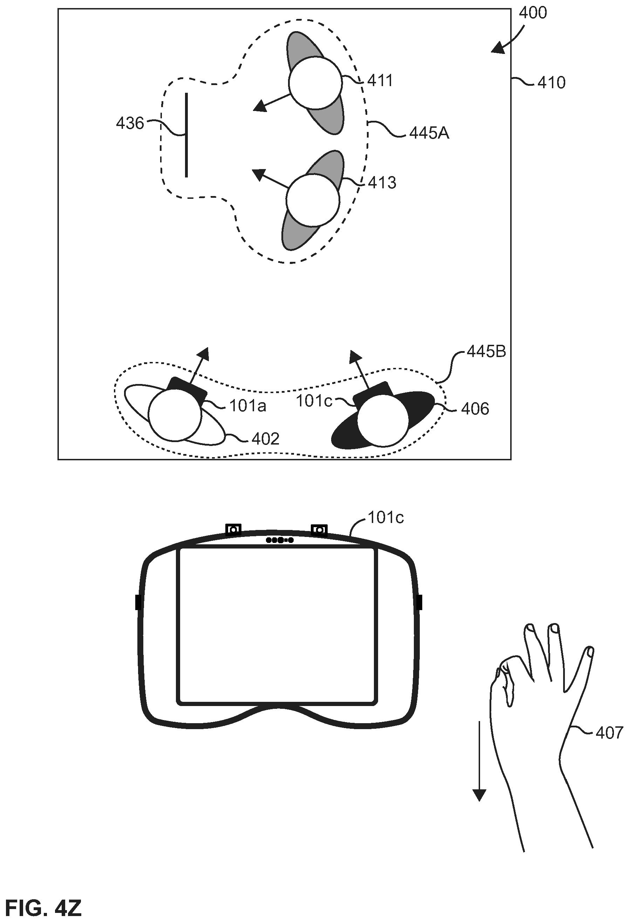

In some examples, as shown in FIG. 4Z, as similarly described above, movement of the virtual content (e.g., the virtual object 436 and the avatars 411 and 413) is initiated within the multi-user communication session according to the user-centric model of movement (optionally because the multi-user communication session includes collocated users as previously discussed above). Accordingly, in FIG. 4Z, as previously discussed above, a first boundary 445A is defined around the virtual content relative to the collocated users in the multi-user communication session. For example, as illustrated in the overhead view 410 in FIG. 4Z, the first boundary 445A is defined based on the positions of the virtual object 436 and the avatars 411 and 413.

In FIG. 4Z the third electronic device 101c detects movement of the hand 407 in space while maintaining the air pinch gesture provided in FIG. 4Y. For example, as shown in FIG. 4Z, the third electronic device 101c detects movement of the hand 407 toward the viewpoint of the third electronic device 101c (e.g., toward the body of the third user 406) corresponding to a request to move the virtual object 436 toward the viewpoint of the third electronic device 101c in the shared three-dimensional environment from the viewpoint of the third electronic device 101c. In some examples, as similarly discussed above, the movement of the hand 407 corresponding to the request to move the virtual object 436 causes the virtual object 436 and the avatars 411 and 413 to be moved in the shared three-dimensional environment. Particularly, as discussed in more detail below, the movement of the virtual content bounded by the first boundary 445A according to the user-centric model of movement is performed relative to the group of collocated users (e.g., the first user 402 and the third user 406), as defined by second boundary 445B. In some examples, the second boundary 445B corresponds to the second boundary 445B described above. For example, as illustrated in the overhead view 410 in FIG. 4Z, the second boundary 445B is defined based on the positions of the viewpoints of the first electronic device 101a and the third electronic device 101c in the physical environment 400.

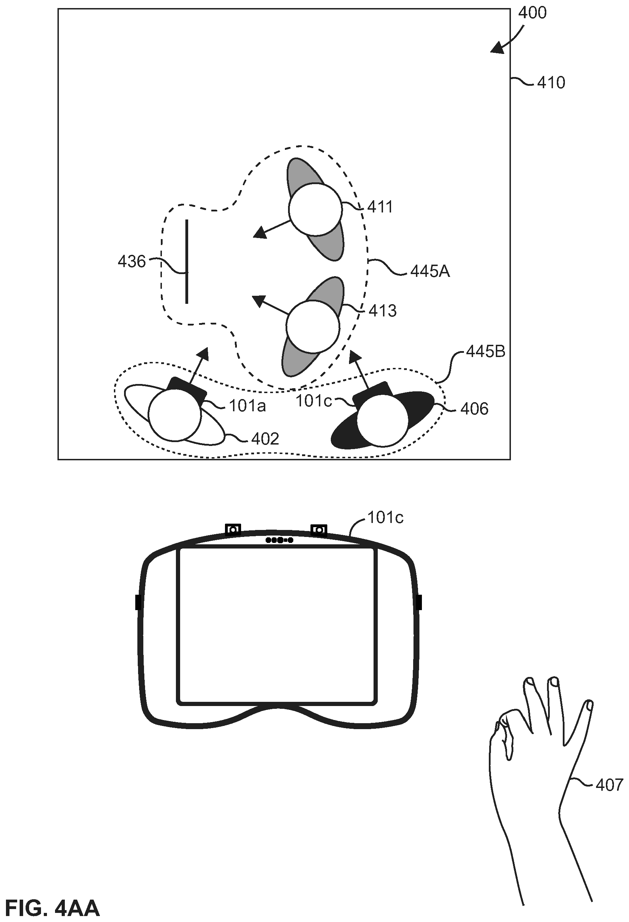

In some examples, as shown in FIG. 4AA, in response to detecting the movement of the hand 407, the third electronic device 101c moves the virtual content bounded by the first boundary 445A based on the movement of the hand 407 in the shared three-dimensional environment. For example, as indicated in the overhead view 410, the virtual object 436 and the avatars 411 and 413 are moved as a group (e.g., in unison) toward the group of collocated users (e.g., the first user 402 and the third user 406) in accordance with the movement of the hand 407. In some examples, as similarly discussed above, movement of the virtual content that is bounded by the first boundary 445A relative to the group of collocated users (e.g., the first user 402 and the third user 406) is selectively limited by the second boundary 445B. For example, as similarly described above, shared objects of the first type (e.g., horizontally-oriented objects) are permitted to cross the second boundary 445B while shared object of the second type (e.g., vertically-oriented objects) and avatars are not permitted to cross the second boundary 445B. Accordingly, as illustrated as an example in the overhead view 410 in FIG. 4X, when moving the virtual object 436 (e.g., which is an object of the second type) and the avatars 411 and 413 in accordance with the movement of the hand 407, an amount of the movement (e.g., a distance of movement) of the virtual object 436 and the avatars 411 and 413 relative to the viewpoints of the first electronic device 101a and the third electronic device 101c is constrained by the second boundary 445B, such that the virtual object 436 and the avatars 411 and 413 are optionally not permitted to at least partially cross the second boundary 445B. It should be understood that, in the example of FIG. 4AA, the movement of the virtual object 436 (e.g., and thus the avatar 411) toward the group of collocated users (e.g., the first user 402 and the third user 406) ceases once the movement input causes the avatar 413 to reach the second boundary 445B, as illustrated in the overhead view 410.

Accordingly, as outlined above, providing one or more user-selectable modes that define movement of a shared virtual object within a multi-user communication session provides users participating in the multi-user communication session more control over interactions directed to the shared virtual object, which helps increase user privacy and therefore improves user experience. Attention is now directed to additional interactions within a multi-user communication session that includes collocated and non-collocated users.

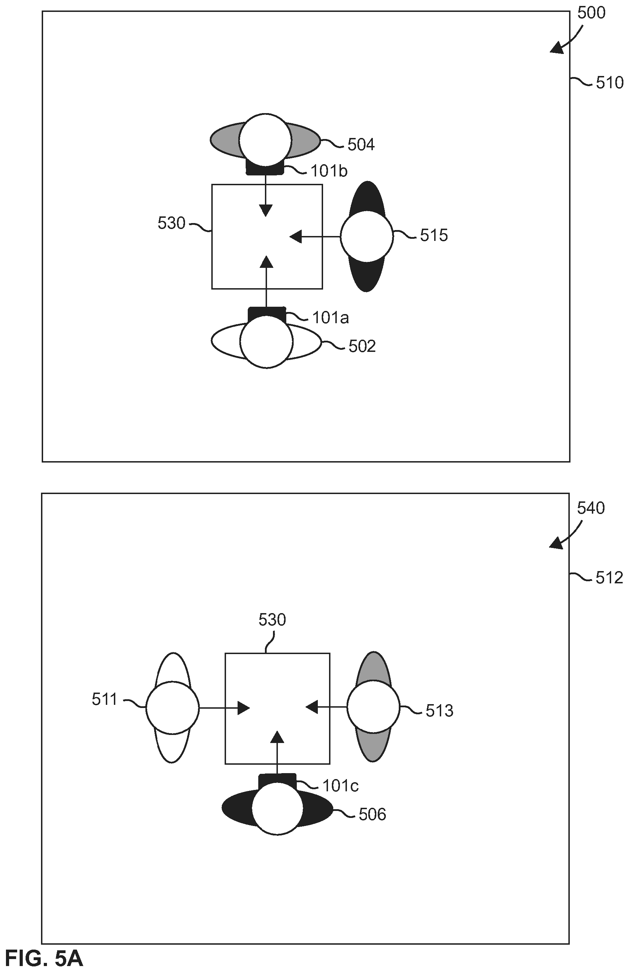

FIGs. 5A-5E illustrate example interactions within a multi-user communication session that includes collocated and non-collocated users according to some examples of the disclosure. In FIG. 5A, first electronic device 101a (e.g., associated with first user 502), second electronic device 101b (e.g., associated with second user 504), and third electronic device 101c (e.g., associated with third user 506) are in a multi-user communication session. In some examples, the first user 502, the second user 504, and the third user 506 correspond to first user 402, second user 404, and third user 406, respectively, of FIGs. 4A-4M.

As shown in overhead view 510 in FIG. 5A, the first electronic device 101a and the second electronic device 101b are collocated in physical environment 500. Additionally, as shown in overhead view 512 in FIG. 5A, the third electronic device 101c is located in physical environment 540, which is different from physical environment 500. Accordingly, as similarly discussed above, the third electronic device 101c is non-collocated with the first electronic device 101a and the second electronic device 101b (e.g., the spatial group that includes the first user 502, the second user 504 and the third user 506 is a hybrid spatial group, as discussed previously above). In some examples, the first electronic device 101a and the second electronic device 101b are thus displaying avatar 515 corresponding to the third user 506, as indicated in the overhead view 510, and the third electronic device 101c is displaying avatar 511 corresponding to the first user 502 and avatar 513 corresponding to the second user 504, as indicated in the overhead view 512. In some examples, the avatars 511, 513, and 515 correspond to avatars 411, 413, and 415, respectively, of FIGs. 4A-4M. Additionally, as shown in FIG. 5A and as similarly discussed above, the shared three-dimensional environment includes virtual object 530, corresponding to a shared virtual object. In some examples, the virtual object 530 corresponds to virtual object 430 discussed above. In FIG. 5A the locations of the viewpoints of the electronic devices 101a, 101b, and 101c and the virtual object 530 in the overhead views 510 and 512 optionally correspond to original locations of the viewpoints and the virtual object 530 in the spatial group.

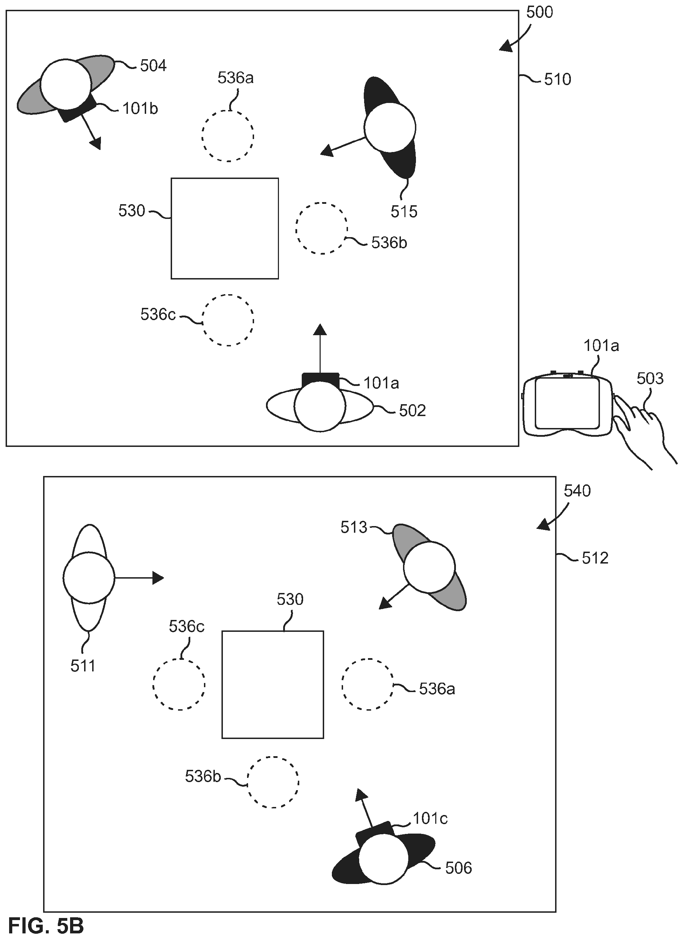

From FIGs. 5A to 5B, the spatial arrangement of the users in the spatial group within the multi-user communication session is updated based on changes in position of the viewpoints of the electronic devices 101a, 101b, and 101c relative to the shared three-dimensional environment. For example, as shown in the overhead view 510 in FIG. 5B, the first electronic device 101a has moved to a first updated position (e.g., relative to previous position 536c (e.g., the original position of the viewpoint of the first electronic device 101a in the spatial group)), caused by movement of the first user 502 in the physical environment 500, and the second electronic device 101b has moved to a second updated position (e.g., relative to previous position 536c), caused by movement of the second user 504 in the physical environment 500. Similarly, as shown in the overhead view 512 in FIG. 5B, the third electronic device 101c has moved to a third updated position (e.g., relative to previous position 536b), caused by movement of the third user 506 in the physical environment 540. As similarly discussed above with reference to FIG. 3, the movement of the first electronic device 101a and the second electronic device 101b cause the avatars 511 and 513, respectively, to be moved relative to the viewpoint of the third electronic device 101c, as indicated in the overhead view 512, and the movement of the third electronic device 101c causes the avatar 515 to be moved relative to the viewpoints of the first electronic device 101a and the second electronic device 101b, as indicated in the overhead view 510 in FIG. 5B.

In some examples, the spatial arrangement in the spatial group of the multi-user communication session is configured to be reset (e.g., recentered relative to a viewpoint of a respective user in the multi-user communication). For example, resetting the spatial arrangement in the spatial group within the multi-user communication session causes, from the viewpoint of the respective user (e.g., the user providing input to reset the spatial arrangement), virtual content (e.g., avatars and shared objects) to be redisplayed relative to the current viewpoint of the respective user (e.g., to be repositioned (e.g., moved by equal amounts) to be in a current field of view of the respective user).

In FIG. 5B, the first electronic device 101a detects an input corresponding to a request to reset the spatial arrangement of the spatial group in the multi-user communication session. For example, as shown in FIG. 5B, the first electronic device 101a detects an input directed to a physical button of the first electronic device 101a, such as via hand 503 of the first user 502. In some examples, the input corresponds to a tap or sequence of taps of the physical button, a rotation of the physical button, a swipe of the physical button, etc. In some examples, the input corresponds to a selection of a virtual button associated with resetting the spatial arrangement that is displayed at the first electronic device 101a.

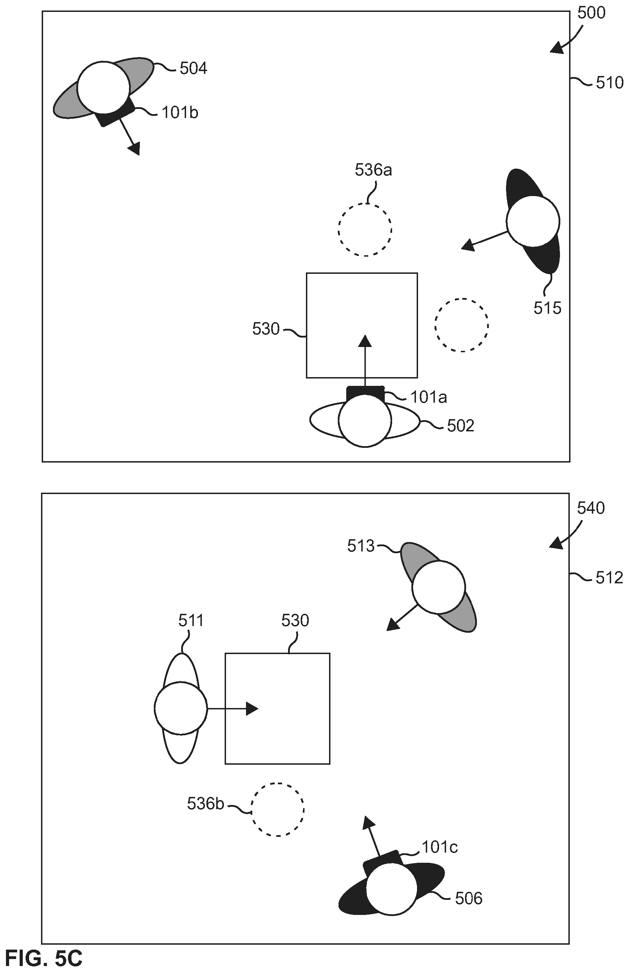

In some examples, as shown in FIG. 5C, in response to detecting the input corresponding to the request to reset the spatial arrangement, the first electronic device 101a repositions the virtual object 530 and the avatar 515 corresponding to the third user 506 relative to the viewpoint of the first electronic device 101a. For example, as shown in the overhead view 510, the first electronic device 101a moves the virtual object 530 and the avatar 515 relative to the viewpoint of the first electronic device 101a, such that the viewpoint of the first electronic device 101a is positioned at the previous position 536c relative to the virtual object 530 in FIG. 5B.

In some examples, rather than moving the virtual object 530 and the avatar 515 by an equal amount when resetting the spatial arrangement (e.g., similar to spatial refinement as discussed above), the virtual object 530 and the avatar 515 are moved by different amounts relative to the viewpoint of the first electronic device 101a because the multi-user communication session includes collocated and non-collocated users. As shown in the overhead view 510 in FIG. 5C, the first electronic device 101a positions the avatar 515 to be positioned at the previous position 536b relative to the virtual object 530 in FIG. 5B. In some examples, the first electronic device 101a forgoes updating presentation of the second user 504 relative to the viewpoint of the first electronic device 101a (e.g., because second user 504 has not physically moved in the physical environment 500 when the input is detected in FIG. 5B). Accordingly, as outlined above, in instances in which the multi-user communication session includes collocated and non-collocated users, resetting the spatial arrangement causes the virtual content (e.g., avatars and shared virtual objects) to be individually repositioned relative to previous/original locations of the virtual content in the shared three-dimensional environment, rather than relative to the viewpoint of the respective user providing the input for resetting the spatial arrangement.

In some examples, the above approach for resetting the spatial arrangement may cause content to shift relative to viewpoints of the other electronic devices (e.g., the second electronic device 101b and/or the third electronic device 101b). For example, as indicated in the overhead view 510 in FIG. 5C, the virtual object 530 and the avatar 515 are shifted farther from the viewpoint of the second electronic device 101b compared to FIG. 5B when the spatial arrangement of the spatial group is reset by the first electronic device 101a. Additionally, as illustrated in the overhead view 512 in FIG. 5C, the avatar 511 corresponding to the first user 502 is shifted toward and positioned in previous position 536c relative to the virtual object 530 from the viewpoint of the third electronic device 101c (e.g., based on the movement of the virtual object 530 relative to the viewpoint of the first electronic device 101a in the overhead view 510). As similarly discussed above, the third electronic device 101c updates the position of the avatar 511 without updating the position of the avatar 513 corresponding to the second user 504 (e.g., because the second electronic device 101b does not physically change locations in the physical environment 500 when the input is detected by the first electronic device 101a in FIG. 5B).

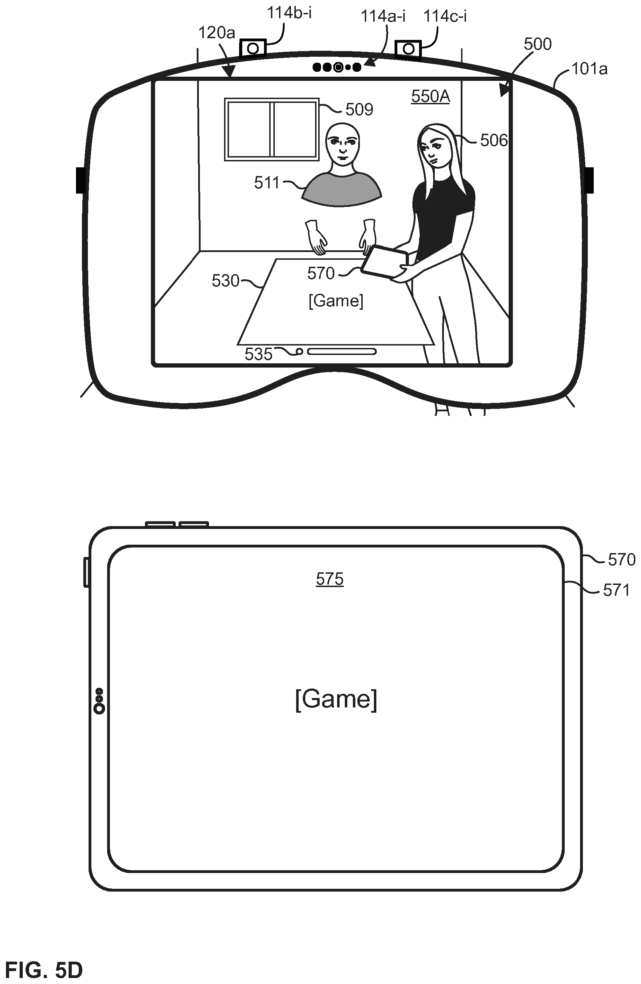

FIGs. 5D-5E illustrate examples of a multi-user communication session in which one of the electronic devices in the multi-communication session does not correspond to a head-mounted display. In FIG. 5D, first electronic device 101a is in a multi-user communication session with second electronic device 101b and mobile electronic device 570. For example, as shown in FIG. 5D, the first electronic device 101a is displaying three-dimensional environment 550A that includes avatar 511 corresponding to a second user of the second electronic device 101b and third user 506 holding the mobile electronic device 570. As shown in FIG. 5D, the mobile electronic device 570 does not correspond to a head-mounted display (e.g., the mobile electronic device 570 corresponds to a tablet computer or smartphone held by the third user 506). In some examples, the mobile electronic device 570 has one or more components of electronic devices 260/270 in FIG. 2, such as location sensor(s) 204A/204B, image sensor(s) 206A/206B, touch sensitive surface(s) 209A/209B, orientation sensor(s) 210A/210B, microphone(s) 213A/213B, display generation component(s) 214A/214B, speaker(s) 216A/216B, processor(s) 218A/218B, memory 220A/220B, communication circuitry 222A/222B, and/or communication bus(es) 208A/208B.

In the example of FIG. 5D, the multi-user communication session includes collocated and non-collocated users, as similarly discussed above. For example, as illustrated in FIG. 5D, the first electronic device 101a (e.g., including a first user of the first electronic device 101a) and the mobile electronic device 570 (e.g., including the third user 506) are both located in physical environment 500, while the second user of the second electronic device 101b is not located in the physical environment 500 (e.g., is located in a different physical environment, such as physical environment 540 discussed above). Accordingly, as shown in FIG. 5D, the second user is represented visually in the three-dimensional environment 550A via avatar 511 corresponding to the second user. Additionally, as shown in FIG. 5D, the shared three-dimensional environment of the multi-user communication session optionally includes shared virtual content, particularly virtual object 530 discussed previously above.

As mentioned above, in the example of FIG. 5D, the multi-user communication session includes a non-head mounted device (non-HMD) device, particularly mobile electronic device 570. In some such examples, virtual content that is shared within the multi-user communication session may be viewable to and/or interactive to the third user 506 via the mobile electronic device 570, but as two-dimensional content rather than as a virtual object within the shared three-dimensional environment. For example, as shown in FIG. 5D, because the virtual object 530 is shared among the first user, the second user, and the third user 506, the mobile electronic device 570 is configured to display, via display 571 (e.g., a touchscreen), user interface 575 corresponding to the virtual object 530. As mentioned previously herein, the virtual object 530 optionally corresponds to a game user interface (e.g., a virtual board game); accordingly, the user interface 575 is a same or similar game user interface that enables the third user 506 to participate in the shared activity that is the virtual board game (e.g., via the mobile electronic device 570). For example, the third user 506 may interact with the virtual object 530 in the shared three-dimensional environment via input detected by the mobile electronic device 570 that is directed to the user interface 575. In this instance, however, the third user 506 optionally has little understanding of the spatial arrangement of the spatial group in the multi-user communication session. For example, because only the user interface 575 is displayed by the mobile electronic device 570, the third user 506 is optionally not provided and/or is limitedly provided (e.g., by the mobile electronic device 570) with indications of locations of the virtual object 530 and the avatar 511 within the shared three-dimensional environment (e.g., relative to a viewpoint of the mobile electronic device 570). In such an instance, the third user 506 optionally does not experience spatial truth with the first user and the second user in the multi-user communication session.

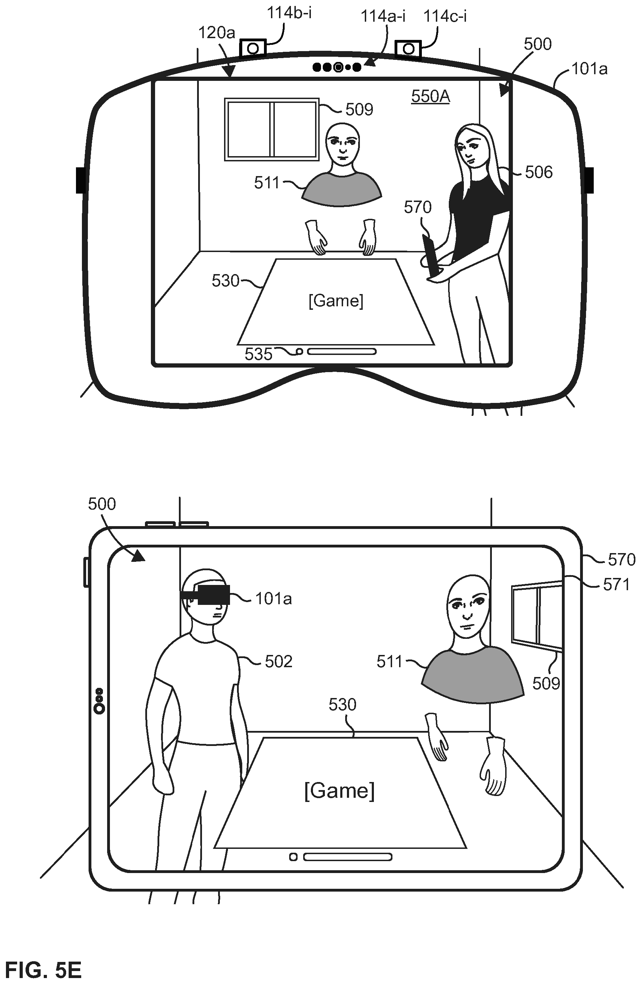

Alternatively, in some examples, while in the multi-user communication session, the mobile electronic device 570 may be configured to provide the third user 506 with a view of the shared three-dimensional environment specifically from the viewpoint of the mobile electronic device 570 within the spatial group. For example, as shown in FIG. 5E, the mobile electronic device 570 provides the third user 506 with an augmented reality (AR) or mixed reality (MR) experience, such as using one or more external cameras of the mobile electronic device 570. As shown in FIG. 5E, a portion of the physical environment 500 and the first user 502, including the first electronic device 101a, are optionally presented (e.g., based on a camera view of the mobile electronic device 570) on the display 571. Additionally, in some examples, the mobile electronic device 570 displays the virtual object 530 and the avatar 511 on the display 571. In some examples, as shown in FIG. 5E, the virtual object 530 and the avatar 511 are displayed at locations on the display 571 based on the spatial arrangement of the spatial group from the viewpoint of the mobile electronic device 570. In some examples, the third user 506 may interact with the virtual object 530 via input detected by the mobile electronic device 570. For example, the mobile electronic device 570 may be configured to perform one or more operations, such as movement, rotation, and/or resizing, of the virtual object 530 and/or one or more interactions with the game user interface of the virtual object 530 in response to detecting touch input (e.g., tap or swipe) on the display 571 and/or hand-based air gestures (e.g., air pinch gestures, air tap gestures, etc.) detected by one or more cameras of the mobile electronic device 570. In such an instance, the third user 506 optionally does experience spatial truth with the first user 502 and the second user in the multi-user communication session. Accordingly, as outlined above, even users who are not associated with an HMD-type device may participate in the multi-user communication session and my actively interact with content that is shared among the users in the multi-user communication session.

It is understood that the examples shown and described herein are merely exemplary and that additional and/or alternative elements may be provided within the three-dimensional environment for interacting with the illustrative content. It should be understood that the appearance, shape, form and size of each of the various user interface elements and objects shown and described herein are exemplary and that alternative appearances, shapes, forms and/or sizes may be provided. For example, the virtual objects (e.g., shared virtual object 310, private application window 330, and/or virtual objects 430 and 530) may be provided in an alternative shape than a rectangular shape, such as a circular shape, triangular shape, etc. In some examples, the various selectable options (e.g., the toggles 432 and 434), user interface elements (e.g., grabber bars 435 and 535), control elements, etc. described herein may be selected verbally via user verbal commands (e.g., "select option" verbal command). Additionally or alternatively, in some examples, the various options, user interface elements, control elements, etc. described herein may be selected and/or manipulated via user input received via one or more separate input devices in communication with the electronic device(s). For example, selection input may be received via physical input devices, such as a mouse, trackpad, keyboard, etc. in communication with the electronic device(s).

It should also be noted that additional or alternative forms of content may be provided and/or interacted with in the shared three-dimensional environment in the examples provided above. For example, user interfaces of other types of applications may be provided in the shared three-dimensional environment, such as user interfaces of web-browsing applications, media player applications, text editing applications, image viewing applications, video conferencing applications, etc. As another example, immersive content may be provided in the shared three-dimensional environment, such as three-dimensional virtual environments that occupy a predefined portion of a respective electronic device's field of view (e.g., 100%, 90%, 80%, 75%, 50%, etc. immersion). Virtual environments optionally correspond to virtual scenes or settings (e.g., at certain locations and/or at certain times of day), such as a virtual beach, a virtual park, a virtual theater, a virtual forest, etc. In some examples, virtual environments include virtual objects, such as virtual seats or benches, virtual rocks, virtual water, virtual clouds, virtual grass, virtual animals, etc. In instances in which a virtual environment is presented in the shared three-dimensional environment, each user in the multi-user communication session may experience a portion of the virtual environment from their respective viewpoint (e.g., via each user's respective electronic device). For example, a virtual object of the virtual environment may be located at one location relative to a viewpoint of one user but may be located at a different location relative to a viewpoint of another user.

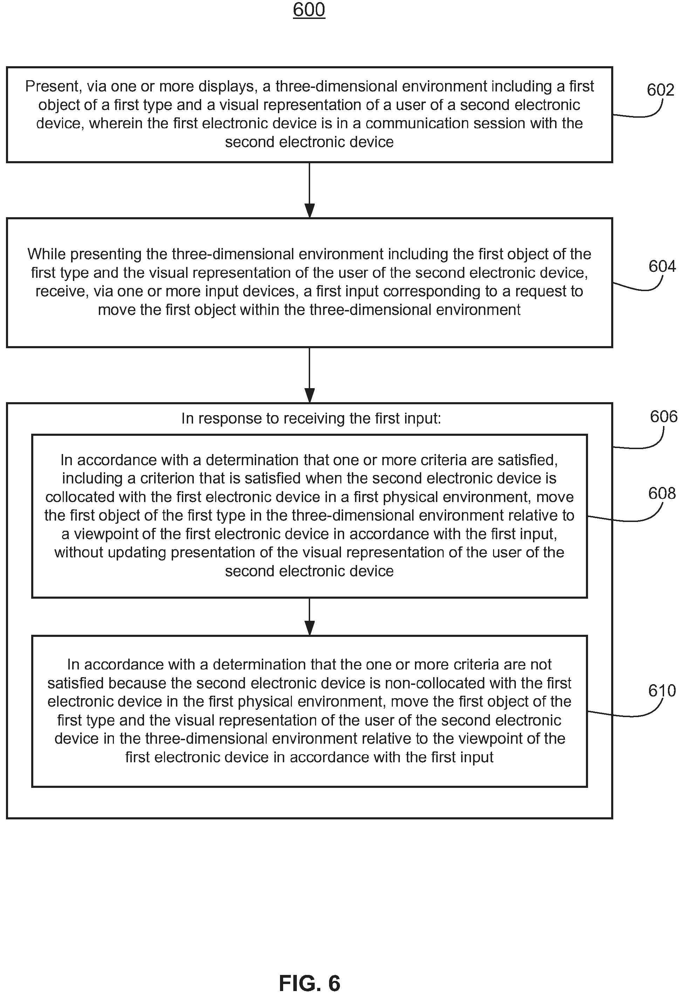

FIG. 6 illustrates a flow diagram illustrating an example process for moving an object in a three-dimensional environment within a multi-user communication session based on whether the multi-user communication session includes collocated or non-collocated users according to some examples of the disclosure. In some examples, process 600 begins at a first electronic device in communication with one or more displays, one or more input devices, and a second electronic device, wherein the first electronic device is in a communication session with the second electronic device. In some examples, the first electronic device and the second electronic device are optionally a head-mounted display, respectively, similar or corresponding to electronic devices 260/270 of FIG. 2. As shown in FIG. 6, in some examples, at 602, the first electronic device presents, via the one or more displays, a three-dimensional environment including a first object of a first type and a visual representation of a user of the second electronic device. For example, as shown in FIG. 4A, first electronic device 101a is presenting three-dimensional environment 450A that includes virtual object 430 (e.g., a shared virtual object) and a visual representation (e.g., a passthrough representation or a computer-generated representation) of a second user 404 of a second electronic device 101b.

In some examples, at 604, while presenting the three-dimensional environment including the first object of the first type and the visual representation of the user of the second electronic device, the first electronic device receives, via the one or more input devices, a first input corresponding to a request to move the first object within the three-dimensional environment. For example, as shown in FIG. 4B, the first electronic device 101a detects an air pinch gesture provided by hand 403 of the first user 402, optionally while gaze 425 of the first user 402 is directed toward the virtual object 430 (e.g., grabber bar 435 of the virtual object 430), followed by movement of the hand 403 in space (e.g., rightward relative to a body of the first user 402).

In some examples, at 606, in response to receiving the first input, at 608, in accordance with a determination that one or more criteria are satisfied, including a criterion that is satisfied when the second electronic device is collocated with the first electronic device in a first physical environment, the first electronic device moves the first object of the first type in the three-dimensional environment relative to a viewpoint of the first electronic device in accordance with the first input, without updating presentation of the visual representation of the user of the second electronic device. For example, as shown in FIG. 4C, because the second electronic device 101b is collocated with the first electronic device 101a in physical environment 400, as indicated in overhead view 410, the first electronic device 101a moves the virtual object 430 in accordance with the input without updating presentation of the visual representation of the second user 404 of the second electronic device 101b in the three-dimensional environment 450A. In some examples, at 610, in accordance with a determination that the one or more criteria are not satisfied because the second electronic device is non-collocated with the first electronic device in the first physical environment, moving the first object of the first type and the visual representation of the user of the second electronic device in the three-dimensional environment relative to the viewpoint of the first electronic device in accordance with the first input. For example, as shown in FIG. 4F, because the second electronic device 101b is non-collocated with the first electronic device 101a in the physical environment 400, as indicated in overhead views 410 and 412, the first electronic device 101a moves the virtual object 430 and avatar 411 corresponding to the second user 404 of the second electronic device 101b in the three-dimensional environment 450A in accordance with the input.

It is understood that process 600 is an example and that more, fewer, or different operations can be performed in the same or in a different order. Additionally, the operations in process 600 described above are, optionally, implemented by running one or more functional modules in an information processing apparatus such as general-purpose processors (e.g., as described with respect to FIG. 2) or application specific chips, and/or by other components of FIG. 2.

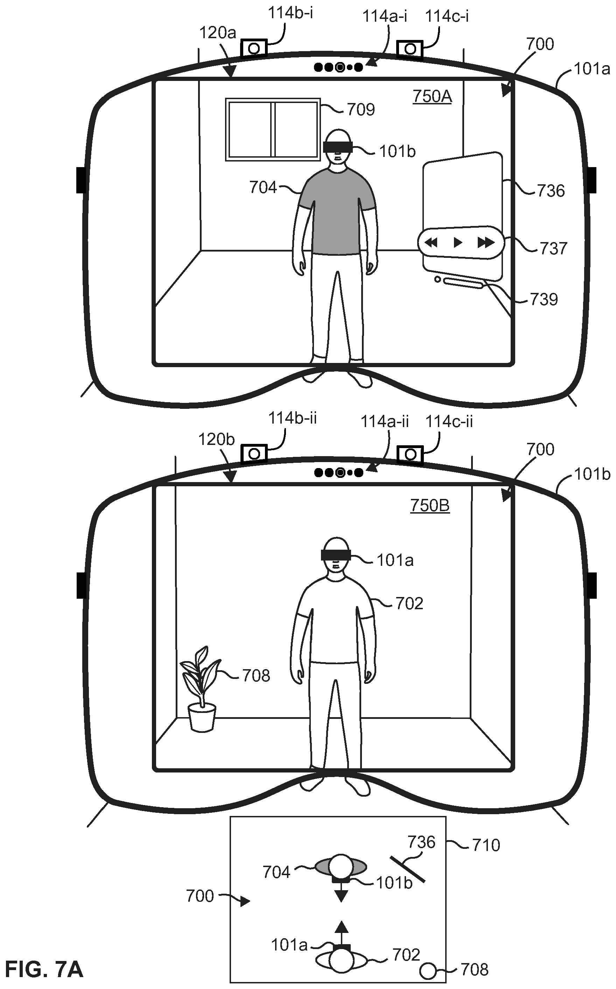

FIGs. 7A-7G illustrate example interactions within a multi-user communication session that includes collocated users according to some examples of the disclosure. In FIG. 7A, first electronic device 101a (e.g., associated with first user 702) and second electronic device 101b (e.g., associated with second user 704) are in a multi-user communication session. In some examples, the first user 702 and the second user 704 correspond to first user 402 and second user 404, respectively, of FIGs. 4A-4AA and/or first user 502 and second user 504, respectively, of FIGs. 5A-5E.

As shown in overhead view 710 in FIG. 7A, the first electronic device 101a and the second electronic device 101b are collocated in physical environment 700 that includes houseplant 708 and window 709. For example, the first user 702, who is wearing the first electronic device 101a, is positioned across from the second user 704, who is wearing the second electronic device 101b, in the physical environment 700. Accordingly, the second user 704 (e.g., and the second electronic device 101b) is visible in three-dimensional environment 750A that is presented by the first electronic device 101a (e.g., via display 120a) and the first user 702 (e.g., and the first electronic device 101a) is visible in three-dimensional environment 750B that is presented by the second electronic device 101b (e.g., via display 120b). Additionally, as shown in FIG. 7A and as similarly discussed above, the shared three-dimensional environment includes virtual object 736, corresponding to a shared virtual object. In some examples, the virtual object 736 corresponds to virtual object 436 discussed above. For example, as shown in FIG. 7A, the virtual object 736 is or includes a user interface, such as a media player user interface that is associated with a respective application running on the electronic devices 101a and 101b. In the example of FIG. 7A, though the virtual object 736 is shared between the first electronic device 101a and the second electronic device 101b (e.g., and is therefore viewable by and interactive to the first user 702 and the second user 704), the virtual object 736 is currently not visible in the field of view of the second electronic device 101b from the current viewpoint of the second electronic device 101b. Additionally, in FIG. 7A the locations of the viewpoints of the electronic devices 101a and 101b and the virtual object 736 in the overhead view 710 optionally represent the locations of the viewpoints and the virtual object 736 in the shared three-dimensional environment of the multi-user communication session.

In some examples, as shown in FIG. 7A, the virtual object 736 includes and/or is displayed with interactive controls for controlling the display of content of the virtual object 736. For example, in FIG. 7A, the virtual object 736 is displayed with playback controls 737 that are selectable for controlling playback of a content item that is currently being displayed in the virtual object 736, such as a movie, television show episode, music video, and/or other media-based content. In some examples, while the first electronic device 101a and the second electronic device 101b are in the multi-user communication session that includes collocated users, interaction with the virtual object 736 causes the playback controls 737 to cease to be displayed in the shared three-dimensional environment, as discussed below.

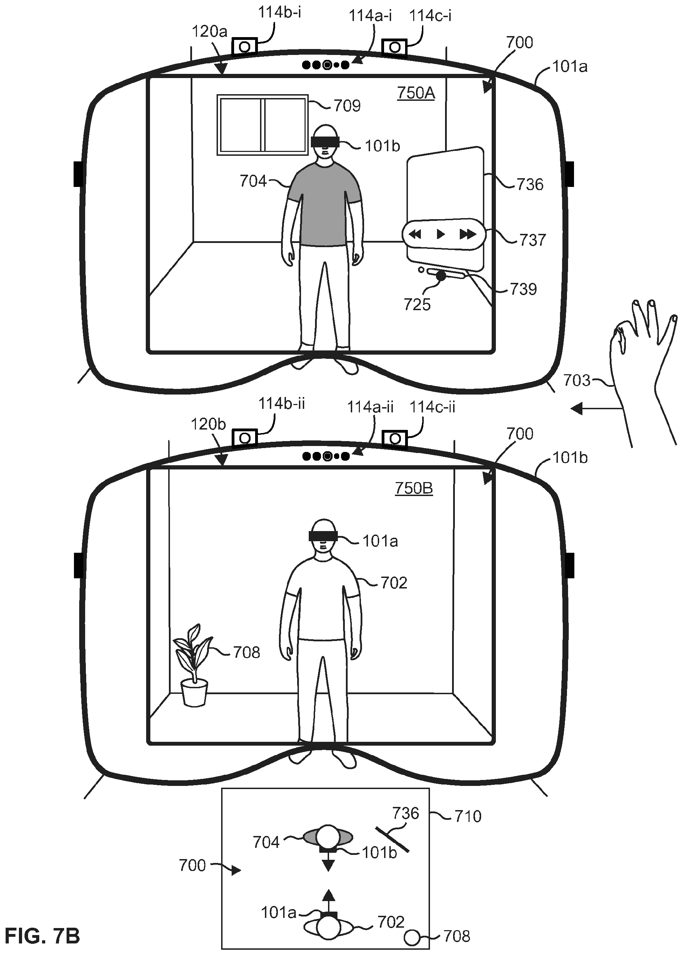

In FIG. 7B, the first electronic device 101a detects an input corresponding to a request to move the virtual object 736 in the three-dimensional environment 750A. For example, as shown in FIG. 7B, the first electronic device 101a detects an air pinch gesture performed by hand 703 of the first user 702, optionally while gaze 725 of the first user 702 is directed to grabber bar 739 in the three-dimensional environment 750A. In some examples, the grabber bar 739 is selectable to initiate movement of the virtual object 736 in the three-dimensional environment 750A. Additionally, following the detection of the air pinch gesture, in some examples, the first electronic device 101a detects movement of the hand 703. For example, as indicated in FIG. 7B, the first electronic device 101a detects the hand 703 move leftward in space relative to the viewpoint of the first electronic device 101a.

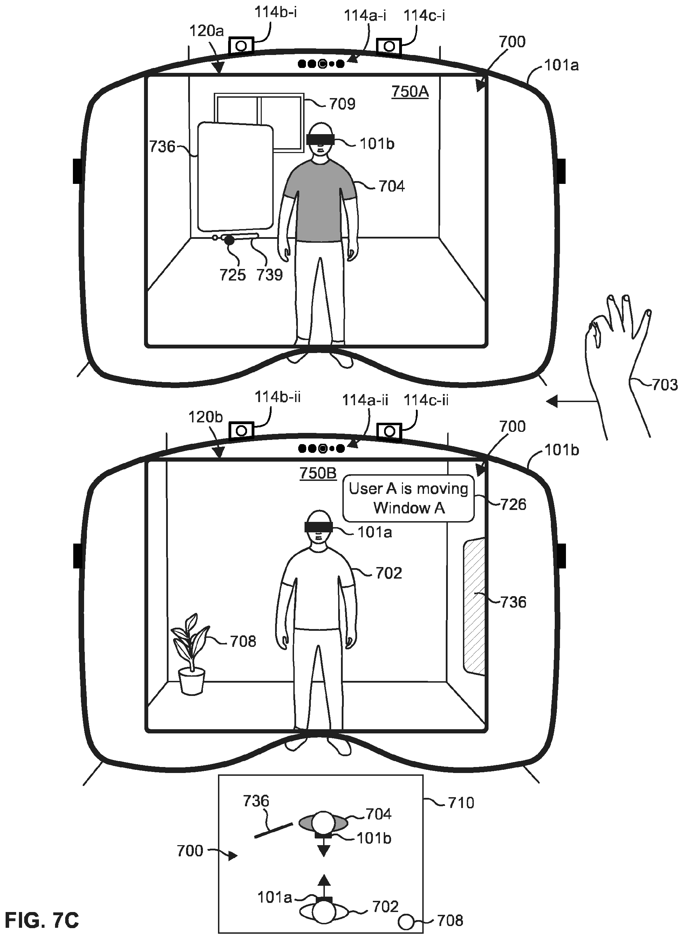

In some examples, as shown in FIG. 7C, in response to detecting the movement of the hand 703 of the first user 702, the first electronic device 101a moves the virtual object 736 in accordance with the movement of the hand 703 in the three-dimensional environment 750A. For example, as shown in FIG. 7C, the virtual object 736 is moved leftward in the three-dimensional environment 750A relative to the viewpoint of the first electronic device 101a in accordance with the leftward movement of the hand 703. In some examples, as shown in FIG. 7C, because the virtual object 736 is a shared virtual object in the multi-user communication session, the movement of the virtual object 736 in the three-dimensional environment 750A causes the virtual object 736 to correspondingly be moved in the three-dimensional environment 750B presented at the second electronic device 101b. For example, as shown in FIG. 7C, in response to receiving input data provided by the first electronic device 101a corresponding to the movement of the virtual object 736, the second electronic device 101b moves the virtual object 736 rightward relative to the viewpoint of the second electronic device 101b, causing the virtual object 736 to now be at least partially visible in the three-dimensional environment 750B from the viewpoint of the second electronic device 101b.

In some examples, as shown in FIG. 7C, while the virtual object 736 is being moved in the three-dimensional environment 750A in accordance with the movement of the hand 703, the first electronic device 101a ceases display of the playback controls 737 that are associated with the virtual object 736. Additionally, in some examples, as shown in FIG. 7C, the playback controls 737 cease to be displayed with the virtual object 736 in the three-dimensional environment 750B presented at the second electronic device 101b. Particularly, the playback controls 737 cease to be displayed while the interaction with the virtual object 736 (e.g., the movement of the virtual object 736) is ongoing so as to help avoid and/or discourage (e.g., unintentional) interaction with the playback controls 737, which could disrupt the current interaction with the virtual object 736 and/or overload the electronic devices 101a and 101b when responding to the potentially conflicting inputs, as one benefit.

Additionally, in some examples, as shown in FIG. 7C, while the virtual object 736 is being moved in the three-dimensional environment 750A in accordance with the movement of the hand 703 that is detected by the first electronic device 101a, the second electronic device 101b updates a visual appearance of the virtual object 736 in the three-dimensional environment 750B during the movement of the virtual object 736 in the three-dimensional environment 750B. For example, as indicated in FIG. 7C, the second electronic device 101b decreases a visual emphasis of and/or a visual fidelity of the virtual object 736, such as by increasing a transparency, decreasing a brightness, changing a coloration, decreasing a saturation of, and/or ceasing display of the content of the virtual object 736 (e.g., the user interface of the virtual object 736) during the movement of the virtual object 736 that is caused by the input provided by the first user 702 at the first electronic device 101a. Additionally or alternatively, in some examples, the second electronic device 101b displays a visual indication 726 (e.g., a notification, alert, or message) of the input that is being provided by the first user 702 at the first electronic device 101a that is causing the virtual object 736 to be moved in the three-dimensional environment 750B at the second electronic device 101b. For example, as shown in FIG. 7C, the second electronic device 101b provides the visual indication 726 informing the second user 704 that the first user 702 is currently providing the movement input directed to the virtual object 736 in the three-dimensional environment 750B. Changing the visual appearance of the virtual object 736 and/or providing the visual indication 726 during the movement of the virtual object 736 that is caused by input provided by the first user 702 visually informs the second user 704 that the virtual object 736 is currently being interacted with, which helps avoid and/or discourage further interaction with the virtual object 736 while the virtual object 736 is still being moved, and/or helps avoid user confusion as to the cause of the movement of the virtual object 736, as another benefit.

In FIG. 7C, the first electronic device 101a detects further (e.g., continued) movement of the hand 703 of the first user 702 while the hand 703 is maintaining the air pinch gesture discussed above. For example, as shown in FIG. 7C, the first electronic device 101a detects the hand 703 continue to move leftward relative to the viewpoint of the first electronic device 101a corresponding to a request to move the virtual object 736 further leftward in the three-dimensional environment 750A relative to the viewpoint of the first electronic device 101a.

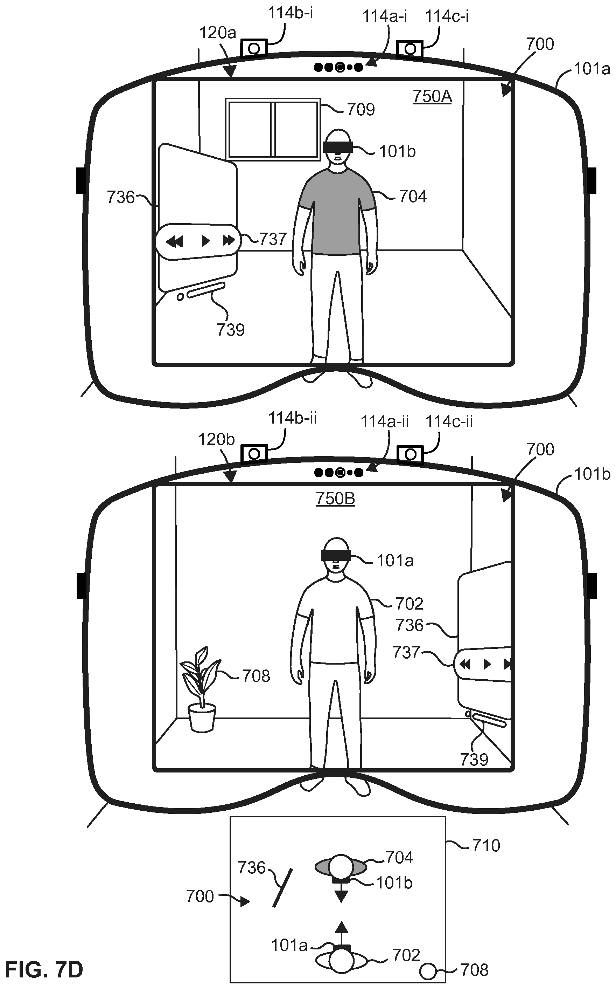

In some examples, as shown in FIG. 7D, in response to detecting the continued movement of the hand 703 of the first user 702, the first electronic device 101a moves the virtual object 736 further leftward in the three-dimensional environment 750A relative to the viewpoint of the first electronic device 101a in accordance with the movement of the hand 703. In some examples, as shown in FIG. 7D and as similarly discussed above, when the first electronic device 101a moves the virtual object 736 in accordance with the movement of the hand 703, the second electronic device 101b also moves the virtual object 736 in the three-dimensional environment 750B correspondingly. For example, in FIG. 7D, the second electronic device 101b moves the virtual object 736 further leftward in the three-dimensional environment 750B relative to the viewpoint of the second electronic device 101b based on input data provided by the first electronic device 101a corresponding to the movement of the virtual object 736 in the three-dimensional environment 750A.

In some examples, when the first electronic device 101a detects a conclusion of the movement input provided by the hand 703 of the first user 702, as shown in FIG. 7D, such as a release of the air pinch gesture and/or a relaxation of the hand 703, the first electronic device 101a redisplays the playback controls 737 in the three-dimensional environment 750A (e.g., because the virtual object 736 is no longer being interacted with). Additionally, as shown in FIG. 7D, when the first electronic device 101a redisplays the playback controls 737 with the virtual object 736 because the interaction with the virtual object 736 has concluded, the second electronic device 101b redisplays the playback controls 737 with the virtual object 736 in the three-dimensional environment 750B (e.g., in response to receiving an indication from the first electronic device 101a that the input has concluded). As shown in FIG. 7D, the second electronic device 101b optionally also restores the visual appearance of the virtual object 736 in the three-dimensional environment 750B in response to receiving an indication that the input directed to the virtual object 736 at the first electronic device 101a has concluded. For example, in FIG. 7D, the second electronic device 101b increases and/or restores the visual emphasis and/or visual fidelity of the content of the virtual object 736, such as decreasing the transparency, increasing the brightness, restoring the saturation and/or coloration of the user interface of the virtual object 736. Redisplaying the playback controls 737 and restoring the visual appearance of the virtual object 736 facilitates user discovery that the interaction with the virtual object 736 has concluded, thereby providing the users with a visual indication that the playback controls 737 are now able to be interacted with, which enhances and/or improves the overall user experience within the multi-user communication session, as one benefit.

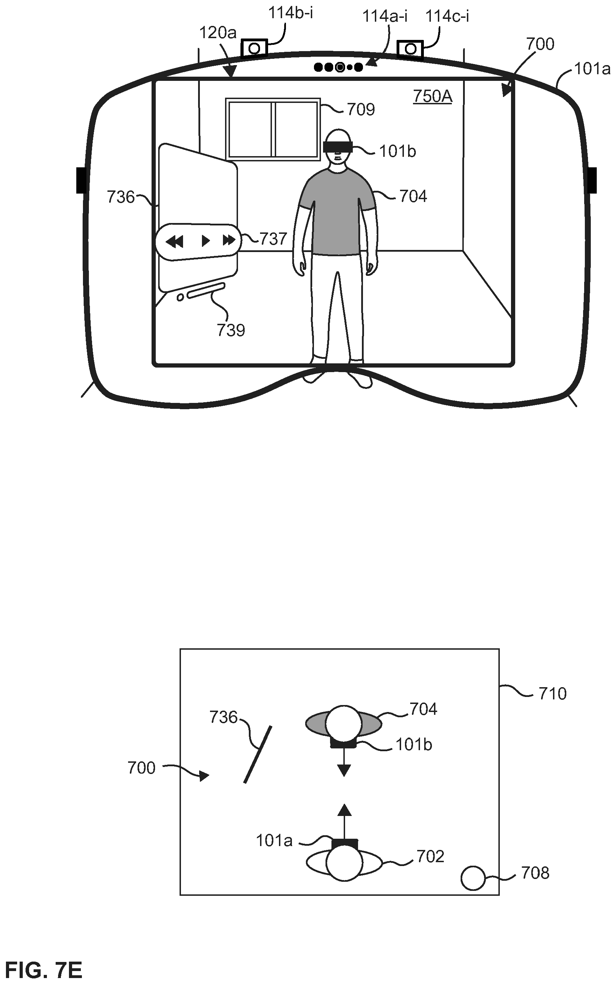

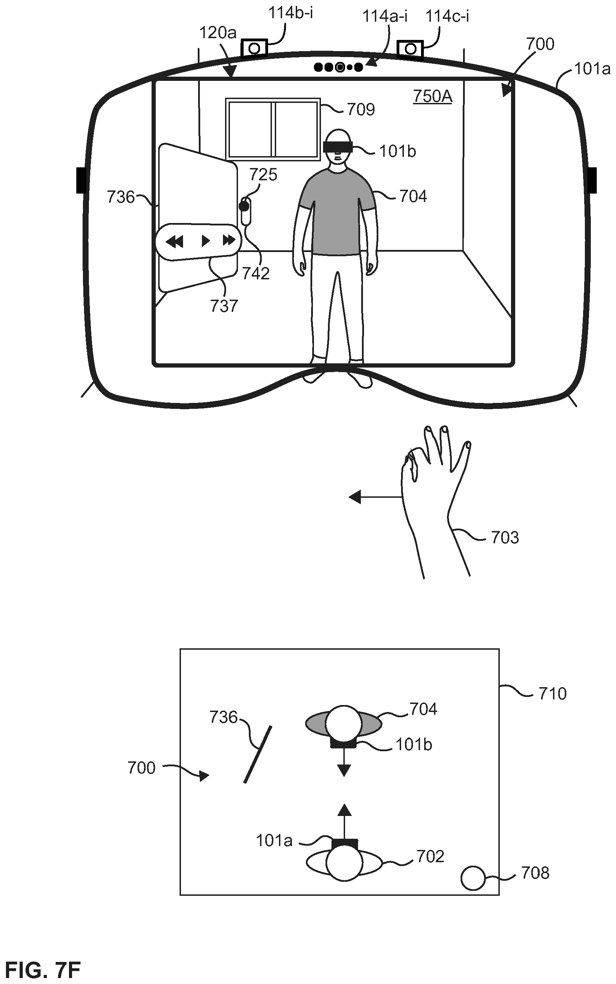

In some examples, an orientation of the virtual object 736 is able to be manipulated relative to the viewpoint of a respective electronic device independent of (e.g., separate from) movement of the virtual object 736 relative to the viewpoint of the respective electronic device. Particularly, in some examples, a rotation affordance may be provided that enables a user to directly rotate the virtual object 736 to update the orientation of the virtual object 736, without requiring and/or also moving the virtual object 736. For example, in FIG. 7E, as previously discussed above, the virtual object 736 is currently displayed with the grabber bar 739 (e.g., a movement affordance) in the three-dimensional environment 750A. From FIG. 7E to FIG. 7F, the first electronic device 101a detects the gaze 725 of the first user 702 move to being directed to a predefined portion of the virtual object 736. In some examples, the predefined portion of the virtual object 736 corresponds to a side or edge of the virtual object 736, such as the right side of the virtual object 736 as shown in FIG. 7F. In some examples, as shown in FIG. 7F, in response to detecting the gaze 725 directed to the predefined portion of the virtual object 736, the first electronic device 101a displays rotation affordance 742 in the three-dimensional environment 750A. In some examples, as discussed below, the rotation affordance 742 is selectable to initiate rotation of the virtual object 736 relative to the viewpoint of the first electronic device 101a. Additionally, in some examples, when the rotation affordance 742 is displayed with the virtual object 736 in the three-dimensional environment 750A, the first electronic device 101a ceases display of the grabber bar 739 in the three-dimensional environment 750A, as shown in FIG. 7F.

In FIG. 7F, while displaying the rotation affordance 742 in the three-dimensional environment 750A, the first electronic device 101a detects an input provided by the hand 703 of the first user 702 that is directed to the rotation affordance 742 in the three-dimensional environment 750A. For example, as shown in FIG. 7F, the first electronic device 101a detects an air pinch gesture provided the hand 703 of the first user 702 followed by movement of the hand 703 in space relative to the viewpoint of the first electronic device 101a, optionally while the gaze 725 is directed to the rotation affordance 742.

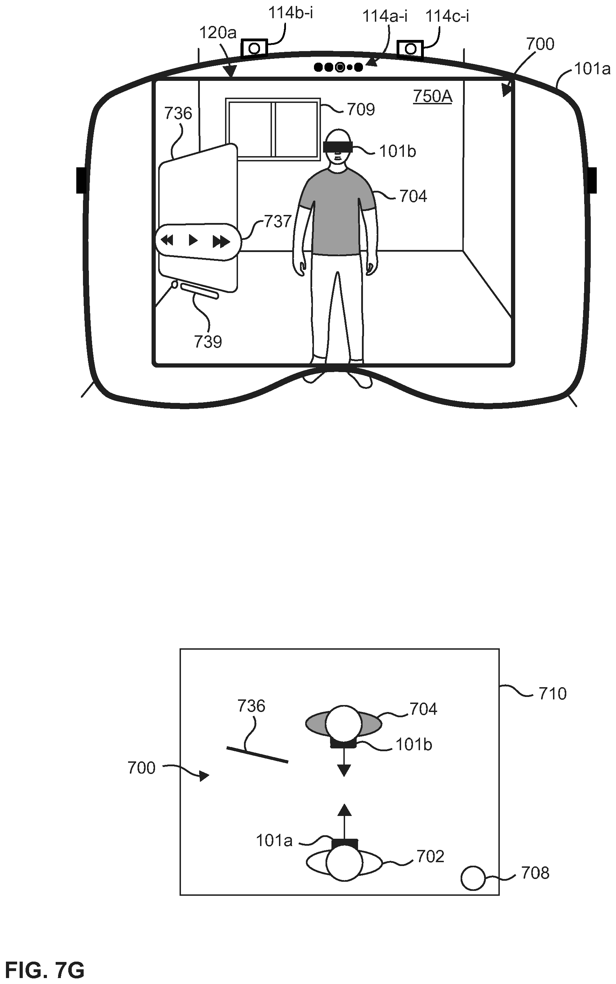

In some examples, as shown in FIG. 7G, in response to detecting the input provided by the hand 703, the first electronic device 101a rotates the virtual object 736, thereby changing the orientation of the virtual object 736, in the three-dimensional environment 750A relative to the viewpoint of the first electronic device 101a in accordance with the movement of the hand 703. For example, as shown in FIG. 7G, the first electronic device 101a rotates the virtual object 736 clockwise (e.g., about a vertical axis through a center of the virtual object 736) in the three-dimensional environment 750A in accordance with the leftward movement of the hand 703. As shown in FIG. 7G, when the first electronic device 101a rotates the virtual object 736, the first electronic device 101a forgoes moving the virtual object 736 in the three-dimensional environment 750A in accordance with the movement of the hand 703. For example, as indicated in the overhead view 710 in FIGs. 7F and 7G, though the virtual object 736 is rotated in the three-dimensional environment 750A, the virtual object 736 remains positioned at the same location in the three-dimensional environment 750A from the viewpoint of the first electronic device 101a (e.g., because the input discussed above is directed to the rotation affordance 742 rather than the grabber bar 739 in the three-dimensional environment 750A). As shown in FIG. 7G, when the input directed to the rotation affordance 742 concludes (e.g., when the first electronic device 101a detects a release of the air pinch gesture and/or a relaxation of the hand 703) and/or when the gaze 725 ceases to be directed to the predefined portion of the virtual object 736, the first electronic device 101a ceases display of the rotation affordance 742 and redisplays the grabber bar 739 in the three-dimensional environment 750A.

Therefore, according to the above, some examples of the disclosure are directed to a method comprising at a first electronic device in communication with one or more displays, one or more input devices, and a second electronic device, wherein the first electronic device is in a communication session with the second electronic device: presenting, via the one or more displays, a three-dimensional environment including a first object of a first type and a visual representation of a user of the second electronic device; while presenting the three-dimensional environment including the first object of the first type and the visual representation of the user of the second electronic device, receiving, via the one or more input devices, a first input corresponding to a request to move the first object within the three-dimensional environment; and in response to receiving the first input, in accordance with a determination that one or more criteria are satisfied, including a criterion that is satisfied when the second electronic device is collocated with the first electronic device in a first physical environment, moving the first object of the first type in the three-dimensional environment relative to a viewpoint of the first electronic device in accordance with the first input, without updating presentation of the visual representation of the user of the second electronic device, and in accordance with a determination that the one or more criteria are not satisfied because the second electronic device is non-collocated with the first electronic device in the first physical environment, moving the first object of the first type and the visual representation of the user of the second electronic device in the three-dimensional environment relative to the viewpoint of the first electronic device in accordance with the first input.

Additionally or alternatively, in some examples, an object of the first type includes a virtual object that is shared between the user of the first electronic device and the user of the second electronic device within the communication session. Additionally or alternatively, in some examples, the three-dimensional environment further includes a second object of a second type, different from the first type, the method further comprising, in response to receiving the first input, forgoing moving the second object of the second type in the three-dimensional environment relative to the viewpoint of the first electronic device in accordance with the first input. Additionally or alternatively, in some examples, an object of the second type includes a virtual object that is private to the user of the first electronic device within the communication session. Additionally or alternatively, in some examples, the first electronic device being collocated with the second electronic device in the first physical environment is in accordance with a determination that the second electronic device is within a threshold distance of the first electronic device in the first physical environment. Additionally or alternatively, in some examples, the second electronic device being collocated with the first electronic device in the first physical environment is in accordance with a determination that the second electronic device is located in a field of view of the first electronic device. Additionally or alternatively, in some examples, in accordance with the determination that the second electronic device is collocated with the first electronic device in the first physical environment, the visual representation of the user of the second electronic device corresponds to a passthrough representation of the user of the second electronic device.

Additionally or alternatively, in some examples, in accordance with the determination that the second electronic device is non-collocated with the first electronic device in the first physical environment, the visual representation of the user of the second electronic device corresponds to a virtual avatar of the user of the second electronic device. Additionally or alternatively, in some examples, movement of the first object of the first type is associated with one or more modes in the three-dimensional environment, and the one or more criteria include a second criterion that is satisfied when a first mode of the one or more modes is not active. Additionally or alternatively, in some examples, the method further comprises: while presenting the three-dimensional environment including the first object of the first type and the visual representation of the user of the second electronic device, detecting, via the one or more input devices, movement of the viewpoint of the first electronic device; in response to detecting the movement of the viewpoint of the first electronic device, updating presentation of the three-dimensional environment based on an updated viewpoint of the first electronic device, wherein the first object of the first type and the visual representation of the user of the second electronic device are no longer visible in a field of view of the first electronic device from the updated viewpoint; while the first object of the first type and the visual representation of the user of the second electronic device are not visible in the field of view of the first electronic device, receiving, via the one or more input devices, a second input corresponding to a request to update a spatial arrangement of the three-dimensional environment; and in response to receiving the second input, updating the spatial arrangement of the three-dimensional environment, including, in accordance with a determination that the one or more criteria are satisfied, moving the first object of the first type in the three-dimensional environment to be repositioned in the field of view of the first electronic device from the updated viewpoint of the first electronic device, without updating presentation of the visual representation of the user of the second electronic device, and in accordance with a determination that the one or more criteria are not satisfied, moving the first object of the first type and the visual representation of the user of the second electronic device in the three-dimensional environment to be repositioned in the field of view of the first electronic device from the updated viewpoint of the first electronic device.

Additionally or alternatively, in some examples, movement of the first object of the first type is associated with one or more modes in the three-dimensional environment, including a respective mode that defines movement of the first object of the first type relative to the viewpoint of the first electronic device. Additionally or alternatively, in some examples, the method further comprises: while displaying the first object of the first type and while the respective mode is active, receiving, via the one or more input devices, a second input corresponding to a request to move the first object within the three-dimensional environment; and in response to receiving the second input, in accordance with a determination that the one or more criteria are satisfied because the second electronic device is collocated with the first electronic device in the first physical environment, moving the first object of the first type in the three-dimensional environment relative to the viewpoint of the first electronic device in accordance with the first input, without updating presentation of the visual representation of the user of the second electronic device, and in accordance with a determination that the one or more criteria are not satisfied because the second electronic device is non-collocated with the first electronic device in the first physical environment, moving the first object of the first type and the visual representation of the user of the second electronic device in the three-dimensional environment relative to the viewpoint of the first electronic device in accordance with the first input. Additionally or alternatively, in some examples, the method further comprises: while displaying the first object of the first type and while the respective mode is not active, receiving, via the one or more input devices, a second input corresponding to a request to move the first object within the three-dimensional environment; and in response to receiving the second input, moving the first object of the first type in the three-dimensional environment relative to the viewpoint of the first electronic device in accordance with the first input, without updating presentation of the visual representation of the user of the second electronic device.

Some examples of the disclosure are directed to an electronic device comprising: one or more processors; memory; and one or more programs stored in the memory and configured to be executed by the one or more processors, the one or more programs including instructions for performing any of the above methods.

Some examples of the disclosure are directed to a non-transitory computer readable storage medium storing one or more programs, the one or more programs comprising instructions, which when executed by one or more processors of a first electronic device, cause the first electronic device to perform any of the above methods.

Some examples of the disclosure are directed to a first electronic device, comprising one or more processors, memory, and means for performing any of the above methods.

Some examples of the disclosure are directed to an information processing apparatus for use in a first electronic device, the information processing apparatus comprising means for performing any of the above methods.

The foregoing description, for purpose of explanation, has been described with reference to specific examples. However, the illustrative discussions above are not intended to be exhaustive or to limit the disclosure to the precise forms disclosed. Many modifications and variations are possible in view of the above teachings. The examples were chosen and described in order to best explain the principles of the disclosure and its practical applications, to thereby enable others skilled in the art to best use the disclosure and various described examples with various modifications as are suited to the particular use contemplated.

### Further Embodiments

1. A method comprising:
   at a first electronic device in communication with one or more displays, one or more input devices, and a second electronic device, wherein the first electronic device is in a communication session with the second electronic device:
   presenting, via the one or more displays, a three-dimensional environment including a first object of a first type and a visual representation of a user of the second electronic device;
   while presenting the three-dimensional environment including the first object of the first type and the visual representation of the user of the second electronic device, receiving, via the one or more input devices, a first input corresponding to a request to move the first object within the three-dimensional environment; and
   in response to receiving the first input:
      in accordance with a determination that one or more criteria are satisfied, including a criterion that is satisfied when the second electronic device is collocated with the first electronic device in a first physical environment, moving the first object of the first type in the three-dimensional environment relative to a viewpoint of the first electronic device in accordance with the first input, without updating presentation of the visual representation of the user of the second electronic device; and
      in accordance with a determination that the one or more criteria are not satisfied because the second electronic device is non-collocated with the first electronic device in the first physical environment, moving the first object of the first type and the visual representation of the user of the second electronic device in the three-dimensional environment relative to the viewpoint of the first electronic device in accordance with the first input.
2. The method of embodiment 1, wherein an object of the first type includes a virtual object that is shared between the user of the first electronic device and the user of the second electronic device within the communication session.
3. The method of any of embodiments 1-2, wherein the three-dimensional environment further includes a second object of a second type, different from the first type, the method further comprising:
   in response to receiving the first input, forgoing moving the second object of the second type in the three-dimensional environment relative to the viewpoint of the first electronic device in accordance with the first input.
4. The method of embodiment 3, wherein an object of the second type includes a virtual object that is private to the user of the first electronic device within the communication session.
5. The method of any of embodiments 1-4, wherein the first electronic device being collocated with the second electronic device in the first physical environment is in accordance with a determination that the second electronic device is within a threshold distance of the first electronic device in the first physical environment.
6. The method of any of embodiments 1-5, wherein the second electronic device being collocated with the first electronic device in the first physical environment is in accordance with a determination that the second electronic device is located in a field of view of the first electronic device.
7. The method of any of embodiments 1-6, wherein, in accordance with the determination that the second electronic device is collocated with the first electronic device in the first physical environment, the visual representation of the user of the second electronic device corresponds to a passthrough representation of the user of the second electronic device.
8. The method of any of embodiments 1-7, wherein, in accordance with the determination that the second electronic device is non-collocated with the first electronic device in the first physical environment, the visual representation of the user of the second electronic device corresponds to a virtual avatar of the user of the second electronic device.
9. The method of any of embodiments 1-8, wherein:
   movement of the first object of the first type is associated with one or more modes in the three-dimensional environment; and
   the one or more criteria include a second criterion that is satisfied when a first mode of the one or more modes is not active.
10. The method of any of embodiments 1-9, further comprising:
   while presenting the three-dimensional environment including the first object of the first type and the visual representation of the user of the second electronic device, detecting, via the one or more input devices, movement of the viewpoint of the first electronic device;
   in response to detecting the movement of the viewpoint of the first electronic device, updating presentation of the three-dimensional environment based on an updated viewpoint of the first electronic device, wherein the first object of the first type and the visual representation of the user of the second electronic device are no longer visible in a field of view of the first electronic device from the updated viewpoint;
   while the first object of the first type and the visual representation of the user of the second electronic device are not visible in the field of view of the first electronic device, receiving, via the one or more input devices, a second input corresponding to a request to update a spatial arrangement of the three-dimensional environment; and
   in response to receiving the second input, updating the spatial arrangement of the three-dimensional environment, including:
      in accordance with a determination that the one or more criteria are satisfied, moving the first object of the first type in the three-dimensional environment to be repositioned in the field of view of the first electronic device from the updated viewpoint of the first electronic device, without updating presentation of the visual representation of the user of the second electronic device; and
      in accordance with a determination that the one or more criteria are not satisfied, moving the first object of the first type and the visual representation of the user of the second electronic device in the three-dimensional environment to be repositioned in the field of view of the first electronic device from the updated viewpoint of the first electronic device.
11. The method of any of embodiments 1-10, wherein movement of the first object of the first type is associated with one or more modes in the three-dimensional environment, including a respective mode that defines movement of the first object of the first type relative to the viewpoint of the first electronic device.
12. The method of embodiment 11, further comprising:
   while displaying the first object of the first type and while the respective mode is active, receiving, via the one or more input devices, a second input corresponding to a request to move the first object within the three-dimensional environment; and
   in response to receiving the second input:
      in accordance with a determination that the one or more criteria are satisfied because the second electronic device is collocated with the first electronic device in the first physical environment, moving the first object of the first type in the three-dimensional environment relative to the viewpoint of the first electronic device in accordance with the first input, without updating presentation of the visual representation of the user of the second electronic device; and
      in accordance with a determination that the one or more criteria are not satisfied because the second electronic device is non-collocated with the first electronic device in the first physical environment, moving the first object of the first type and the visual representation of the user of the second electronic device in the three-dimensional environment relative to the viewpoint of the first electronic device in accordance with the first input.
13. The method of any of embodiments 11-12, further comprising:
   while displaying the first object of the first type and while the respective mode is not active, receiving, via the one or more input devices, a second input corresponding to a request to move the first object within the three-dimensional environment; and
   in response to receiving the second input:
      moving the first object of the first type in the three-dimensional environment relative to the viewpoint of the first electronic device in accordance with the first input, without updating presentation of the visual representation of the user of the second electronic device.
14. A first electronic device comprising:
   one or more processors;
   memory; and
   one or more programs stored in the memory and configured to be executed by the one or more processors, the one or more programs including instructions for performing a method of any of embodiments 1-13.
15. A non-transitory computer readable storage medium storing one or more programs, the one or more programs comprising instructions, which when executed by one or more processors of a first electronic device, cause the first electronic device to perform a method of any of embodiments 1-13.

## Claims

1. A method comprising:
at a first electronic device in communication with one or more displays, one or more input devices, and a second electronic device, wherein the first electronic device is collocated with the second electronic device in a physical envirwonment:
while the first electronic device and the second electronic device are in a communication session with a third electronic device, wherein the third electronic device is non-collocated with the first electronic device and the second electronic device in the physical environment, presenting, via the one or more displays, a visual representation of a third user of the third electronic device and a first object corresponding to shared content in a three-dimensional environment, wherein the visual representation of the third user and the first object have a first spatial arrangement in the three-dimensional environment relative to a first viewpoint of a first user of the first electronic device;
while presenting the visual representation of the third user and the first object having the first spatial arrangement in the three-dimensional environment, detecting, via the one or more input devices, movement of the first user of the first electronic device in the physical environment;
in response to detecting the movement of the first user of the first electronic device, updating a viewpoint of the first user of the first electronic device from the first viewpoint to a second viewpoint, different from the first viewpoint, in the three-dimensional environment in accordance with the movement;
while the first user of the first electronic device has the second viewpoint in the three-dimensional environment, detecting, via the one or more input devices, a first input corresponding to a request to update a spatial arrangement of virtual content in the three-dimensional environment; and
in response to detecting the first input:
updating presentation, via the one or more displays, of the first object and the visual representation of the third user to be in a field of view of the first user of the first electronic device in the three-dimensional environment, including maintaining a spatial arrangement of the first object and the visual representation of the third user as the first spatial arrangement relative to the second viewpoint of the first user.

2. The method of claim 1, wherein the first electronic device being collocated with the second electronic device in the physical environment is in accordance with a determination that the second electronic device is within a threshold distance of the first electronic device in the physical environment.

3. The method of any of claims 1-2, wherein the first electronic device being non-collocated with the third electronic device in the physical environment is in accordance with a determination that the third electronic device is more than a threshold distance of the first electronic device in the physical environment.

4. The method of any of claims 1-3, wherein:
the three-dimensional environment further includes a second object corresponding to private content;
the first object, the visual representation of the third user of the third electronic device, and the second object have a second spatial arrangement in the three-dimensional environment relative to the first viewpoint of the first user of the first electronic device; and
updating presentation of the first object and the visual representation of the third user to be in the field of view of the first user of the first electronic device in the three-dimensional environment further includes updating presentation, via the one or more displays, of the second object to be in the field of view of the first user, including maintaining the second spatial arrangement among the first object, the second object, and the visual representation of the third user relative to the second viewpoint of the first user.

5. The method of any of claims 1-4, wherein:
the presentation of the first object in the three-dimensional environment is associated with a spatial template including a plurality of seats that is arranged relative to the first object in the three-dimensional environment; and
a location of the visual representation of the third user of the third electronic device in the three-dimensional environment corresponds to a first seat of the plurality of seats relative to the first object.

6. The method of claim 5, wherein:
prior to detecting the first input, the first user of the first electronic device is associated with a second seat, different from the first seat, of the plurality of seats relative to the first object; and
in response to detecting the first input, the first user of the first electronic device remains associated with the second seat of the plurality of seats.

7. The method of claim 5, wherein:
prior to detecting the first input, the first user of the first electronic device is associated with a second seat, different from the first seat, of the plurality of seats relative to the first object; and
in response to detecting the first input:
in accordance with a determination that the second viewpoint of the first user is within a threshold distance of a third seat of the plurality of seats, without being within the threshold distance of the second seat of the plurality of seats, the first user of the first electronic device becomes associated with the third seat.

8. The method of any of claims 1-7, wherein:
prior to detecting the first input, a second user of the second electronic device is located at a first location in the physical environment; and
in response to detecting the first input, the second user of the second electronic device remains located at the first location in the physical environment.

9. The method of any of claims 1-8, wherein, in response to detecting the first input, transmitting, to the second electronic device and the third electronic device, input data corresponding to the updating presentation of the first object and the visual representation of the third user in the three-dimensional environment.

10. The method of claim 9, wherein:
the third electronic device is presenting a second three-dimensional environment that includes a visual representation of the first user of the first electronic device, a visual representation of a second user of the second electronic device, and the first object; and
in response to receiving the input data from the first electronic device, the third electronic device moves the visual representation of the first user in the second three-dimensional environment based on the input data, without moving the visual representation of the second user and the first object.

11. The method of any of claims 9-10, wherein:
the second electronic device is presenting a second three-dimensional environment that includes the visual representation of the third user of the third electronic device and the first object; and
in response to receiving the input data from the first electronic device, the second electronic device moves the first object in the second three-dimensional environment based on the input data, without moving the visual representation of the third user.

12. The method of any of claims 1-11, wherein the visual representation of the third user corresponds to a virtual avatar of the third user.

13. The method of any of claims 1-12, wherein the first electronic device, the second electronic device, and the third electronic device each includes a head-mounted display.

14. A first electronic device comprising:
one or more processors;
memory; and
one or more programs stored in the memory and configured to be executed by the one or more processors, the one or more programs including instructions for performing a method of any of claims 1-13.

15. A non-transitory computer readable storage medium storing one or more programs, the one or more programs comprising instructions, which when executed by one or more processors of a first electronic device, cause the first electronic device to perform a method of any of claims 1-13.
